(19) Europäisches Patentamt
European Patent Office
Office européen des brevets

(11) EP 2 006 326 A2

(12) EUROPEAN PATENT APPLICATION
published in accordance with Art. 153(4) EPC

(43) Date of publication:
**24.12.2008 Bulletin 2008/52**

(21) Application number: **07740011.7**

(22) Date of filing: **28.03.2007**

(51) Int Cl.:
***C08L 23/00*** *(2006.01)* ***C08L 53/00*** *(2006.01)*

(86) International application number:
**PCT/JP2007/056573**

(87) International publication number:
**WO 2007/114134 (11.10.2007 Gazette 2007/41)**

(84) Designated Contracting States:
**AT BE BG CH CY CZ DE DK EE ES FI FR GB GR HU IE IS IT LI LT LU LV MC MT NL PL PT RO SE SI SK TR**

(30) Priority: **29.03.2006 JP 2006092164**
**26.05.2006 JP 2006146751**
**31.05.2006 JP 2006151400**
**31.05.2006 JP 2006151401**
**19.07.2006 JP 2006197479**

(71) Applicant: **Mitsui Chemicals, Inc.**
**Tokyo 105-7117 (JP)**

(72) Inventors:
- **ONOGI, Takayuki**
**Sodegaura-shi, Chiba 299-0265 (JP)**
- **KANEKO, Hideyuki**
**Sodegaura-shi, Chiba 299-0265 (JP)**
- **MATSUGI, Tomoaki**
**Sodegaura-shi, Chiba 299-0265 (JP)**
- **SUZUKI, Koutarou**
**Sodegaura-shi, Chiba 299-0265 (JP)**
- **KAWAHARA, Nobuo**
**Sodegaura-shi, Chiba 299-0265 (JP)**
- **OTA, Seiji**
**Ichihara-shi, Chiba 299-0108 (JP)**
- **YASUI, Shigeyuki**
**Ichihara-shi, Chiba 299-0108 (JP)**

(74) Representative: **HOFFMANN EITLE**
**Patent- und Rechtsanwälte**
**Arabellastrasse 4**
**81925 München (DE)**

# (54) RESIN COMPOSITION CONTAINING OLEFIN BLOCK POLYMER AND USE OF THE SAME

(57) The present invention is to provide a resin composition excellent in mechanical properties and solvent resistance, and the resin composition (C) of the present invention comprises an polyolefin (A1) and an olefinic block polymer (A2), wherein the olefinic block polymer (A2) comprises, as a constitutional unit, a block (a) which is a polyolefin component and a block (b) which is a polymer unit composed of a vinyl monomer having a solubility parameter of from 18 to 25 J/m and the block (a) and the block (b) are bonded each other by a covalent bond. Moreover, another invention of the present invention is to provide a laminated structure having a laminated configuration in which a layer comprising an olefinic polymer layer and a layer comprising other synthetic resins, a metal and the like are strongly bonded through an adhesive layer, wherein the adhesive layer comprises the resin composition (C).

EP 2 006 326 A2

## Description

### TECHNICAL FIELD

The present invention relates to a resin composition comprising a polyolefin and a polar resin and, more specifically to a resin composition that is excellent in mechanical properties such as impact resistance, tensile strength and the like, and in solvent resistance.

In addition, the present invention relates to an adhesive, a film or sheet, a material for a building and civil engineering, an interior and exterior material in automobiles or a gasoline tank, electric and electronic components, an aqueous emulsion, a solvent-dispersant, a medical and hygienic material, daily sundry goods, which are composed of the resin composition, and a laminated structure comprising at least one layer composed of the resin composition.

### BACKGROUND ART

Since polyolefin is excellent in processability, chemical resistance, electric properties, mechanical properties and the like, it is fabricated into extrusion-molded articles, injection-molded articles, blow-molded articles, films, sheets and the like, which are used for various applications.

However, since polyolefin is a so-called nonpolar resin having no polar group in the molecule, it has poor affinity with various polar materials including metals and is difficult to bond with polar materials and blend with polar materials.

As a method for improving the physical properties of polyolefin, there may be mentioned a method of adjusting the type, the molar ratio and the like of a monomer, a method of modifying the sequence of a monomer in a random, block copolymer or the like, a method of graft copolymerizing a polyolefin with a polar monomer and the like, and various methods have been conventionally tried.

When a polar monomer is graft polymerized to a polyolefin, there has been typically carried out a method in which the polyolefin is reacted with a radical polymerizable monomer in the presence of a radical initiator. However, the graft copolymer obtained by this method may frequently contain a homopolymer of the radical polymerizable monomer and an unreacted polyolefin and is nonuniform in the graft structure. In addition, since the graft polymerization involves a crosslinking reaction and a decomposition reaction of a polymer chain, the physical properties of the polyolefin often vary substantially.

As for the method of synthesizing a block polymer of a polyolefin and a polar polymer without involving the crosslinking and decomposition reactions as mentioned above, International Publication WO 98/02472, pamphlet discloses a method in which a boron compound is added to a polyolefin having an unsaturated bond at the terminal position and then the resultant polyolefin is oxidized by oxygen to form active species for radical polymerization, followed by radical polymerization.

As a result of a study based on such conventional technology, the present inventors have found that a specific block polymer comprising a polyolefin segment and a polar resin segment may solve the problems as mentioned above.

In addition, a polyolefin may be used by laminating with other resins. Since a polyester film is excellent in mechanical properties, chemical resistance and the like, it is used for various applications in the form of a laminate with polyethylene, polypropylene and other olefinic resin films by utilizing these properties. Since a polycarbonate film is excellent in transparency, impact resistance and the like and a polymethylmethacrylate film is excellent in transparency, weather resistance, printability and the like, an attempt has been made to laminate these films with various plastic films by utilizing these properties. Since a saponified ethylene-vinyl acetate copolymer film, a polyvinylidene chloride film and a polyamide film are excellent in gas barrier properties, they are widely used in the field of packaging materials and the other fields by laminating with plastic films excellent in heat sealing properties and other properties such as polyethylene, polypropylene and the like by utilizing the high gas barrier properties. In addition, since a polyvinyl chloride film is excellent in transparency, chemical resistance, printability, mechanical properties and the like, it provides useful films in many industrial fields by laminating with general purpose plastic films.

As an adhesive between a substrate such as an olefinic resin and the like and a polar group-containing resin such as a polycarbonate resin, an acrylic resin, a polyester resin and the like or a metal such as aluminum and the like, there has been conventionally known an adhesive comprising a modified block copolymer in which maleic anhydride is graft polymerized onto a hydrogenated styrene-conjugated diene-styrene-based block copolymer, or the modified copolymer and a solvent (Patent Documents 2 and 3). In addition, there has been disclosed a method of using a mixture of a thermoplastic polyurethane and a hydrogenated aromatic vinyl compound-conjugated diene-based block copolymer as an adhesive (Patent Document 4). However, since these adhesives have insufficient adhesion strength, there has been demanded an adhesive which more strongly bonds a substrate of a polar group-containing resin and a substrate such as an olefinic resin and the like.

In general, the production of the laminated film as described above is roughly divided into a method of adhering and laminating between each of the plastic films using a solvent-type adhesive and a method of laminating using a hot-melt adhesive. The solvent-type adhesive has been generally used in the case of laminating a polyester film, a polycarbonate film, an acrylic polymer film, a saponified ethylene-vinyl acetate copolymer film, a polyvinylidene chloride film, a polyvinyl chloride film and the like with other polymer films. However, since it has a problem with respect to natural environmental pollution, deterioration of working environment and safety caused by using an organic solvent, there has been demanded a lamination technique without using a solvent-type adhesive. In addition, since, among the polar group-containing resin substrates, a polycarbonate film, an acrylic polymer film and the like are inferior in solvent resistance, solvents which may be selected have been limited. In light of the above conventional techniques, the present inventors have earnestly studied to develop a laminated structure having at least part of a laminated structure in which a layer comprising an olefinic polymer as a main constituent and a layer composed of at least one kind selected from a polar vinyl-based plastic, an engineering plastic, a bio-based polymer, a thermoplastic elastomer, a natural or synthetic fiber and a metal are strongly bonded through a hot-melt-type adhesive layer comprising a specific block polymer, and have accomplished the present invention.

Patent Document 1: International Publication WO 98/02472 Pamphlet
Patent Document 2: Japanese Patent Publication No. H04-45532
Patent Document 3: Japanese Patent Publication No. S63-65116
Patent Document 4: Japanese Patent Laid-Open Publication No. H10-202799

## DISCLOSURE OF THE INVENTION

## PROBLEMS TO BE SOLVED BY THE INVENTION

An object of the present invention is to provide a resin composition which is excellent in mechanical properties such as impact resistance, tensile strength and the like and in solvent resistance.

In addition, another object of the present invention is to provide a laminated structure having at least part of a laminated structure in which a layer comprising an olefinic polymer as a main constituent and a layer composed of at least one kind selected from a polar vinyl-based plastic, an engineering plastic, a bio-based polymer, a thermoplastic elastomer, a natural or synthetic fiber and a metal are strongly bonded through a hot-melt-type adhesive layer comprising a specific olefinic block polymer.

## MEANS TO SOLVE THE PROBLEMS

A resin composition(C) relating to the present invention is a resin composition comprising a polyolefin (A1) and an olefinic block polymer (A2), wherein the olefinic block polymer (A2) contains, as a constitutional unit, a block (a) which is a polyolefin component and a block (b) which is a polymer unit composed of a vinyl monomer having a solubility parameter of 18 to 25 J/m, and the block (a) and the block (b) are bonded each other by a covalent bond.

The resin composition (C) relating to the present invention preferably comprises 1 to 98.9% by weight of the polyolefin (A1), 0.1 to 50% by weight of the olefinic block polymer (A2), and 1 to 98.9% by weight of one or more kinds of resins (B) selected from a polycarbonate resin (b1), an acrylic resin (b2), a vinyl polymer (b3) and a polyphenylene oxide (b4) (provided that the total amount of (A1), (A2) and (B) is 100% by weight).

In the present invention, the content of the block (b) constituting the olefinic block polymer (A2) is preferably 0.1 to 70% by weight in the (A2).

In addition, in the present invention, the block (b) constituting the olefinic block polymer (A2) preferably comprises a chain comprising one or more kinds of constitutional units derived from a vinyl monomer selected from (meth) acrylic acid and its derivative, (meth) acrylonitrile, styrene and its derivative, (meth)acrylamide and its derivative, maleic acid and its derivative, maleimide and its derivative and vinyl esters, and the block (b) constituting the olefinic block polymer (A2) preferably is a unit of a polymer obtained by radical (co) polymerizing one or more kinds of vinyl monomers selected from styrene, acrylonitrile, 2-hydroxyethyl methacrylate, glycidyl methacrylate and methyl methacrylate.

Further, in the present invention, the block (b) constituting the olefinic block polymer (A2) preferably has a number average molecular weight in a range of 2,000 to 200,000.

Furthermore, in the present invention, the block (a) constituting the olefinic block polymer (A2) preferably is a crystalline polyolefin unit having a melting point of 70˚C or higher, the content of a component derived from the block (b) in a chloroform-insoluble component at room temperature of the resin composition is preferably 0.1 to 70% by weight, and 0.5 to 5 units of the block (b) are preferably bonded per one molecular chain of the block (a) in the olefinic block polymer (A2).

The laminated structure relating to the present invention is characterized by having at least in part thereof a structure in which a layer (L1) comprising an olefinic polymer as a main constituent, a layer (L2) comprising the resin composition (C) and a layer (L3) composed of at least one kind selected from a polar vinyl-based plastic, an aromatic

vinyl-based polymer, polyester, polyamide, polycarbonate, an engineering plastic, a bio-based polymer, a thermoplastic elastomer, a natural or synthetic fiber and a metal are laminated in the order of layer (L1)/layer (L2)/layer (L3).

In the present invention, the resin composition (C) is preferably constituted by the polyolefin (A1) and the olefinic block polymer (A2).

In addition, in the present invention, the block (b) constituting the olefinic block polymer (A2) constituting the resin composition (C) preferably has a glass transition temperature (Tg) of 25°C or lower, as measured by differential scanning calorimetry (DSC), and the block (a) constituting the olefinic block polymer (A2) constituting the resin composition (C) is a crystalline polyolefin unit having an endothermic peak due to the melting point (Tm) measured by DSC of 50°C or higher.

## EFFECT OF THE INVENTION

The resin composition relating to the present invention is excellent in mechanical properties such as impact resistance, tensile strength, flexural strength and the like and in solvent resistance.

The laminated structure relating to the present invention is excellent in adhesion strength between a layer comprising an olefinic polymer as a main constituent and a layer composed of at least one kind selected from a polar vinyl-based plastic, polyester, polyamide, polycarbonate, an engineering plastic, a bio-based polymer, a thermoplastic elastomer, a natural or synthetic fiber and a metal.

## BEST MODE FOR CARRYING OUT THE INVENTION

Hereinafter, a resin composition comprising an olefinic block polymer and a laminated structure relating to the present invention will be specifically explained.

Firstly, a resin composition comprising an olefinic block polymer relating to the present invention will be specifically explained.

The resin composition(C) relating to the present invention is a resin composition comprising an polyolefin (A1); and an olefinic block polymer (A2) comprising a block (a) that is a polyolefin component and a block (b) that is a polymer unit composed of a vinyl monomer having a solubility parameter of 18 to 25 J/m as a constitutional unit, and the block (a) and the block (b) are bonded each other by a covalent bond.

The resin composition(C) relating to the present invention preferably comprises the polyolefin (A1), the olefinic block polymer (A2) and one or more kinds of resins (B) selected from a polycarbonate resin (b1), an acrylic resin (b2), a vinyl polymer (b3) and a polyphenylene oxide (b4).

Hereinafter, these components will be sequentially explained.

[Polyolefin (A1)]

The polyolefin (A1) used in the present invention is an olefin (co)polymer of at least one kind of olefin selected from α-olefins having 2 to 20 carbon atoms.

The α-olefins having 2 to 20 carbon atoms include, for example, a linear or branched α-olefin such as ethylene, propylene, 1-butene, 2-butene, 1-pentene, 3-methyl-1-butene, 1-hexene, 4-methyl-1-pentene, 3-methyl-1-pentene, 1-octene, 1-decene, 1-dodecene, 1-tetradecene, 1-hexadecene, 1-octadecene, 1-eicosene and the like; and a cyclic olefin such as cyclopentene, cycloheptene, norbornene, 5-methyl-2-norbornene, tetracyclododecene, 2-methyl-1,4,5,8-dimethano-1,2,3,4,4a,5,8,8a-octahydro naphthalene and the like.

In addition, the polyolefin (A1) may be copolymerized with a small amount of a polar monomer such as, for example, an α,β-unsaturated carboxylic acid such as acrylic acid, methacrylic acid, fumaric acid, maleic anhydride, itaconic acid, itaconic anhydride, bicyclo[2.2.1]-5-heptene-2,3-dicarboxylic anhydride and the like and a metal salt of α,β-unsaturated carboxylic acid such as a sodium salt, a potassium salt, a lithium salt, a zinc salt, a magnesium salt, a calcium salt or the like thereof; an α,β-unsaturated carboxylic acid ester such as methyl acrylate, ethyl acrylate, n-propyl acrylate, isopropyl acrylate, n-butyl acrylate, isobutyl acrylate, tert-butyl acrylate, 2-ethylhexyl acrylate, methyl methacrylate, ethyl methacrylate, n-propyl methacrylate, isopropyl methacrylate, n-butyl methacrylate, isobutyl methacrylate and the like; vinyl esters such as vinyl acetate, vinyl propionate, vinyl caproate, vinyl caprate, vinyl laurate, vinyl stearate, vinyl trifluoroacetate and the like; an unsaturated glycidyl ester such as glycidyl acrylate, glycidyl methacrylate, itaconic acid monoglycidyl ester and the like; and others.

Further, the polyolefin (A1) may be copolymerized with a small amount of vinylcyclohexane, a diene or polyene or the like. As the diene or polyene, there is used a cyclic or acyclic compound having 4 to 30 carbon atoms, preferably 4 to 20 carbon atoms and having two or more double bonds. Specifically, there may be mentioned butadiene, isoprene, 4-methyl-1,3-pentadiene, 1,3-pentadiene, 1,4-pentadiene, 1,5-hexadiene, 1,4-hexadiene, 1,3-hexadiene, 1,3-octadiene, 1,4-octadiene, 1,5-octadiene, 1,6-octadiene, 1,7-octadiene, ethylidene norbornene, vinyl norbornene, dicyclopentadiene; 7-methyl-1,6-octadiene, 4-ethylidene-8-methyl-1,7-nonadiene, 5,9-dimethyl-1,4,8-decatriene; further an aromatic vinyl compound, for example, a mono- or poly-alkyl styrene such as styrene, o-methylstyrene, m-methylstyrene, p-methylstyrene, o,p-dimethylstyrene, o-ethylstyrene, m-ethylstyrene, p-ethylstyrene and the like; styrene derivative containing a functional group such as methoxystyrene, ethoxystyrene, vinylbenzoic acid, methyl vinylbenzoate, vinylbenzylacetate, hydroxystyrene, o-chlorostyrene, p-chlorostyrene, divinylbenzene and the like; 3-phenylpropylene; 4-phenylpropylene; α-methylstyrene and the like.

The polyolefin (A1) has a melt flow rate (MFR: ASTM D1238: 230˚C, load: 2.16 kg) of typically 0.01 to 200 g/10 min and preferably 0.1 to 100 g/10 min.

Such polyolefin (A1) may be produced by a conventionally known method.

In the present invention, when the polyolefin (A1) has stereoregularity, it may be either a syndiotactic polyolefin or an isotactic polyolefin.

In the present invention, polyethylene and polypropylene are preferably used as the polyolefin (A1).

A preferred polyethylene includes an ethylene homopolymer, an ethylene-α-olefin copolymer and the like. The ethylene-α-olefin copolymer is, for example, a random copolymer of ethylene and an α-olefin having 4 to 12 carbon atoms.

The α-olefin having 4 to 12 carbon atoms includes, for example, 1-butene, 1-pentene, 1-hexene, 4-methyl-1-pentene, 1-octene, 1-decene, 1-dodecene and the like.

In such ethylene-α-olefin copolymer, the constitutional unit derived from ethylene is present in a ratio of 65 to 99% by weight and preferably 75 to 96% by weight, and the constitutional unit derived from the α-olefin having 4 to 12 carbon atoms is present in a ratio of 1 to 35% by weight and preferably 4 to 25% by weight.

The ethylene-α-olefin copolymer has a density of 0.880 to 0.970 g/cm$^3$ and preferably 0.890 to 0.955 g/cm$^3$.

In addition, the ethylene-α-olefin copolymer has a melt flow rate (MFR: ASTM D1238: 190˚C, load: 2.16 kg) of 0.01 to 200 g/10 min and preferably 0.05 to 50 g/10 min.

A preferred polypropylene includes, for example, a propylene homopolymer, a propylene-α-olefin copolymer, a copolymer of propylene, an α-olefin and a non-conjugated diene represented by the following formula (1), and further a hydrogenated product thereof and the like.

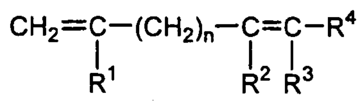

...(1)

[In the formula (1), R$^1$, R$^2$, R$^3$ and R$^4$ are each independently a hydrogen atom or an alkyl group having 1 to 6 carbon atoms, and n is an integer of 1 to 20.]

The alkyl group having 1 to 6 carbon atoms of R$^1$, R$^2$, R$^3$ and R$^4$ may be linear or branched. Specifically there may be mentioned methyl group, ethyl group, n-propyl group, isopropyl group, n-butyl group, isobutyl group, s-butyl group, t-butyl group, n-pentyl group, isopentyl group, t-pentyl group, neopentyl group, n-hexyl group, isohexyl group and the like.

When the polypropylene is a copolymer, it may be either a random copolymer or a block copolymer. As the α-olefin which is copolymerized with propylene, there may be mentioned ethylene, 1-butene, 4-methyl-1-pentene, 1-hexene, 1-octene and the like. These α-olefins may be used singly or in a combination of two or more kinds.

In addition, in the present invention, as the polypropylene, one kind of polymer may be used alone or two or more kinds of polymers may be used in combination.

A method for producing the polypropylene is not particularly limited and the polypropylene may be produced by a well-known method using a well-known catalyst such as a Ziegler-Natta catalyst, a metallocene catalyst and the like. In addition, a crystalline polymer may be preferably used, and in the case of a copolymer, it may be a random copolymer or a block copolymer. Further, the stereoregularity and molecular weight are not particularly limited as long as it satisfies moldability and has strength durable for the use as a molded article. A commercially available resin may also be used as is.

In addition, the polypropylene has a melting point (Tm) of typically 150 to 170˚C and preferably 155 to 167˚C. The polypropylene has a melt flow rate (MFR: ASTM D1238: 230˚C, load: 2.16 kg) of typically 0.3 to 200 g/10 min, preferably 0.4 to 100 g/10 min and more preferably 0.5 to 70 g/10 min.

As the polypropylene, there may be preferably used a propylene homopolymer and a propylene-ethylene block copolymer among such polypropylene resins from the viewpoint of the injection moldability and heat-resistant rigidity of the resin. As the polypropylene, there may be preferably used a propylenic polymer (A1) comprising a constitutional unit derived from propylene at a ratio of 50 mol % or more and preferably 80 mol % or more.

In addition, in the polypropylene, the propylene homopolymer portion has an isotactic pentad fraction (mmmm

fraction), as measured by $^{13}C$-NMR, of preferably 96.0% or more, more preferably 96.5% or more and most preferably 97.0% or more. If the propylene homopolymer portion in the polypropylene has an isotactic pentad fraction (mmmm fraction) of 96.0% or less, the flexural modulus and/or heat resistance may be decreased.

Here, the isotactic pentad fraction (mmmm fraction) is an isotactic fraction in terms of the pentad unit in the polypropylene molecular chain, measured by a method described in Macromolecules, Vol. 6, 925 (1973) by A. Zambelli et al., that is, by using the $^{13}C$-NMR method (nuclear magnetic resonance method). It is a fraction of the propylene monomer unit, in which consecutive 5 propylene monomer units are bonded to each other in an isotactic manner.

The assignment of the peak in the $^{13}C$-NMR spectrum is performed based on the description of Macromolecules, Vol. 8, 687 (1975). $^{13}C$-NMR may improve the signal detection limit to 0.001 by accumulated measurements of 20,000 times at 125 MHz using a Fourier Transform NMR spectrometer [500 MHz (at measurement of the proton)] and be measured.

In the present invention, the polyolefin (A1) may be used in a combination of two or more kinds. As the combination in this case, there may be mentioned, for example, a combination of a crystalline polyolefin with a non-crystalline or low-crystalline polyolefin.

[Olefinic Block Polymer (A2)]

The olefinic block polymer (A2) used in the present invention has a block (a) which is a polyolefin component and a block (b) which is a polymer unit composed of a vinyl monomer having a solubility parameter in a range of 18 to 25 J/m, and the block (a) and the block (b) have a structure in which they are bonded each other by a covalent bond. In the olefinic block polymer (A2), 0.5 to 5 units of the block (b) are preferably bonded per one molecular chain of the block (a). In addition, the olefinic block polymer (A2) may have plural blocks (a) and blocks (b) having different compositions and molecular weights.

The olefinic block polymer (A2) comprises 20 to 99.9 parts by weight, preferably 30 to 90 parts by weight of the block (a) and 0.1 to 70 parts by weight, preferably 10 to 70 parts by weight of the block (b). If the content of the block (a) and the block (b) is within the above range, the performance of the olefinic block polymer (A2) as a compatibilizer is improved and the dispersed particle size of the island phase is minimized, and thus the mechanical strength is improved.

The olefinic block polymer (A2) preferably has a melt flow rate (MFR: 230˚C, load: 2.16 kg) in a range of 0.01 to 50 g/10 min.

Here, the block (a) may be used as a segment derived from a halogenated polyolefin (a') obtained, for example, by halogenating a polyolefin selected from the group consisting of the following (a1) to (a5), and the block (b) is a homopolymer or copolymer of one or more kinds of monomers selected from radical polymerizable monomers.

<Block (a)>

As the block (a) constituting the olefinic block polymer (A2), there may be used one which has a similar structure as the polyolefin (A1). It is preferable to be a crystalline polyolefin unit having a melting point of preferably 70˚C or higher and especially preferably 80 to 180˚C. If the melting point is within the above range, a resin composition having high heat resistance may be obtained.

The melting point (Tm) is measured, for example, by the following method. Approximately 5 mg of sample is placed in a dedicated aluminum pan and the temperature is raised from 30˚C to 200˚C at a rate of 320˚C/min using DSC Pyris1 or DSC7 manufactured by PerkinElmer, Inc. The temperature is maintained at 200˚C for 5 min and then is lowered from 200˚C to 30˚C at a rate of 10˚C/min. After the temperature is maintained at 30˚C for 5 min, the melting point is determined by the endothermic curve obtained when the temperature is raised at a rate of 10˚C/min.

In the olefinic block polymer (A2), the block (a) has a number average molecular weight in a range of 5,000 to 1,000,000 and preferably 10,000 to 500,000 and the block (b) has a number average molecular weight in a range of 2,000 to 200,000 and preferably 5,000 to 150,000. If the block (a) has a molecular weight higher than 1,000,000, the olefinic block polymer (A2) tends to be poorly distributed on the interface between the polyolefin (A1) and the resin (B), and thus the interface is likely to be peeled off and the mechanical strength is decreased. If the block (a) has a molecular weight less than 5,000, the entanglement of the molecular chains between the polyolefin (A1) or the resin (B) and the olefinic block polymer (A2) becomes insufficient, and the mechanical strength is decreased.

The block (a) constituting the olefinic block polymer (A2) may be a segment derived from a halogenated polyolefin obtained by halogenating a polyolefin, a segment derived from a polar group-containing olefin copolymer having a radical polymerization initiator, or a segment derived from a polyolefin in which a Group 13 element of the periodic table is bonded to the terminal position. Hereinafter, there will be explained in detail a case where the block (a) constituting the olefinic block polymer (A2) is a segment derived from a halogenated polyolefin.

In addition, in a case where the block (a) constituting the olefinic block polymer (A2) is a segment derived from a polar group-containing olefin copolymer having a radical polymerization initiating group, the details are disclosed in

Japanese Patent Laid-Open Publication No. 2002-131620 filed by the present applicant and the technical content is introduced in the section of "a laminated structure" which is described in the latter part of this specification. In addition, there has been disclosed a segment derived from a polyolefin in which a Group 13 element of the periodic table is bonded to the terminal position in the WO 01/053369 pamphlet filed by the present applicant.

The block (a) constituting the olefinic block polymer (A2) may be a segment derived from a halogenated polyolefin (a') obtained by halogenating a polyolefin (a'') selected from the group consisting of the following (a1) to (a5).

Here, the polyolefin (a") has a number average molecular weight of preferably from 5,000 to 1,000,000 and more preferably from 10,000 to 500,000.

In addition, the polyolefin (a'') has a molecular weight distribution (Mw/Mn) of 1.5 or more.

Here, the halogenated polyolefin (a') obtained by halogenating the polyolefin (a'') will be explained.

(a1) is a homopolymer or a copolymer (hereinafter, also referred to as a "(co)polymer (a1)") of an α-olefin represented by $CH_2=CH-C_xH_{2x+1}$ (x is 0 or a positive integer),

(a2) is a copolymer (hereinafter, also referred to as a "copolymer (a2)") of an α-olefin represented by $CH_2=CH-C_xH_{2x+1}$ (x is 0 or a positive integer) and a monoolefin compound having an aromatic ring,

(a3) is a copolymer (hereinafter, also referred to as a "copolymer (a3)") of an α-olefin represented by $CH_2=CH-C_xH_{2x+1}$ (x is 0 or a positive integer) and a cyclic monoolefin compound represented by the following general formula (2),

(a4) is a random copolymer (hereinafter, also referred to as a "copolymer (a4) ") of an α-olefin represented by $CH_2=CH-C_xH_{2x+1}$ (x is 0 or a positive integer) and an unsaturated carboxylic acid or its derivative, and

(a5) is a polyolefin (hereinafter, also referred to as a "modified polyolefin (a5) ") in which a polymer represented by the above-mentioned (a1) to (a4) is modified with an unsaturated carboxylic acid or its derivative.

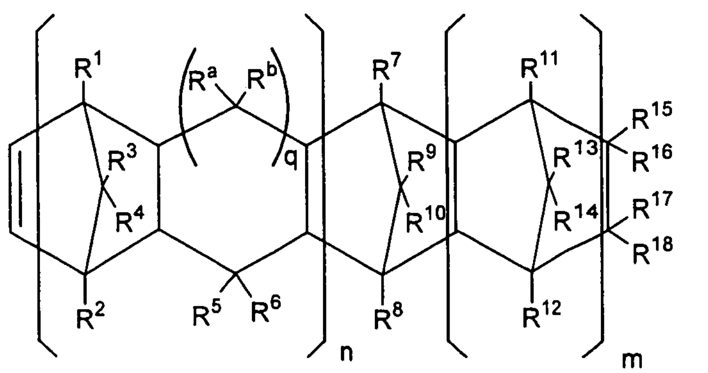

... (2)

In the above general formula (2), n is 0 or 1, m is 0 or a positive integer and q is 0 or 1. When q is 1, $R^a$ and $R^b$ each independently represent the following atoms or a hydrocarbon group, and when q is 0, the bonding hands are bonded to each other to form a five-membered ring.

In the above general formula (2), $R^1$ to $R^{18}$ as well as $R^a$ and $R^b$ each independently represent an atom or a group selected from the group consisting of a hydrogen atom, a halogen atom and a hydrocarbon group.

Here, the halogen atom is a fluorine atom, a chloride atom, a bromine atom or an iodine atom. In addition, the hydrocarbon groups each independently include an alkyl group having 1 to 20 carbon atoms, a halogenated alkyl group having 1 to 20 carbon atoms or a cycloalkyl group having 3 to 15 carbon atoms. More specifically, the alkyl group includes a methyl group, an ethyl group, a propyl group, an amyl group, a hexyl group, an octyl group, a decyl group, a dodecyl group, an octadecyl group and the like. The halogenated alkyl includes a group in which at least part of the hydrogen atom constituting an alkyl group as mentioned above is substituted with a fluorine atom, a chloride atom, a bromine atom or an iodine atom. The cycloalkyl group includes a cyclohexyl group and the like.

These groups may contain a lower alkyl group. In addition, in the above general formula (2), $R^{15}$ and $R^{16}$, $R^{17}$ and $R^{18}$, $R^{15}$ and $R^{17}$, $R^{16}$ and $R^{18}$, $R^{15}$ and $R^{18}$ or $R^{16}$ and $R^{17}$ may be bonded, respectively (in combination with each other) to form a single ring or a multiple ring. The single ring or multiple ring formed herein includes specifically the following rings.

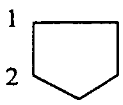
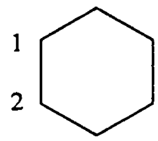
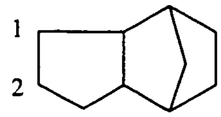

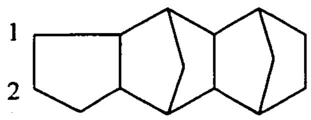
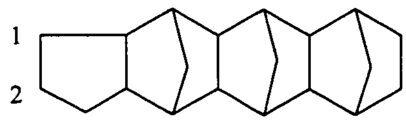

In addition, in the above exemplifications, the carbon atom to which the numbers 1 and 2 are assigned represents a carbon atom to which $R^{15}$ ($R^{16}$) or $R^{17}$ ($R^{18}$) is bonded, respectively in the above general formula (2).

The cyclic olefin represented by the above general formula (2) specifically includes bicyclo[2.2.1]hept-2-ene derivative, tricyclo[4.3.0.1$^{2,5}$]-3-decene derivative, tricyclo[4.3.0.1$^{2,5}$]-3-undecene derivative, tetracyclo[4.4.0.1$^{2,5}$.1$^{7,10}$]-3-dodecene derivative, pentacyclo[7.4.0.1 $^{2,5}$ .1 $^{9,12}$ .0 $^{8,13}$ ]-3-pentadecane derivative, pentacyclo[6.5.1.1 $^{3,6}$.0 $^{2,7}$ . 0 $^{9,13}$ ]-4-pentadecene derivative, pentacyclo[8.4.0.1$^{2,3}$.1$^{9,12}$.0$^{8,13}$]-3-hexadecene derivative, pentacyclo[6.6.1.1$^{3,6}$.0$^{2,7}$. 0$^{9,14}$]-4-hexadecene derivative, pentacyclopentadecadiene derivative, hexacyclo[6.6.1.1$^{3,6}$.1$^{10,13}$.0$^{2,7}$.0$^{9,14}$]-4-heptadecene derivative, heptacyclo[8.7.0.1$^{3,6}$.1$^{10,17}$.1$^{12,15}$.0$^{2,7}$.0$^{11,16}$]-4-eicosene derivative, heptacyclo-5-eicosene derivative, heptacyclo[8.8.0.1 $^{4,7}$ .1 $^{11,18}$ .1$^{13,16}$ .0$^{3,8}$ .0 $^{12,17}$ ]-5-heneicosene derivative, octacyclo[8.8.0.1$^{2,9}$.1$^{4,7}$.1$^{11,18}$. 1$^{13,16}$.0$^{3,8}$.0$^{12,17}$]-5-docosene derivative, nonacyclo[10.9.1.1$^{4,7}$.1 $^{13,20}$.1$^{15,18}$.0$^{3,8}$.0$^{2,10}$.0$^{12,21}$.0$^{14,19}$]-5-pentacosene derivative, nonacyclo[10.10.1.1$^{5,8}$.1$^{14,21}$.1$^{16,19}$.0$^{2,11}$.0$^{4,9}$.0$^{13,22}$.0$^{15,20}$]-5-hexacosene derivative and the like.

The cyclic monoolefin compounds represented by the above general formula (2) may be produced by Diels-Alder reaction of cyclopentadiene and olefins having a corresponding structure. These cycloolefins may be used singly or in a combination of two or more kinds.

<<(Co)polymer (a1)>>

In the (co)polymer (a1), as the α-olefin represented by $CH_2=CH-C_xH_{2x+1}$ (x is 0 or a positive integer), there may be specifically mentioned a linear or branched α-olefin having 2 to 20 carbon atoms such as ethylene, propylene, 1-butene, 1-pentene, 3-methyl-1-butene, 1-hexene, 4-methyl-1-pentene, 3-methyl-1-pentene, 1-octene, 1-decene, 1-dodecene, 1-tetradecene, 1-hexadecene, 1-octadecene, 1-eicosene and the like. Among these olefins exemplified, at least one or more olefins selected from ethylene, propylene, 1-butene, 1-hexene, 4-methyl-1-pentene and 1-octene are preferably used.

The (co)polymer (a1) is not particularly limited so long as it is obtained by homopolymerizing or copolymerizing the above α-olefins, and there may be preferably mentioned an ethylenic polymer such as a low density polyethylene, a medium density polyethylene, a high density polyethylene, a linear low density polyethylene, an ultra high molecular weight polyethylene and the like; a propylenic polymer such as a propylene homopolymer, a propylene random copolymer, a propylene block copolymer and the like; polybutene, poly(4-methyl-1-pentene), poly(1-hexene), an ethylene-propylene copolymer, an ethylene-butene copolymer, an ethylene-hexene copolymer, an ethylene-octene copolymer, an ethylene-(4-methyl-1-pentene) copolymer, a propylene-butene copolymer, a propylene-(4-methyl-1-pentene) copolymer, a propylene-hexene copolymer, a propylene-octene copolymer, and others. Especially a propylenic polymer containing a constitutional unit derived from propylene at a ratio of 50 mol % or more and preferably 80 mol % or more is preferred.

<<Copolymer (a2)>>

In the copolymer (a2), as the α-olefin represented by $CH_2=CH-C_xH_{2x+1}$ (x is 0 or a positive integer), there may be mentioned the same α-olefins as described in the section of the above (co)polymer (a1), and as the monoolefin compound having an aromatic ring, there may be specifically mentioned a styrenic compound such as styrene, vinyltoluene, α-methylstyrene, chlorostyrene, styrene sulfonic acid and its salt and the like and vinylpyridine and others. The copolymer (a2) is not particularly limited so long as it is obtained by copolymerizing the aboveα-olefin and the monoolefin compound having an aromatic ring.

<<Copolymer (a3)>>

In the copolymer (a3), as the α-olefin represented by $CH_2=CH-C_xH_{2x+1}$ (x is 0 or a positive integer), there may be mentioned the same α-olefins as described in the section of the above (co)polymer (a1), and the constitutional unit derived from the cyclic monoolefin compound represented by the above general formula (2) is represented by the following general formula (3).

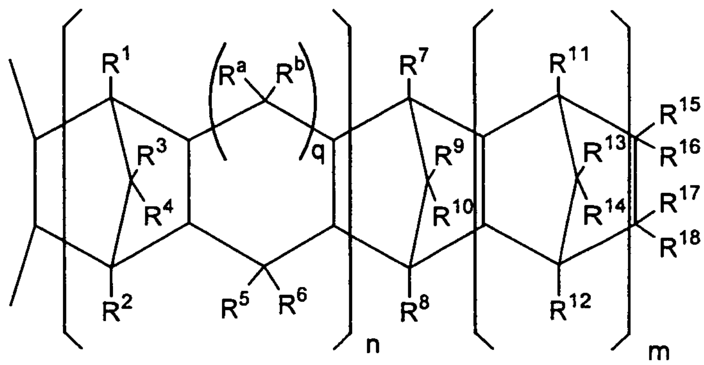

...(2)

In the formula (3), n, m, q, $R^1$ to $R^{18}$ as well as $R^a$ and $R^b$ have the same meaning as defined in the formula (2).

<<Copolymer (a4)>>

In the copolymer (a4), as the α-olefin represented by $CH_2=CH-C_xH_{2x+1}$ (x is 0 or a positive integer), there may be mentioned the same α-olefins as described in the section of the above (co)polymer (a1). The unsaturated carboxylic acid and its derivative include, for example, an unsaturated monocarboxylic acid and its derivative, an unsaturated dicarboxylic acid and its derivative, vinyl esters and the like, and there may be specifically mentioned (meth)acrylic acid, (meth)acrylic acid ester, (meth)acrylic acid halide, (meth)acrylic acid amide, maleic acid, maleic anhydride, maleic acid ester, maleic acid halide, maleic acid amide, maleic acid imide, aliphatic vinyl esters such as vinyl acetate, vinyl butyrate and the like. The copolymer (a4) is not particularly limited so long as it is a random copolymer of the above-mentioned α-olefin and an unsaturated carboxylic acid or its derivative, and a copolymer containing a constitutional unit derived from the α-olefin at a ratio of 50 mol % or more is preferable.

<<Modified Polyolefin (a5)>>

In the modified Polyolefin (a5), as the unsaturated carboxylic acid or its derivative, there may be specifically mentioned maleic acid, maleic anhydride, maleic acid ester, maleic acid halide, maleic acid amide, maleic acid imide and the like. As a method of modifying the polymer represented by the above-mentioned (a1) to (a4) with an unsaturated carboxylic acid or its derivative, there may be mentioned, for example, a method of reacting the unsaturated carboxylic acid or its derivative with the (co)polymer represented by the (a1) to (a4) in the presence of a radical generator such as an organic peroxide and the like or in the presence of ultraviolet light or radiation, and the like.

Although there are no particular limitations on the conditions and methods for producing a polyolefin (a'') selected from the group consisting of (a1) to (a5), there may be used, for example, a method by coordinate anionic polymerization using a well-known transition metal catalyst such as a Ziegler-Natta catalyst, a metallocene catalyst, a post-metallocene catalyst and the like, or radical polymerization under high pressure or under radiation, or the like. In addition, there may be used a polyolefin obtained by thermal or radical decomposition of the polyolefin produced by the above methods.

Further, the block (a) is required to be constituted from a monoolefin compound having only one carbon-carbon double bond or a monoolefin compound having an aromatic ring as mentioned above. When there is used a polymer obtained by the copolymerization of the above α-olefin with a compound having plural carbon-carbon double bonds, for example, such as a linear diene compound such as hexadiene, octadiene and the like, a styrenic diene compound such as divinylbenzene and the like, a cyclic diolefin compound such as vinylnorbornene, ethylidenenorbornene and the like, it is not favorable because unsaturated bonds derived from the diene compound are mutually crosslinked to form gel at a stage of halogenation described later. Therefore, as the polyolefin (a'') to be halogenated, there is used a polyolefin selected from the group consisting of (a1) to (a5), and these polyolefins may be used in a combination of two or more kinds.

<<Halogenated Polyolefin (a')>>

The halogenated polyolefin (a') may be produced by halogenating the polyolefin (a'') as mentioned above. The halogen content of the halogenated polyolefin (a') thus obtained is 0.01 to 70% by weight, preferably 0.02 to 50% by weight and more preferably 0.05 to 30% by weight. Such halogen is selected from fluorine, chlorine, bromine or iodine and a combination thereof may be used.

In addition, the halogenated polyolefin (a') has a structure in which at least one constitutional unit selected from the constitutional units represented by the following general formulas (I) to (III) is bonded to the terminal position of the polymer main chain and/or a structure in which at least one constitutional unit selected from the constitutional units represented by the following general formulas (IV) to (VII) is inserted into the polymer main chain.

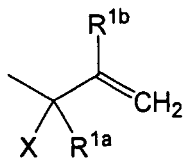

(I)

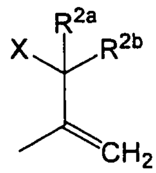

(II)

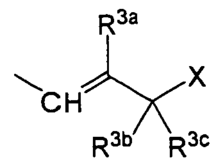

(III)

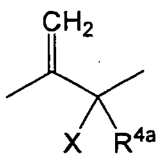

(IV)

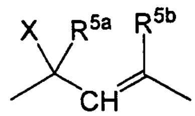

(V)

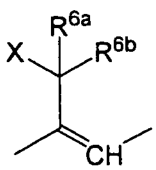

(VI)

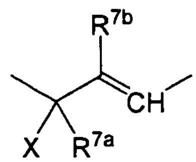

(VII)

In the above general formulas (I) to (VII), X represents a halogen atom $R^{1a}$, $R^{1b}$, $R^{2a}$, $R^{2b}$, $R^{3a}$, $R^{3b}$, $R^{3c}$, $R^{4a}$, $R^{5a}$, $R^{5b}$, $R^{6a}$, $R^{6b}$, $R^{7a}$ and $R^{7b}$ are a hydrogen atom, a halogen atom, a hydrocarbon group, an oxygen-containing group or a nitrogen-containing group which may be substituted with one or more halogen atoms, and may be the same or different from each other.

The halogen atom includes fluorine, chlorine, bromine and iodine, and chlorine and bromine are preferred.

The hydrocarbon group specifically includes a linear or branched alkyl group having 1 to 30 carbon atoms, preferably 1 to 20 carbon atoms such as methyl, ethyl, n-propyl, isopropyl, n-butyl, isobutyl, sec-butyl, tert-butyl, neopentyl, n-hexyl and the like; a linear or branched alkenyl group having 2 to 30 carbon atoms, preferably 2 to 20 carbon atoms such as vinyl, allyl, isopropenyl and the like; a linear or branched alkynyl group having 2 to 30 carbon atoms, preferably 2 to 20 carbon atoms such as ethynyl, propargyl and the like; an aryl group having 6 to 30 carbon atoms, preferably 6 to 20 carbon atoms such as phenyl, benzyl, naphthyl, biphenyl, terphenyl, phenanthryl, anthracenyl and the like; an alkyl-substituted aryl group such as tolyl, iso-propylphenyl, tert-butylphenyl, dimethylphenyl, di-t-butylphenyl and the like; and others. The hydrocarbon group, in which a hydrogen atom may be substituted with a halogen atom, includes, for example, a halogenated hydrocarbon group having 1 to 30 carbon atoms, preferably 1 to 20 carbon atoms such as trifluoromethyl, pentafluorophenyl, chlorophenyl and the like. In addition, the above-mentioned hydrocarbon group may be substituted with another hydrocarbon group and includes, for example, an aryl group-substituted alkyl group such as benzyl, cumyl and the like.

Furthermore, the above-mentioned hydrocarbon group may be substituted with an oxygen-containing group such as a heterocyclic compound residue, an alkoxy group, an aryloxy group, an ester group, an ether group, an acyl group, a carboxyl group, a carbonate group, a hydroxyl group, a peroxy group, a carboxylic anhydride group; a nitrogen-containing group such as amino group, an imino group, an amide group, an imide group, a hydrazino group, a hydrazono group, a nitro group, a nitroso group, a cyano group, an isocyano group, a cyanate ester group, an amidino group, a diazo group, an ammonium salt derived from an amino group and the like; and others.

Of these, especially preferred are a linear or branched alkyl group having 1 to 30 carbon atoms, preferably 1

to 20 carbon atoms such as methyl, ethyl, n-propyl, isopropyl, n-butyl, isobutyl, sec-butyl, tert-butyl, neopentyl, n-hexyl and the like; an aryl group having 6 to 30 carbon atoms, preferably 6 to 20 carbon atoms such as phenyl, naphthyl, biphenyl, terphenyl, phenanthryl, anthracenyl and the like; a substituted aryl group in which these aryl groups are substituted with 1 to 5 substituents such as a halogen atom, an alkyl group or alkoxy group having 1 to 30 carbon atoms, preferably 1 to 20 carbon atoms, an aryl group or aryloxy group having 6 to 30 carbon atoms, preferably 6 to 20 carbon atoms and the like; and others.

The oxygen-containing group is a group containing 1 to 5 oxygen atoms in the group and specifically includes, for example, an alkoxy group, an aryloxy group, an ester group, an ether group, an acyl group, a carboxyl group, a carbonate group, a hydroxyl group, a peroxy group, a carboxylic anhydride group and the like. An alkoxy group, an aryloxy group, an acetoxy group, a carbonyl group, a hydroxyl group and the like are preferred. In addition, when the oxygen-containing group contains a carbon atom, it preferably has 1 to 30 carbon atoms and preferably 1 to 20 carbon atoms. Of these oxygen-containing groups, the alkoxy group is preferably exemplified by methoxy, ethoxy, n-propoxy, isopropoxy, n-butoxy, isobutoxy, tert-butoxy and the like, the aryloxy group is preferably exemplified by phenoxy, 2,6-dimethylphenoxy, 2, 4, 6-trimethylphenoxy and the like, the acyl group is preferably exemplified by formyl, acetyl, benzoyl, p-chlorobenzoyl, p-methoxybenzoyl and the like, and the ester group is preferably exemplified by acetyloxy, benzoyloxy, methoxycarbonyl, phenoxycarbonyl, p-chlorophenoxycarbonyl and the like.

The nitrogen-containing group is a group containing 1 to 5 nitrogen atoms in the group, and specifically includes, for example, an amino group, an imino group, an amide group, an imide group, a hydrazino group, a hydrazono group, a nitro group, a nitroso group, a cyano group, an isocyano group, a cyanate ester group, an amidino group, a diazo group, an ammonium salt derived from an amino group and the like. An amino group, an imino group, an amide group, an imide group, a nitro group and a cyano group are preferred. In addition, when the nitrogen-containing group contains a carbon atom, it preferably has 1 to 30 carbon atoms and preferably 1 to 20 carbon atoms. Of these nitrogen-containing groups, the amide group is preferably exemplified by acetamide, N-methylacetamide, N-methylbenzamide and the like, the amino group is preferably exemplified by an alkylamino group such as methylamino, dimethylamino, diethylamino, dipropylamino, dibutylamino, dicyclohexylamino and the like, an arylamino group or an alkylarylamino group is preferably exemplified by phenylamino, diphenylamino, ditolylamino, dinaphthylamino, methylphenylamino and the like, an imide group is preferably exemplified by acetimide, benzimide and the like, and an imino group is preferably exemplified by methylimino, ethylimino, propylimino, butylimino, phenylimino and the like.

Hereinafter, there are exemplified preferred forms of the constitutional units represented by the above general formulas (I) to (VII) by structural formulas.

[Exemplification of preferred forms represented by the above general formula (I)]

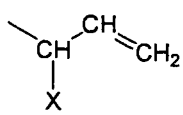
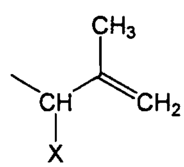
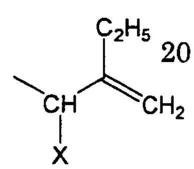

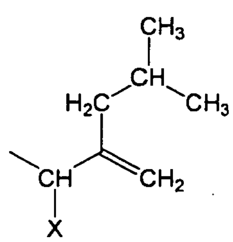
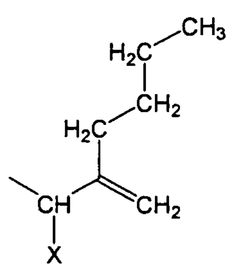
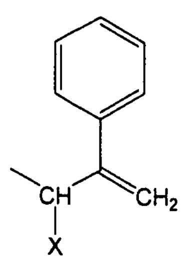

In the above formula, X represents a halogen atom.

[Exemplifications of preferred forms represented by the above general formula (II)]

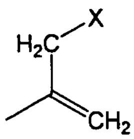
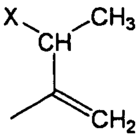
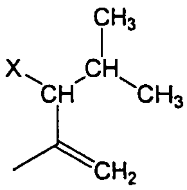
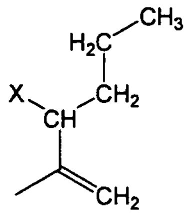

In the above formula, X represents a halogen atom.

[Exemplifications of preferred forms represented by the above general formula (III)]

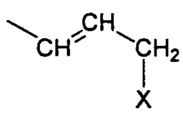
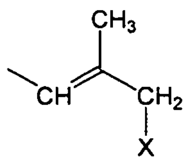
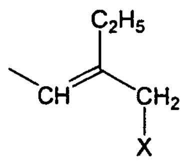

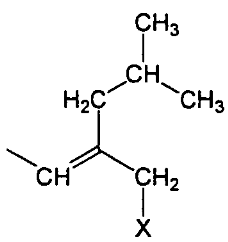
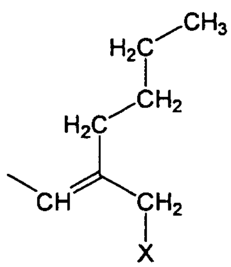
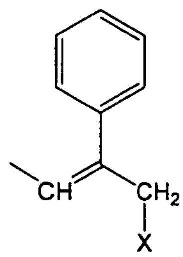

In the above formula, X represents a halogen atom.

[Exemplifications of preferred forms represented by the above general formula (IV)]

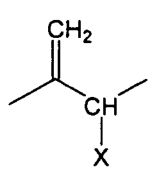

In the above formula, X represents a halogen atom.

[Exemplifications of preferred forms represented by the above general formula (V)]

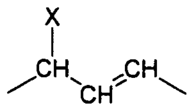
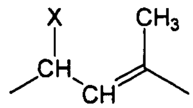
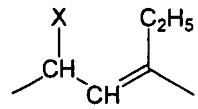

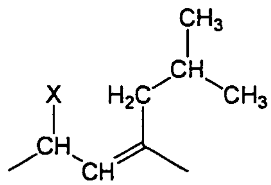
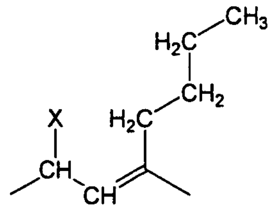
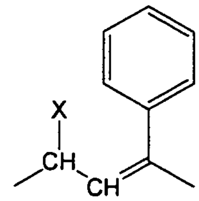

In the above formula, X represents a halogen atom.

[Exemplifications of preferred forms represented by the above general formula (VI)]

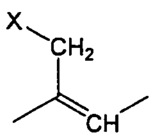
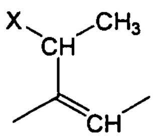
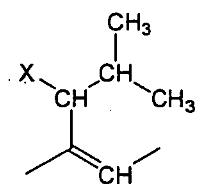
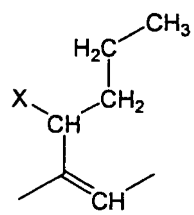

In the above formula, X represents a halogen atom.

[Exemplifications of preferred forms represented by the above general formula (VII)]

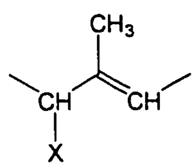
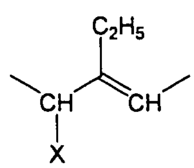
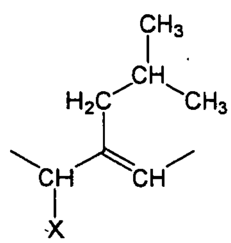

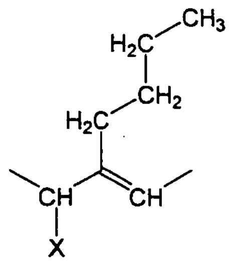

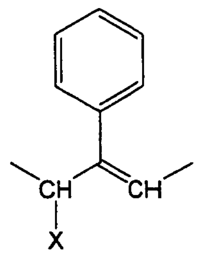

In the above formula, X represents a halogen atom.

In addition, the halogenated polyolefin (a') may have a structure in which at least one constitutional unit selected from the constitutional units represented by a structure in which two hydrogen atoms are added to the carbon-carbon double bond in the constitutional units represented by the above general formulas (I) to (III) to form a carbon-carbon single bond is bonded to the terminal position of the polymer main chain and/or a structure in which at least one constitutional unit selected from the constitutional units represented by a structure in which two hydrogen atoms are added to the carbon-carbon double bond in the constitutional units represented by the following general formulas (IV) to (VII) to form a carbon-carbon single bond in the polymer main chain is inserted into the polymer main chain. Such preferred forms of the constitutional units are shown by the structural formulas below.

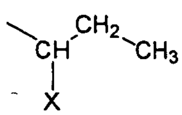

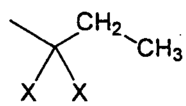

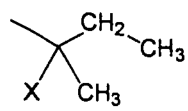

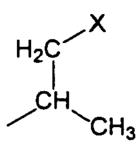

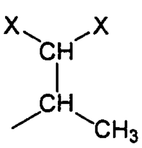

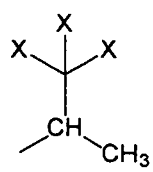

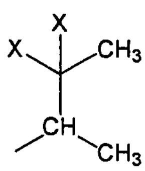

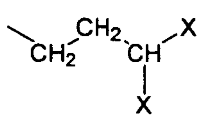

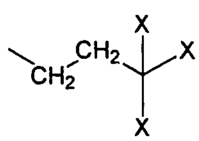

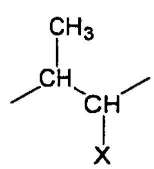

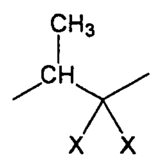

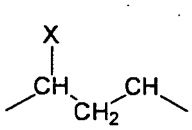

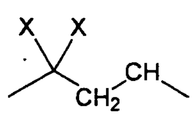

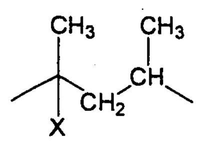

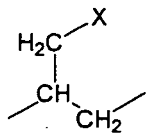 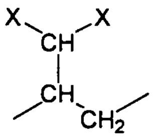 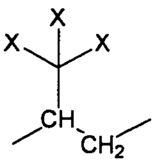 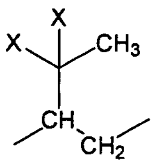

X represents a halogen atom.

Here, the polymer main chain represents a part having a largest number of repeating units derived from an α-olefin present in one molecular chain of the polymer and a comonomer copolymerized therewith, that is, the longest chain structure of monomers. The polymer main chain has two terminal positions. Therefore, when at least one constitutional unit selected from the constitutional units represented by the above general formulas (I) to (III) and a constitutional unit represented by a structure in which two hydrogen atoms are added to the carbon-carbon double bond contained in the constitutional unit to form a carbon-carbon single bond is bonded to the terminal position of the polymer main chain, the maximum number of the above constitutional units contained in one molecular chain of the polymer is two. In addition, when at least one constitutional unit selected from the constitutional units represented by the following general formulas (IV) to (VII) and a constitutional unit represented by a structure in which two hydrogen atoms are added to the carbon-carbon double bond contained in the constitutional unit to form a carbon-carbon single bond is inserted into the polymer main chain, the number of the above constitutional units present in one molecular chain of the polymer is not particularly limited. However, when the number is too large, there is a possibility that properties as polyolefin are not sufficiently exhibited. Therefore, the total number of the constitutional units represented by the above general formulas (I) to (VII) and the constitutional units represented by a structure in which two hydrogen atoms are added to the carbon-carbon double bond contained the constitutional units represented by the above general formulas (I) to (VII) to form a carbon-carbon single bond is preferably 0.01 to 70% by weight and more preferably 0.05 to 50% by weight in terms of halogen atom content. In addition, several kinds of these constitutional units may be contained in one molecular chain of the polymer. Among these constitutional units, the halogenated polyolefin (a'), which contains the constitutional units represented by the above general formulas (I) to (VII) having a structure in which a carbon-carbon double bond is present and a halogen atom is added to the allyl position, may be used not only for an adhesive and a paint resin as a halogenated polyolefin similarly to a conventionally known chlorinated polyethylene, chlorinated polypropylene and the like, but also as a macromonomer for introducing functional groups other than halogens by utilizing the reactivity of the carbon-carbon double bond present in the molecule, or for producing graft polymers.

The halogen atom content in the halogenated polyolefin (a') may be measured by a method such as, for example, elemental analysis, ion chromatography and the like, and is usually expressed in the unit of weight percent. In addition, the content of carbon-carbon double bonds present in the halogenated polyolefin (a') may be measured by a method such as infrared spectroscopy, nuclear magnetic resonance (NMR) method and the like, and the measured value is usually expressed in the unit of weight percent or mol percent. Further, the halogen atom present at the allyl position of the carbon-carbon double bond may be identified and quantified by a method, for example, NMR. As a specific example of the identification of the halogen atom present at the allyl position, in the proton NMR of the brominated polypropylene obtained by the above method using deuterated orthodichlorobenzene as a solvent, signals from the carbon-carbon double bond are usually observed in the δ range of 4.5 to 6. 0 ppm and those of the methylene group and the methine group at the allyl position to which a bromine atom is bonded are typically observed in the δ of 3.5 to 4.5 ppm. Since the signals are typically observed at δ of 3.0 to 3.5 ppm when a bromine atom is introduced into the methylene group and the methine group at the position other than the allyl position, it can be easily identified whether a bromine atom is present at the allyl position or not. Further, it is possible to confirm the correlation between the signals from the carbon-carbon double bond and signals from the methylene group and methine group to which a bromine atom is bonded, by using, for example, proton-proton two-dimensional NMR (HH-COSY). On the other hand, the molecular weight of the halogenated polyolefin (a') may be measured by, for example, gel permeation chromatography (GPC). The content of the carbon-carbon double bond may be calculated as an average value per one molecular chain from the value of he number average molecular weight (Mn) measured as above and the composition ratio (molar fraction) of the units present in the halogenated polyolefin (a') (the unit derived from each olefin monomer, unit to which the halogen is bonded, carbon-carbon double bond unit, and the like). The average value per one molecular chain of the unit to which halogen is bonded is a bonding number per one molecular chain of the block (b) bonded to the block (a) in the olefinic block polymer (A2). In the olefinic block polymer (A2) of the present invention, 0.5 to 5, preferably 0.5 to 3.5 and more preferably 0.5 to 3 units of the block (b) are bonded per one molecular chain of the block (a). If the bonding number per one molecular chain of the block (b) bonded to the block (a) is outside this range, the olefinic block polymer (A2) tends to be poorly distributed on the interface between the polyolefin (A1) and the resin (B), and thus the interface is likely to be peeled off and the mechanical strength is decreased.

<<Method for Producing Halogenated Polyolefin (a')>>

The halogenated polyolefin (a') may be produced by reacting the above-mentioned polyolefin (a'') with a halogenating agent.

The halogenating agent is not particularly limited so long as it can halogenate the polyolefin (a'') to form the halogenated polyolefin (a') and specifically includes chlorine molecule, bromine molecule, iodine molecule, phosphorus trichloride, phosphorus tribromide, phosphorus triiodide, phosphorus pentachloride, phosphorus pentabromide, phosphorus pentaiodide, thionyl chloride, sulfuryl chloride, thionyl bromide, N-chlorosuccinimide, N-bromosuccinimide, N-bromocaprolactam, N-bromophthalimide, 1,3-dibromo-5,5-dimethylhydantoin, N-chloroglutarimide, N-bromoglutarimide, N,N'-dibromoisocyanuric acid,N-bromoacetamide, N-bromocarbamic acid ester, dioxane dibromide, phenyltrimethylammonium tribromide, pyridinium hydrobromide perbromide, pyrrolidone hydrotribromide, t-butyl hypochlorite, t-butyl hypobromite, copper (II) chloride, copper (II) bromide, iron (III) chloride, oxalyl chloride, IBr and the like. Among these, preferred are chlorine molecule, bromine molecule, N-chlorosuccinimide, N-bromosuccinimide, N-bromocaprolactam, N-bromophthalimide, 1,3-dibromo-5,5-dimethylhydantoin, N-chloroglutarimide, N-bromoglutarimide and N,N'-dibromoisocyanuric acid, and more preferred are bromine and a compound having an N-Br bond such as N-bromosuccinimide, N-bromocaprolactam, N-bromophthalimide, 1,3-dibromo-5,5-dimethylhydantoin, N-bromoglutarimide, N,N'-dibromoisocyanuric acid and the like.

The reaction between the polyolefin (a'') and the halogenating agent is preferably performed in an inert gas atmosphere. The inert gas includes, for example, nitrogen, argon, helium and the like. In addition, in the reaction of the present invention, a solvent may be used if necessary. The solvent is not particularly limited so long as it does not inhibit the reaction and specifically includes, for example, an aromatic hydrocarbon-based solvent such as benzene, toluene, xylene and the like; an aliphatic hydrocarbon-based solvent such as pentane, hexane, heptane, octane, nonane, decane and the like; an alicyclic hydrocarbon-based solvent such as cyclohexane, methylcyclohexane, decahydronaphthalene and the like; a chlorinated hydrocarbon-based solvent such as chlorobenzene, dichlorobenzene, trichlorobenzene, methylene chloride, chloroform, carbon tetrachloride, tetrachloroethylene, tetrachloroethane and the like; an alcohol-based solvent such as methanol, ethanol, n-propanol, iso-propanol, n-butanol, sec-butanol, tert-butanol and the like; a ketone-based solvent such as acetone, methyl ethyl ketone, methyl isobutyl ketone and the like; an ester-based solvent such as ethyl acetate, dimethyl phthalate and the like; an ether-based solvent such as dimethyl ether, diethyl ether, di-n-amyl ether, tetrahydrofuran, dioxyanisole and the like; and others. Preferred are an aliphatic hydrocarbon-based solvent such as pentane, hexane, heptane, octane, nonane, decane and the like; an alicyclic hydrocarbon-based solvent such as cyclohexane, methylcyclohexane, decahydronaphthalene and the like; and a chlorinated hydrocarbon-based solvent such as chlorobenzene, dichlorobenzene, trichlorobenzene, methylene chloride, chloroform, carbon tetrachloride, tetrachloroethylene, tetrachloroethane and the like. These solvents may be used alone or in a combination of two or more kinds. In addition, although it is preferable that the reaction solution forms a uniform phase by using these solvents, there is no problem even if plural nonuniform phases are formed.

In the reaction with the halogenating agent, a radical initiator may be added if necessary in order to promote the reaction. The radical initiator includes, for example, an azo-based initiator such as azobisisobutyronitrile, azobis-2,4-dimethylvaleronitrile, azobiscyclohexanecarbonitrile, azobis-2-amidinopropane hydrochloride, dimethyl azobisisobutyrate, azobisisobutyramidine hydrochloride, 4,4'-azobis-4-cyanovaleric acid or the like; a peroxide-based initiator such as benzoyl peroxide, benzoyl 2,4-dichloroperoxide, di-tert-butyl peroxide, lauroyl peroxide, acetyl peroxide, diisopropyl peroxydicarbonate, cumene hydroperoxide, tert-butyl hydroperoxide, dicumyl peroxide, p-menthane hydroperoxide, pinane hydroperoxide, methyl ethyl ketone peroxide, cyclohexanone peroxide, diisopropyl peroxydicarbonate, tert-butyl peroxylaurate, di-tert-butyl peroxyphthalate, dibenzyl oxide, 2,5-dimethylhexane-2,5-dihydroperoxide or the like; a redox-system initiator such as benzoyl peroxide-N,N-dimethylaniline, peroxodisulfuric acid-sodium hydrogen sulfite or the like; and others. Among these, preferred are an azo-based initiator and a peroxide-based initiator, and more preferred are benzoyl peroxide, di-tert-butyl peroxide, lauroyl peroxide, acetyl peroxide, diisopropyl peroxydicarbonate, cumene hydroperoxide, tert-butyl hydroperoxide, dicumyl peroxide, azobisisobutyronitrile, azobis-2,4-dimethylvaleronitrile, azobiscyclohexanecarbonitrile, and dimethyl azobisisobutyrate. These radical initiators can be used alone, or two or more kinds and may be used simultaneously or sequentially.

In addition, there may be employed various conventionally known methods of reacting the polyolefin (a'') with a halogenating agent. For example, there may be mentioned a method in which the polyolefin (a'') is suspended or dissolved in a solvent and is allowed to react by adding and mixing a halogenating agent and a radical initiator if necessary at a temperature of typically -80 to 250˚C, preferably room temperature to the boiling point or lower of the solvent, or a method in which the polyolefin (a'') is brought into contact with a halogenating agent and a radical initiator if necessary under melt-kneading at a temperature of the melting point or higher of the polyolefin, for example, 180 to 300˚C, or the like. The halogenated polyolefin (a') may be produced by the above methods.

<Block (b)>

The block (b) constituting the olefinic block polymer (A2) has a number average molecular weight in a range of 2, 000 to 200, 000 and preferably 5, 000 to 150, 000. If the number average molecular weight is higher than 200,000, the olefinic block polymer (A2) tends to be poorly distributed on the interface between the polyolefin (A1) and the resin (B) and the mechanical strength is decreased. If the number average molecular weight is lower than 2,000, the entanglement of the molecular chains between the polyolefin (A1) or the resin (B) and the olefinic block polymer (A2) is insufficient, and the mechanical strength is decreased.

The block (b) is a homopolymer or a copolymer of one or more monomers selected from radical polymerizable monomers. The radical polymerizable monomers specifically includes a (meth) acrylic acid-based monomer such as (meth) acrylic acid, methyl (meth)acrylate, ethyl (meth)acrylate, n-propyl (meth)acrylate, isopropyl (meth)acrylate, n-butyl (meth) acrylate, isobutyl (meth)acrylate, tert-butyl (meth)acrylate, n-pentyl (meth)acrylate, n-hexyl (meth)acrylate, cyclohexyl (meth)acrylate, n-heptyl (meth)acrylate, n-octyl (meth)acrylate, 2-ethylhexyl (meth)acrylate, nonyl (meth) acrylate, decyl (meth)acrylate, dodecyl (meth)acrylate, phenyl (meth)acrylate, toluyl (meth)acrylate, benzyl (meth)acrylate, 2-methoxyethyl (meth)acrylate, 3-methoxybutyl (meth)acrylate, 2-hydroxyethyl (meth)acrylate, 2-hydroxypropyl (meth)acrylate, stearyl (meth)acrylate, glycidyl (meth)acrylate, 2-aminoethyl (meth)acrylate, 2-(dimethylamino)ethyl (meth)acrylate, γ-(methacryloyloxypropyl)trimethoxysilane, ethylene oxide adduct of (meth)acrylic acid, trifluoromethylmethyl (meth)acrylate, 2-trifluoromethylethyl (meth)acrylate, 2-perfluoroethylethyl (meth)acrylate, 2-perfluoroethyl-2-perfluorobutylethyl (meth)acrylate, 2-perfluoroethyl (meth) acrylate, perfluoromethyl (meth) acrylate, diperfluoromethylmethyl (meth)acrylate, 2-perfluoromethyl-2-perfluoroethylmethyl (meth)acrylate, 2-perfluorohexylethyl (meth)acrylate, 2-perfluorodecylethyl (meth)acrylate, 2-perfluorohexadecylethyl (meth)acrylate and the like; a styrenic monomer such as styrene, vinyl toluene, α-methylstyrene, chlorostyrene, styrenesulfonic acid and a salt thereof and the like; a fluorine-containing vinyl monomer such as perfluoroethylene, perfluoropropylene, vinylidene fluoride and the like; a silicon-containing vinyl-based monomer such as vinyltrimethoxysilane, vinyltriethoxysilane and the like; maleic anhydride, maleic acid, a monoalkyl ester and a dialkyl ester of maleic acid; fumaric acid, a monoalkyl ester and a dialkyl ester of fumaric acid; a maleimide-based monomer such as maleimide, methylmaleimide, ethylmaleimide, propylmaleimide, butylmaleimide, hexylmaleimide, octylmaleimide, dodecylmaleimide, stearylmaleimide, phenylmaleimide, cyclohexylmaleimide and the like; a nitrile group-containing vinyl-based monomer such as acrylonitrile, methacrylonitrile and the like; an amide group-containing vinyl-based monomer such as (meth)acrylamide, N-methyl(meth)acrylamide, N-ethyl(meth)acrylamide, N-propyl(meth)acrylamide, N-isopropyl(meth)acrylamide, N-butyl(meth)acrylamide, N,N-dimethyl(meth)acrylamide and the like; a vinyl ester-based monomer such as vinyl acetate, vinyl propionate, vinyl pivalate, vinyl benzoate, vinyl cinnamate and the like; an olefinic monomer such as ethylene, propylene, butene and the like; a diene-based monomer such as butadiene, isoprene and the like; vinyl chloride, vinylidene chloride, allyl chloride, allyl alcohol and the like. These organic compounds may be used alone or in a combination of two or more kinds.

The block polymer (b) preferably includes a polymer obtained by (co) polymerizing one or two or more kinds of monomers selected from (meth) acrylic acid and a derivative thereof, (meth)acrylonitrile, styrene and a derivative thereof, (meth)acrylamide and a derivative thereof, maleic acid and a derivative thereof, maleimide and a derivative thereof and vinyl esters, and more preferably includes a polymer obtained by (co)polymerizing one or two or more kinds of monomers selected from styrene, acrylonitrile, 2-hydroxyethtylmethacrylate, n-butyl acrylate, glycidyl methacrylate and methylmethacrylate. In addition, when the polycarbonate resin (b1) is used as the resin (B), especially preferred are a polymer obtained by (co) polymerizing one or two or more monomers selected from styrene, acrylonitrile and methylmethacrylate. When the acrylic resin (b2) is used as the resin (B), especially preferred is methylmethacrylate. When the vinyl polymer (b3) is used as the resin (B), especially preferred are (meth)acrylic acid and its derivative in an amount of 50 mol % or less. When the polyphenylene oxide (b4) is used as the resin (B), especially preferred is styrene.

The solubility parameter of a (co)polymer constituting the block (b) may be calculated from the composition of a (co) polymer constituting the block (b). The block (b) has a solubility parameter in a range of 18 to 25, preferably 18.2 to 22 and more preferably 18.5 to 20. In addition, when the resin (B) is the polycarbonate (b1), the block (b) has a solubility parameter in a range o 18 to 24, preferably 18.5 to 24 and more preferably 19 to 24. If the value of the solubility parameter is outside this range, the compatibility of the block (b) with the resin (B) is decreased, thus decreasing the effect as a compatibilizer and the mechanical strength.

The solubility parameter of a copolymer was calculated by entering the composition of the block (b) into CHEOPS Ver.4.0 manufactured by Million Zillion software, Inc.

In the resin composition (C), the composition of the block (b) may be calculated by analyzing the chloroform-insoluble component at room temperature by $^1$H-NMR.

The content of the component derived from the block (b) contained in the chloroform-insoluble component at room temperature is 0.1 to 70% by weight, preferably 0.5 to 50% by weight and more preferably 1 to 40% by weight. Detection of the component derived from the block (b) contained in the chloroform-insoluble component at room temperature means that the block (a) and the block (b) are bonded each other by a covalent bond in the resin composition

(C). When the content of the component derived from the block (b) contained in the chloroform-insoluble component at room temperature is within the above range, the performance of the olefinic block polymer (A2) as a compatibilizer is improved and the dispersed particle size of the island phase is minimized, thus the mechanical strength is improved.

The chloroform-insoluble component at room temperature is measured as follows: In 100 mL of xylene, 5 g of the resin composition (C) is dissolved under reflux. The resulting solution is poured into 1 L of chloroform while stirring with a homogenizer. After a polymer is precipitated and the resultant slurry is allowed to be settled at room temperature (15 to 25˚C) for 10 to 15 hours, the resulting solution is filtered through a G3 filter at room temperature to separate a solid from a filtrate. The solid is a chloroform-insoluble component (the filtrate is a chloroform-soluble component). The composition of the chloroform-insoluble component is analyzed by $^1$H-NMR to measure the amount (percent by weight) of the component derived from the block (b) contained in the chloroform-insoluble component at room temperature.

The olefinic block polymer (A2) has small amount of impurities such as catalyst-residue components and the like and has good resin properties. The olefinic block polymer (A2) has a transition metal content incorporated during polymerization of preferably 100 ppm or less and more preferably is white and has a transition metal content of 50 ppm or less. In addition, when the olefinic block polymer (A2) is powdery, it preferably has an average particle size of 1 to 1,000 μm and has a bulk density of 0.10 to 0.90 g/cm$^3$ as measured by a method specified in JIS K6891. Further, the olefinic block polymer (A2) may be used in any form of pellet, powder and bale.

<Method for producing olefinic block polymer (A2)>

The olefinic block polymer (A2) may be produced, for example, by atom transfer radical polymerization of one or more monomers selected from radically polymerizable monomers using the halogenated polyolefin (a') as a macroinitiator. Here, the macroinitiator is a polymer which is capable of initiating atom transfer radical polymerization and which has an initiating site for atom transfer radical polymerization in the molecular chain.

The atom transfer radical polymerization is one of living radical polymerizations and is a method for radically polymerizing a radically polymerizable monomer using an organic halide or a halogenated sulfonyl compound as an initiator and a metal complex containing a transition metal as a central metal as a catalyst. Specifically, there may be mentioned, for example, Matyjaszewski et al., Chem. Rev., 101, 2921 (2001), WO No. 96/30421 pamphlet, WO 97/18247 pamphlet, WO 98/01480 pamphlet, WO 98/40415 pamphlet, WO 00/156795 pamphlet, Sawamoto et al., Chem. Rev., 101, 3689 (2001), Japanese Laid-Open Patent Application No. Hei 8-41117, Japanese Patent Laid-Open Publication No. H09-208616, Japanese Patent Laid-Open Publication No. 2000-264914, Japanese Patent Laid-Open Publication No. 2001-316410, Japanese Patent Laid-Open Publication No. 2002-80523, Japanese Patent Laid-Open Publication No. 2004-307872 and others. The initiator used includes, for example, an organic halide and a halogenated sulfonyl compound. As an initiator structure, especially preferred are a carbon-halogen bond present at an α-position of a carbon-carbon double bond or a carbon-oxygen double bond, or a structure in which plural halogens are bonded to one carbon atom. In the halogenated polyolefin (a'), as the initiator structure, there may be used a carbon-halogen bond present at an α-position of a carbon-carbon double bond, or a structure in which plural halogens are bonded to one carbon atom.

The method for producing the olefinic block polymer (A2) by using the halogenated polyolefin (a') as a macroinitiator is basically atom transfer radical polymerization of a radically polymerizable monomer using a metal complex containing a transition metal as a central metal as a catalyst in the presence of the halogenated polyolefin (a').

The transition metal complex used as a polymerization catalyst is not particularly limited, but preferred is a metal complex containing an element of Group 7, Group 8, Group 9, Group 10 or Group 11 of the Periodic Table as a central metal. As the more preferred ones, there may be mentioned a complex of zero valent copper, monovalent copper, divalent ruthenium, divalent iron or divalent nickel. Among them, a complex of copper is preferable. The monovalent copper compound is specifically exemplified by cuprous chloride, cuprous bromide, cuprous iodide, cuprous cyanide, cuprous oxide, cuprous perchlorate and the like. When the copper compound is used, there is added as a ligand 2,2'-bipyridyl or a derivative thereof, 1,10-phenanthroline or a derivative thereof, or a polyamine such as tetramethylethylenediamine, pentamethyldiethylenetriamine or hexamethyltris(2-aminoethyl)amine, and the like in order to enhance the catalyst activity. In addition, a tristriphenylphosphine complex of divalent ruthenium chloride ($RuCl_2(PPh_3)_3$) is also preferable as a catalyst. When the ruthenium compound is used as a catalyst, aluminum alkoxides are added as an activating agent. Further, preferred are a bistriphenylphosphine complex of divalent iron ($FeCl_2(PPh_3)_2$), a bistriphenylphosphine complex of divalent nickel ($NiCl_2(PPh_3)_2$) and a bistributylphosphine complex of divalent nickel ($NiBr_2(PBu_3)_2$) as a catalyst.

As the one or more monomers selected from radically polymerizable monomers, there may be mentioned the same compounds as those exemplified in the section of the block (b) described above.

In the production method of the olefinic block polymer (A2), the polymerization method is not particularly limited and there may be applied bulk polymerization, solution polymerization, suspension polymerization, emulsion polymerization, bulk/suspension polymerization and the like. As a solvent used in the radical polymerization, any solvent may be used as long as it does not inhibit the reaction and there may be mentioned, for example, an aromatic hydrocarbon-based solvent such as benzene, toluene, xylene and the like; an aliphatic hydrocarbon-based solvent such as pentane, hexane, heptane, octane, nonane, decane and the like; an alicyclic hydrocarbon-based solvent such as cyclohexane, methylcyclohexane and decahydronaphthalene; a chlorinated hydrocarbon-based solvent such as chlorobenzene, dichlorobenzene, trichlorobenzene, methylene chloride, chloroform, carbon tetrachloride, tetrachloroethylene and the like; an alcohol-based solvent such as methanol, ethanol, n-propanol, iso-propanol, n-butanol, sec-butanol, tert-butanol and the like; a ketone-based solvent such as acetone, methyl ethyl ketone, methyl isobutyl ketone and the like; an ester-based solvent such as ethyl acetate, dimethyl phthalate and the like; an ether-based solvent such as dimethyl ether, diethyl ether, di-n-amyl ether, tetrahydrofuran and dioxyanisole; and the like. In addition, the reaction may be performed by suspension polymerization or emulsion polymerization using water as a solvent. These solvents may be used alone or in a combination of two or more kinds. In addition, although it is preferable that the reaction solution forms a uniform phase by using these solvents, there is no problem even if plural nonuniform phases are formed.

The reaction temperature is not limited as long as the radical polymerization reaction proceeds and may be varied depending on a desired polymerization degree of the polymer, and type and amount of the radical polymerization initiator and the solvent used. The reaction temperature is typically -100 to 250˚C, preferably -50 to 180˚C and more preferably 0 to 160˚C. The reaction may be performed under reduced pressure, atmospheric pressure or pressurized conditions depending on the case. The polymerization reaction is preferably performed under an inert gas atmosphere such as nitrogen or argon or the like.

The olefinic block polymer (A2) produced by the above method is isolated by using a well-known method such as distilling off the solvent used for polymerization and unreacted monomers or reprecipitation by addition of a non-solvent, or the like. Further, a by-produced homoradical polymer may be removed by treating the resulting polymer with a polar solvent such as acetone, THF or the like using a Soxhlet extractor.

<<Method for producing powdery olefinic block polymer (A2)>>

As the method for producing the olefinic block polymer (A2), there may be mentioned a method of uniformly dissolving the olefinic block polymer (A2) produced by the aforementioned production method in a suitable solvent followed by crystallizing the polymer; a method of mechanically pulverizing the olefinic block polymer (A2) ; a method of producing by atom transfer radical polymerization in a non-molten state of at least one or more monomers selected from the radically polymerizable monomers by using the powdery halogenated polyolefin (A') having an average particle size of 1 to 1,000 μm and a bulk density of 0.10 to 0.50 g/$cm^3$ as a macroinitiator; and the like. In addition, the powdery halogenated polyolefin (A') preferably has an average particle size of 1 to 500 μm.

When the olefinic block polymer (A2) is industrially used, it is preferably obtained with good properties and low content of impurities such as catalyst components and the like. Specifically, it is preferably in a powdery form having an average particle size of 1 to 1,000 μm and a bulk density of 0.10 to 0.90 g/$cm^3$. Although the process of controlling the powdery properties may be performed in any process of producing the olefinic block polymer (A2), there may be preferably used in a process of producing a raw material polyolefin, that is, a method of controlling the conditions of a catalyst or polymerization in the process of polymerizing olefins, a method of controlling by crystallization and the like. As the method by crystallization, there is preferably used a method of producing the olefinic block polymer (A2) by converting the raw material polymer which is usually a polymer in the form of particles or pellets into powders having good properties in advance by crystallization procedure while maintaining the morphology; a method of producing the olefinic block polymer (A2) by converting the raw material polymer into powders having good properties by crystallization procedure in the process of preparing the macroinitiator while maintaining the morphology; or a method of producing the olefinic block polymer (A2) followed by converting the polymer into powders having good properties by crystallization procedure; or the like. In the crystallization procedure, the polymer is dissolved in a good solvent and thereafter a poor solvent is added or the temperature is lowered to precipitate polymer particles, thereby enabling to control the particle size and bulk density. As the important factors controlling the particle size and bulk density by crystallization procedure, there may be mentioned the polymer concentration, type of good solvent, type of poor solvent, stirring rate, temperature lowering rate and the like. The good solvent used in the crystallization procedure is not particularly limited as long as it can dissolve or swell the polymer, and one or more kinds of solvents may be selected depending on the type of polymer to be dissolved. Usually, as a solvent having a high affinity to polyolefins, there is preferably used an aromatic hydrocarbon-based solvent or an aliphatic hydrocarbon-based solvent. Among these, especially preferably used are toluene, xylene, chlorobenzene, decane, a mixed solvent thereof or the like. In addition, when the polymer contains a polyolefin having a melting point higher than the room temperature such as polyethylene, polypropylene or the like, it may be dissolved by heating in the solvent because it is poorly dissolved at room temperature. The polymer concentration is typically in the range of 5 g/L to 500 g/L and preferably 10 g/L to 300 g/L.

The poor solvent in the crystallization procedure is not particularly limited as long as it may cause the polymer to precipitate and one or more kinds of solvents may be selected depending on the type of polymer to be dissolved. In the crystallization procedure, the polymer may be typically reduced in particle size by increasing the stirring rate. In

addition, when the polymer is precipitated by lowering the temperature, it is typically preferable that the temperature lowering rate is decreased around a temperature at which the polymer is precipitated. The temperature lowering rate is typically 5 to 100˚C/h and preferably 5 to 50˚C/h.

Such technique for producing the olefinic block polymer (A2) having good properties is preferably used especially when the polyolefin segment has a melting point of 80˚C or higher and preferably 100˚C or higher.

In addition, the polymer with well-controlled powdery properties is industrially advantageous as compared with polymers having nonuniform particle properties because it is possible to easily remove not only the solvent but also impurities such as organic residue and catalyst residue generated at the production stage by centrifugal separation or filtration procedure.

The method for producing the olefinic block polymer (A2) is characterized in that the atom transfer radical polymerization proceeds in a state where the powdery halogenated polyolefin (A') as a macroinitiator is not molten at the initiation of or during the atom transfer radical polymerization.

The atom transfer radical polymerization may be performed with or without using a solvent. As the solvent which may be used, any solvent may be used so long as it does not inhibit the reaction, and there may be specifically mentioned, for example, an aromatic hydrocarbon-based solvent such as benzene, toluene, xylene and the like; an aliphatic hydrocarbon-based solvent such as pentane, hexane, heptane, octane, nonane, decane and the like; an alicyclic hydrocarbon-based solvent such as cyclohexane, methylcyclohexane and decahydronaphthalene; a chlorinated hydrocarbon-based solvent such as chlorobenzene, dichlorobenzene, trichlorobenzene, methylene chloride, chloroform, carbon tetrachloride, tetrachloroethylene and the like; an alcohol-based solvent such as methanol, ethanol, n-propanol, iso-propanol, n-butanol, sec-butanol, tert-butanol and the like; a ketone-based solvent such as acetone, methyl ethyl ketone, methyl isobutyl ketone and the like; an ester-based solvent such as ethyl acetate, dimethyl phthalate and the like; an ether-based solvent such as dimethyl ether, diethyl ether, di-n-amyl ether, tetrahydrofuran and dioxyanisole; and the like. In addition, water may be used as a solvent. These solvents may be used alone or in a combination of two or more kinds.

The reaction temperature may be arbitrary as long as the powdery halogenated polyolefin (A') as a macroinitiator is not melted or swollen and the radical polymerization reaction proceeds. The temperature may be varied depending on a desired polymerization degree of the polymer and the type and amount of the radical polymerization initiator and a solvent used, and is typically -100 to 250˚C, preferably -50 to 120˚C and more preferably 0 to 100˚C. The reaction may be performed under reduced pressure, atmospheric pressure, or pressurized conditions depending on the case. The polymerization reaction is preferably performed in an inert gas atmosphere such as nitrogen or argon or the like.

Specifically, the powdery olefinic block polymer (A2) may be produced, for example, as follows:

Into a nitrogen-purged glass reactor, a powdery halogenated polyolefin (A') containing a halogen atom, an organic solvent such as toluene and the like and a radically polymerizable monomer such as methyl methacrylate and the like are charged, and the mixture is heated with stirring at 80˚C to disperse the polymer into a slurry state. To this slurry solution copper bromide and N,N,N',N'',N''-pentamethyldiethylenetriamine (PMDETA) are added to perform polymerization at 80˚C for 1.5 hours. To the reaction solution, methanol is added to filter off and wash the resultant polymer. The precipitated polymer is dried under reduced pressure to obtain a powdery olefinic block polymer (A2).

From the powdery olefinic block polymer (A2) produced by the above method, the catalyst residue and a solvent used in the polymerization and unreacted monomer may be removed by simple filtration and washing or centrifugal separation or the like.

[Resin (B)]

Next, the resin (B) used in the present invention will be explained.

<Polycarbonate resin (b1)>

The polycarbonate resin (b1) used in the present invention is a conventionally well-known polycarbonate obtained from a divalent phenol such as bisphenol A and the like and a diester carbonate or phosgene.

The divalent phenol is exemplified by, in addition to 2,2-bis(4-hydroxyphenyl)propane [bisphenol A], bis(hydroxyaryl)alkanes such as 1,1-bis(4-hydroxyphenyl)methane, 1,1-bis(4-hydroxyphenyl)ethane, 2,2-bis(4-hydroxyphenyl)butane and the like; bis(hydroxyaryl)cycloalkanes such as 1,1-bis(4-hydroxyphenyl)cyclohexane and the like; dihydroxyaryl ethers such as 4,4'-dihydroxydiphenyl ether and the like; dihydroxydiaryl sulfides; and the like.

Two or more kinds of these divalent phenols may be used if needed, and there is typically used bisphenol A or those containing bisphenol A as a main component and a small amount of other divalent phenols.

The ester carbonate includes diphenyl carbonate, ditolyl carbonate, bis(chlorophenyl)carbonate, bis(diphenyl) carbonate, diethyl carbonate and the like. Of these, diphenyl carbonate is preferably used.

In addition, the polycarbonate may be treated with a terminal blocking agent such as an allyloxy compound, a

monocarboxylic compound and the like, if needed.

<Acrylic resin (b2)>

The acrylic resin (b2) used in the present invention includes a polymer of an ester acrylate (polyacrylate), a polymer of an ester methacrylate (polymethacrylate) or a copolymer resin thereof and the like.

The polyacrylate specifically includes poly(methyl acrylate), poly(ethyl acrylate), poly(butyl acrylate), poly(2-ethylhexyl acrylate), poly(isobutyl acrylate), poly (n-hexyl acrylate), poly(n-octyl acrylate), poly(lauryl acrylate), poly (stearyl acrylate) and the like.

The polymethacrylate specifically includes poly(methyl methacrylate), poly(ethyl methacrylate), poly(butyl methacrylate), poly(lauryl methacrylate), poly(stearyl methacrylate), poly(isobutyl methacrylate), poly(n-hexyl methacrylate), poly(n-octyl methacrylate) and the like. The acrylic resins (b2) as mentioned above may be used alone or in a combination of two or more kinds.

The acrylic resin (b2) has a number average molecular weight of preferably in a range of 500 to 10,000 and more preferably 1,000 to 5,000. The term "number average molecular weight" used here is a value obtained with reference to polystyrene and measured by GPC.

Such an acrylic resin (b2) may be produced by a well-known method such as a solution polymerization method, a suspension polymerization method, a bulk polymerization method and the like.

<Vinyl polymer (b3)>

The vinyl polymer (b3) used in the present invention is a polymer obtained from a vinyl monomer containing one ore more kinds selected from an aromatic vinyl compound (m1) and a cyanated vinyl compound (m2).

The aromatic vinyl compound (m1) includes styrene, vinyl toluene, $\alpha$-methylstyrene, chlorostyrene, styrene sulfonic acid and a salt thereof, and the like.

The cyanated vinyl compound (m2) includes acrylonitrile, methacrylonitrile and the like.

As the vinyl polymer (b3) used in the present invention, there may be used a vinyl compound, for example, a diene and the like other than the above compounds as a raw material monomer.

The diene includes butadiene, isoprene, 4-methyl-1,3-pentadiene, 1,3-pentadiene, 1,4-pentadiene, 1,5-hexadiene, 1,4-hexadiene, 1,3-hexadiene, 1,3-octadiene, 1,4-octadiene, 1,5-octadiene, 1,6-octadiene, 1,7-octadiene and the like.

The vinyl polymer (b3) includes a homopolymer (for example, polystyrene and the like) of the aromatic vinyl compound (m1); a copolymer (for example, a butadiene-styrene copolymer and the like) of the aromatic vinyl compound (m1) with a diene; a copolymer (for example, an acrylonitrile-styrene copolymer and the like) of the aromatic vinyl compound (m1) with the cyanated vinyl compound (m2); and a copolymer (for example, an acrylonitrile-butadiene-styrene copolymer and the like) of the aromatic vinyl compound (m1), the cyanated vinyl compound (m2) and a diene.

The vinyl polymer (b3) used in the present invention may be produced by a conventionally well-known method, and a commercially available product may be used as the vinyl polymer (b3).

<Polyphenylene oxide (b4)>

As the polyphenylene oxide (b4) used in the present invention, there may be mentioned, for example, poly(2,6-dimethyl-1,4-phenylene)ether, poly(2-methyl-6-ethyl-1,4-phenylene)ether, poly(2,6-diethyl-1,4-phenylene)ether, poly (2-ethyl-6-n-propyl-1,4-phenylene)ether, poly(2,6-di-n-propyl-1,4-phenylene)ether, poly(2-methyl-6-n-butyl-1,4-phenylene)ether, poly(2-ethyl-6-isopropyl-1,4-phenylene)ether, poly(2-methyl-6-chloro-1,4-phenylene)ether, poly(2-methyl-6-hydroxyethyl-1,4-phenylene)ether, poly(2-methyl-6-chloroethyl-1,4-phenylene)ether and the like. In addition, there may be mentioned a modified polyphenylene oxide obtained by modifying these polyphenylene oxides with polystyrene, polyamide and the like.

[Resin composition (C)]

<Additive>

Various well-known additives may be blended into the resin composition (C) of the present invention depending on the applications so long as additives do not substantially impair the objective and effect. The additive which may be used includes, for example, an additive for property modification such as dispersant, lubricant, plasticizer, flame retardant, antioxidant, antistatic agent, light stabilizer, ultraviolet absorber, crystallization accelerator (nucleating agent) and the like; a coloring agent such as pigment and dye and the like; carbon black; titanium oxide; and the like. In addition, there

may be blended a particulate filler such as talc, clay, mica, silicates, carbonates and the like, a fibrous filler such as a glass fiber, wollastonite and the like and a whisker such as potassium titanate and the like.

<Composition of resin composition (C)>

The composition ratio of the component (A1) is typically 1 to 98.9% by weight and preferably 5 to 90% b y weight, provided that the total of the polyolefin (A1), olefinic block polymer (A2) and resin (B) which constitute the resin composition (C) of the present invention is 100% by weight. If the amount of the component (A1) is less than 1% by weight, the solvent resistance is decreased, and if it is more than 98.9% by weight, the impact resistance and flexural strength are decreased. In addition, the amount of the component (A2) is typically 0.1 to 50% by weight and preferably 0. 5 to 30% by weight. If the amount of the component (A2) is less than 0.1% by weight, the effect as a compatibilizer is decreased, and if it is more than 50% by weight, the mechanical properties are decreased. Further, the amount of the component (B) is typically 1 to 98.9% by weight and preferably 9.5 to 95.5% by weight. If the amount of the component (B) is less than 1% by weight, the mechanical properties are decreased, and if it is more than 98. 9%, the solvent resistance is decreased. In addition, there may be contained a resin other than the polyolefin (A1), the polyolefinic block polymer (A2) and the resin (B) so long as the physical properties of the resin composition are not impaired.

In the resin composition (C) relating to the present invention, the content of a polymer of a vinyl monomer having a solubility parameter in a range of 18 to 25 J/m in the chloroform-insoluble component at room temperature is 0.1 to 50% by weight, preferably 0.3 to 30% by weight and more preferably 0.5 to 20% by weight.

In addition, in the resin composition (C) relating to the present invention, when the resin (B) is the polyphenylene oxide (b4), the ratio ($C_{insol}/C_{sol}$) of the weight ($C_{insol}$) of a polymer of a vinyl monomer having a solubility parameter in a range of 18 to 25 J/m in the chloroform-insoluble component at room temperature to the weight ($C_{sol}$) of a polymer of a vinyl monomer having a solubility parameter in a range of 18 to 25 J/m in the chloroform-soluble component at room temperature is 1 to 100, preferably 10 to 100 and more preferably 30 to 100.

The polymer of a vinyl monomer having a solubility parameter in a range of 18 to 25 J/m in the chloroform-insoluble component at room temperature of the resin composition (C) is a polymer (the block (B) covalently bonded to the block (a)) derived from the olefinic block polymer (A2) as mentioned above, and the polymer of a vinyl monomer having a solubility parameter in a range of 18 to 25 J/m in the chloroform-soluble component at room temperature of the resin composition is a polymer of a vinyl monomer (not bonded to the olefin component) present solely in the composition. Therefore, it may be found from the value of ($C_{insol}/C_{sol}$) whether the polymer of a vinyl monomer in the composition is a polymer derived from the olefinic block polymer (A2) or not.

Here, there are determined the weight ($C_{insol}$) of a polymer of a vinyl monomer having a solubility parameter in a range of 18 to 25 J/m in the chloroform-insoluble component at room temperature of the composition and the weight ($C_{sol}$) of a polymer of a vinyl monomer having a solubility parameter in a range of 18 to 25 J/m in the chloroform-soluble component at room temperature of the composition, as follows.

In 100 mL of xylene, 0.5 g of the resin composition (C) is dissolved under reflux. The resulting solution is poured into 1 L of chloroform while stirring with a homogenizer. A polymer is precipitated and the slurry is filtered to separate a solid from a filtrate. The solid is a chloroform-insoluble component (the filtrate is a chloroform-soluble component). The composition of the chloroform-insoluble component is analyzed by $^1$H-NMR to measure the amount (percent by weight) of the component derived from the block (b) contained in the chloroform-insoluble component at room temperature. The composition of the chloroform-soluble component is analyzed by $^1$H-NMR to measure the amount (percent by weight) of the same component as the block (b) in the resin composition (C).

<Method for preparing resin composition (C)>

The method for preparing the resin composition (C) of the present invention is not particularly limited, and the resin composition (C) may be prepared by a well-known method such as a fusion method, a solution method and the like, and a melt-kneading method is practically preferable.

As the melt-kneading method, a kneading method which is generally used in practice in a thermoplastic resin may be directly applied. For example, each component in a powdery or particulate state and additive components if needed may be uniformly dry mixed by a Henschel mixer, a ribbon blender, a V-type blender and the like and then melt-kneaded with a single- or multi-screw kneading extruder, a kneading roller, a batch kneader, a kneader, a Banbury Mixer and the like.

The melt-kneading temperature of each component (for example, a cylinder temperature in the case of an extruder) is not particularly limited if each component is melted and is typically 160 to 350˚C and preferably 200 to 300˚C. In addition, the order and method of kneading of each component are not particularly limited. Unreacted components and decomposed products in a polymer may be removed by kneading under reduced pressure.

(Applications)

A resin composition relating to the present invention may be used for various applications, for example, for the following applications.

(1) Films and sheets

A film and a sheet composed of a resin composition relating to the present invention are excellent in any of flexibility, transparency, adhesion, antifogging properties, heat resistance and separability.

(2) Microcapsules, PTP packages, chemical valves and drug delivery systems

(3) Materials for building and civil engineering

For example, resins for building and civil engineering and molded articles for building and civil engineering such as floor materials, floor tiles, floor sheets, sound insulation sheets, thermal insulation panels, vibration absorption materials, makeup sheets, baseboards, asphalt modifiers, gasket/sealing materials, roofing sheets, waterproof sheets, and the like.

(4) An interior and exterior material in automobiles or a gasoline tank

An interior and exterior material in automobiles or a gasoline tank composed of a resin composition relating to the present invention is excellent in rigidity, impact resistance, oil resistance and heat resistance.

(5) Electric and electronic components

Electric insulating materials; tools and materials for processing electronic components, magnetic recording mediums, binders of magnetic recording mediums, sealants for electric circuits, materials for home electric appliances, tools and materials for vessels such as vessels for microwave ovens, films for microwave ovens, polymer electrolyte materials, conductive alloy materials and the like; electric and electronic components represented by connecters, sockets, resistors, relay cases, switches, coil bobbins, condensers, variable condenser cases, optical pick-up, light connecters, oscillators, various terminal strips, transformers, plugs, printed wiring boards, tuners, loud speakers, microphones, head phones, small-sized motors, magnetic head bases, power modules, housings, semiconductors, liquid crystal display parts, FDD carriages, FDD chassis, HDD parts, motor brush holders, parabolic antennas, computer-related materials and the like; parts for home and office electric appliances such as VTR parts, television parts, irons, hair dryers, rice cooker parts, microwave oven parts, sound machinery and tool parts like sounder parts, audio-laser disc (registered trademark) compact discs, etc., illuminator parts, refrigerator parts, air conditioner parts, typewriter parts, word processor parts and the like; office computer-related parts, telephone-related parts, facsimile-related parts, duplicator-related parts, electromagnetic shielding materials, loud speaker cone materials and loud speaker oscillators; and the like.

(6) Aqueous emulsions

The aqueous emulsion containing a resin composition relating to the present invention may be an adhesive for polyolefin excellent in heat sealing properties.

(7) Paint bases

A solvent dispersion containing a resin composition relating to the present invention is excellent in dispersion stability to a solvent and exhibits good adhesiveness when a metal or a polar resin is bonded to polyolefin.

(8) Medical and hygienic materials

Medical supplies such as unwoven clothes, unwoven laminated products, electret, medical tubes, medical vessels, infusion solution bags, prefilled syringes, injectors and the like, medical materials, artificial organs, artificial muscles, filtration membranes, food sanitation/health materials; retort bags, freshness preservation films and the like.

(9) Daily sundry goods

Stationery such as desk mats, cutting mats, rulers, holders, grips and caps of pens, grips of scissors or cutters or the like, magnetic sheets, pen cases, paper folders, binders, label seals, tapes or white boards and the like; miscellaneous goods for daily use such as clothes, curtains, sheets, carpets, entrance mats, bath mats, buckets, hoses, bags, planters, filters of air conditioners or exhaust funs, table wares, trays, cups, lunch boxes, funnels for coffee siphon, glasses frames, containers, storage cases, suit hangers, ropes, laundry nets and the like; sports goods such as shoes, goggles, ski boards, rackets, balls, tents, water goggles, flippers, fishing rods, cooler boxes, leisure sheets or nets for sports and the like; toys such as blocks, cards and the like; vessels such as kerosene cans, drum cans or bottles for detergents, shampoo or the like, and others; and signs such as sign-boards, pylons and plastic chains and the like; and others.

(10) Laminated structures containing at least one layer composed of a resin composition relating to the present invention

For example, drug packaging materials, cloth packaging materials, wallpapers, makeup boards, electric insulation films, materials for adhesive films and tapes, marking films, laminates between metal plates and other materials, agricultural films, wrapping films, shrink films, protecting films, separation membranes for plasma component, separation membranes such as water selective permeation vaporization membranes and the like, ion exchange membranes, battery separators, selective separation membranes such as optical resolution membranes and the like, and others.

[Laminated structure]

Next, among the above-mentioned various applications, a preferred embodiment of the laminated structure will be specifically explained.

The laminated structure relating to the present invention has at least part of a structure in which a layer (L1) comprising an olefinic polymer as a main constitutional unit, a layer (L2) comprising the resin composition (C) and a layer (L3) composed of at least one kind selected from a polar vinyl-based plastic, an aromatic vinyl-based polymer, polyester, polyamide, polycarbonate, an engineering plastic, a bio-based polymer, a thermoplastic elastomer, a natural or synthetic fiber and a metal are laminated in the order of layer (L1)/layer (L2)/layer (L3).

A preferred embodiment of the present invention is a laminated structure having at least part of a structure in which a layer (L1) comprising an olefinic polymer as a main constitutional unit, a layer (L2) comprising the olefinic block polymer (A2) composed of a polyolefin segment [$S_1$] and a polar polymer segment [$S_2$] and a layer (L3) composed of at least one kind selected from a polar vinyl-based plastic, polyester, polyamide, polycarbonate, an engineering plastic, a bio-based polymer, a thermoplastic elastomer, a natural or synthetic fiber and a metal are laminated in the order of layer (L1)/layer (L2)/layer (L3). Hereinafter, there will be explained the components constituting the layer (L1), the layer (L2) and the layer (L3) in detail in this order and a laminated structure having at least part of a structure in which the layer (L1), the layer (L2) and the layer (L3) are laminated in this order.

Layer (L1)

The layer (L1) is a layer comprising an olefinic polymer as a main constitutional unit. Meanwhile, in the present invention, the term "main" refers to that the weight ratio is 70% by weight based on the total amount of the composition.

The olefinic polymer used for the laminated structure relating to the present invention is a polymer obtained by (co) polymerizing ethylene and at least one kind of olefin selected from an α-olefin having 3 to 20 carbon atoms. The α-olefin having 3 to 20 carbon atoms may be linear or branched, and may be exemplified, for example, by propylene, 1-butene, 2-butene, 1-pentene, 3-methyl-1-butene, 1-hexene, 4-methyl-1-pentene, 3-methyl-1-pentene, 1-octene, 1-decene, 1-dodecene, 1-tetradecene, 1-hexadecene, 1-octadecene, 1-eicocene and the like. There may be specifically mentioned a homopolyolefin such as polyethylene, homopropylene, poly(4-methyl-1-pentene), poly(1-hexene) and the like; a block polypropylene such as an ethylene-propylene block copolymer and the like; an olefinic copolymer such as an ethylene-propylene copolymer, an ethylene-butene copolymer, an ethylene-propylene-butene copolymer and the like; a composition composed of two or more kinds thereof; and others. In addition, when the olefinic polymer has stereoregularity, it may be either a syndiotactic polyolefin or an isotactic polyolefin. Further, the layer (L1) may contain a well-known additive which is typically added to an olefinic polymer, for example, an inorganic filler such as talc, silica, mica, clay, glass fiber and the like; dye and pigment; an antioxidant; a processing stabilizer; a weather resisting agent; a heat resistant agent; a light resisting agent; a nucleating agent; a lubricating agent; a mold releasing agent; a flame retardant; an antistatic agent; a coloring agent; an ultraviolet absorber; and the like, if needed.

Layer (L2)

The layer (L2) is a polymer layer which functions as an adhesive layer for bonding the layer (L1) and layer (L3). The layer (L2) is a layer comprising the olefinic block polymer composed of the block (a) and the block (b), preferably a layer composed of the resin composition (C) comprising the polyolefin (A1) and the olefinic block polymer (A2) and especially preferably a layer composed of the resin composition (C) constituted by the polyolefin (A1) and the olefinic block polymer (A2).

The olefinic block polymer (A2), which is preferably used for a laminated structure relating to the present invention, is an olefinic block polymer having the block (a) (polyolefin segment [$S_1$]) and the block (b) (polar polymer segment [$S_2$]) and is roughly classified into an olefinic block polymer ($A2_1$) and an olefinic block polymer ($A2_2$) by the bonding type between [$S_1$] and [$S_2$]. The olefinic block polymer ($A2_1$) has a skeleton represented by the following schematic formula (i) and is a block polymer having a structure in which a carbon atom in the [$S_1$] and a carbon atom in the [S2] are directly bonded. The olefinic block polymer ($A2_2$) has a structure (schematic formula (ii)) in which a carbon atom in the [$S_1$] and a carbon atom in the [$S_2$] are bonded via a hetero atom or a bonding group containing a hetero atom. The two structures are schematically shown below. Hereinafter, the characteristics of the olefinic block polymer ($A2_1$) and the olefinic block polymer ($A2_2$) will be explained mainly from the viewpoint of the constituent and production method.

$$[S_1]-[S_2] \quad \ldots \text{ (i)}$$

$$[S_1]-Q-[S_2] \quad \ldots \text{ (ii)}$$

(In the formula (ii), Q represents a hetero atom or a bonding group containing a hetero atom.)

Olefinic block polymer ($A2_1$)

- Polyolefin Segment [$S_1$]

In the olefinic block polymer ($A2_1$), the polyolefin segment [$S_1$] preferably is a segment having a chemical structural formula in which halogen radicals are eliminated from a halogenated polyolefin [$S'_1$] obtained by halogenating a polyolefin, in terms of the chemical structure. The halogenated polyolefin [$S_1$'] is usually obtained by halogenating a polyolefin [$S''_1$] having a molecular weight distribution (Mw/Mn) of 1.5 or more.

The polyolefin [$S''_1$] is a polyolefin composed of repeating units derived from an olefin having 2 to 20 carbon atoms and specifically is a homopolymer or random copolymer of an olefin selected from an olefin having 2 to 20 carbon atoms. When the polyolefin has stereoregularity, it may be either an isotactic polyolefin or a syndiotactic polyolefin. The olefin having 2 to 20 carbon atoms may be exemplified, for example, by a linear or branched α-olefin, a cyclic olefin and an aromatic vinyl compound.

The linear α-olefin may be specifically exemplified, for example, by an α-olefin having 2 to 20 carbon atoms and preferably having 2 to 10 carbon atoms such as ethylene, propylene, 1-butene, 2-butene, 1-pentene, 1-hexene, 1-octene, 1-decene, 1-dodecene, 1-tetradecene, 1-hexadecene, 1-octadecene, 1-eicocene and the like.

The branched α-olefin may be specifically exemplified, for example, by an α-olefin having 4 to 20 carbon atoms and preferably having 5 to 10 carbon atoms such as 3-methyl-1-butene, 4-methyl-1-pentene, 3-methyl-1-pentene, 3-ethyl-1-pentene, 4,4-dimethyl-1-pentene, 4-methyl-1-hexene, 4,4-dimethyl-1-hexene, 4-ethyl-1-hexene, 3-ethyl-1-hexene and the like.

The cyclic olefin may be exemplified by a cyclic olefin having 3 to 20 carbon atoms and preferably having 3 to 10 carbon atoms such as cyclopentene, cycloheptene, norbornene, 5-methyl-2-norbornene, tetracyclododecene, vinyl cyclohexane and the like.

The GPC molecular weight profile of the polyolefin [$S_1$''] is substantially the same as that of the polyolefin segment [$S_1$], and the polyolefin [$S_1$''] has an weight average molecular weight (Mw) in a range of typically 1,000 to 1000,000, more preferably 5,000 to 400,000 and further more preferably 10,000 to 300,000.

In addition, the polyolefin [$S_1$''] and the polyolefin segment [$S_1$] have a molecular weight distribution (Mw/Mn) of 1 to 10, preferably 1.5 to 8, more preferably 1.6 to 7 and further more preferably 1.7 to 5, particularly preferably 1.8

to 5, as measured by GPC.

The polyolefin segment [$S_1$] preferably is a homopolymer or copolymer containing at least one kind of α-olefin having 3 or more carbon atoms or a copolymer of ethylene and a cyclic olefin. In addition, it is more preferable that the polyolefin segment [$S_1$] has the stereoregularity due to an α-olefin component having 3 or more carbon atoms, and it is especially preferable that the polyolefin segment [$S_1$] exhibits isotacticity with high stereoregularity. Among these segments, the polyolefin segment [$S_1$] preferably is a crystalline polyolefin unit having an endothermic peak due to the melting point (Tm) measured by DSC of 50˚C or higher, preferably 60 to 200˚C, more preferably 70 to 180˚C and especially preferably 100 to 180˚C.

The crystalline polyolefin having these properties is a polyethylene or a polyolefin exhibiting high stereoregularity. Among polyethylenes, the amount of copolymerization of the α-olefin component having 3 or more carbon atoms is preferably 0 to 10 mol % and more preferably 0 to 7 mol%. Among polyolefins having high crystallinity and high stereoregularity, preferred are a propylene polymer having high stereoregularity in which the amount of copolymerization of the α-olefin having 4 or more carbon atoms is 0 to 10 mol % and a propylene polymer having high stereoregularity in which the amount of copolymerization of the α-olefin having 4 or more carbon atoms is 0 to 7 mol %, and more preferred is a propylene homopolymer having high stereoregularity.

The polyolefin [$S_1$''], which is used as a precursor of the polyolefin segment [$S_1$], is produced in the presence of a conventionally well-known olefin polymerization catalyst. The conventionally well-known olefin polymerization catalyst includes a $TiCl_3$-based catalyst, a $MgCl_2$-supported $TiCl_4$-based catalyst, a chromium-based catalyst, a metallocene-based catalyst, a post-metallocene-based catalyst and the like, and a $MgCl_2$-supported $TiCl_4$-based catalyst or a metallocene-based catalyst is preferably used.

The halogenated polyolefin [$S_1$'] may be produced by a halogenation method in which the above-mentioned polyolefin [$S_1$''] is halogenated using a well-known halogenating agent. The halogenating agent includes the compounds exemplified in the production method of the halogenated polyolefin (a'). In addition, in the reaction with the halogenating agent, there may be added an initiator represented by benzoyl peroxide, di-tert-butyl peroxide, lauroyl peroxide, acetyl peroxide, diisopropyl dicarbonate peroxide, cumene hydroperoxide, tert-butyl hydroperoxide, dicumyl peroxide, azobisisobutyronitrile, azobis-2,4-dimethylvaleronitrile, azobiscyclohexane carbonitrile, dimethyl azobisisobutyrate radical and the like, if needed, in order to promote the reaction. The halogenated polyolefin [$S_1$'] thus obtained has a halogen content of typically 0.01 to 70% by weight, preferably 0.02 to 50% by weight and more preferably 0.05 to 30% by weight. In addition, the halogen atom content present in the halogenated polyolefin [$S_1$'] may be measured, for example, by a method such as elemental analysis, ion chromatography and the like. Further, the content of the carbon-carbon double bond present in the halogenated polyolefin [$S_1$'] may be measured, for example, by a method such as infrared spectroscopy, nuclear magnetic resonance spectrometry (NMR) and the like. In addition, the halogen atom present at the allyl position of a carbon-carbon double bond may be identified and quantified, for example, by NMR. As a specific example of identifying a halogen atom present at the allyl position, for example, in proton NMR of brominated polypropylene using deuterated ortho-dichlorobenzene as a solvent, signals from the carbon-carbon double bond are observed typically at δ of 4.5 to 6.0 ppm, and those assigned to a methylene group and a methine group at the allyl position to which a bromine atom is bonded are typically observed at δ of 3.5 to 4.5 ppm. When a bromine atom is introduced to a methylene group and a methine group at a position other than an allyl position, the signals are typically observed at δ of 3.0 to 3.5 ppm, hence it is easily identified whether a bromine atom is present at the allyl position or not. Further, for example, proton-proton two-dimensional NMR (HH-COSY) may be used to identify the correlation between the signals from the carbon-carbon double bond and signals of the methylene group and methine group to which a bromine atom is bonded.

The halogenated polyolefin [$S_1$'] thus obtained has a structure in which at least one constitutional unit selected from constitutional units represented by the following general formulas (I) to (III) is connected to the terminal of the polymer main chain and/or a structure in which at least one constitutional unit selected from constitutional units represented by the following general formulas (IV) to (VII) is inserted in the polymer main chain.

In the halogenated polyolefin [$S_1$'], the polar polymer segment [$S_2$] may be introduced by polymerizing a hetero element-containing polymerizable monomer by using a carbon-halogen bond present at the α-position of the carbon-carbon double bond or a structure in which plural halogens are bonded to one carbon atom as an initiator structure. The average number of the introduced halogen atoms is preferably 0.3 to 10, more preferably 0.5 to 8 and further more preferably 0.7 to 5, from the viewpoint of fluidity and adhesion performance.

The average number N of introduced halogens per one polymer chain is determined as follows. When the number average molecular weight determined by GPC is Mn, the average molecular weight of an introduced monomer determined from $^1$H-NMR is Fw(ave) and the molar content to the total monomer chain unit of a halogen group is n (mol %), the average number of introduced halogens N (unit/chain) per one polymer chain is determined by the following equation.

$$N=n\times Mn/[Fw(ave)\times 100]$$

• Polar polymer segment [$S_2$]

The polar polymer segment [$S_2$] constituting the olefinic block polymer (A2) is a homopolymer or a copolymer of one or more kinds of monomers selected from radically polymerizable monomers. The radically polymerizable monomer used in the present invention specifically includes the same radically polymerizable monomers as those exemplified in the explanation of the block (b). These organic compounds may be used alone or in a combination of two or more kinds.

The polar polymer segment [$S_2$] preferably includes a polymer obtained by (co) polymerizing one or two or more monomers selected from (meth) acrylic acid and a derivative thereof, (meth)acrylonitrile, styrene and a derivative thereof, (meth)acrylamide and a derivative thereof, maleic acid and a derivative thereof, maleimide and a derivative thereof and vinyl esters, conjugated dienes and halogen-containing olefins, and more preferably includes a polymer obtained by (co)polymerizing one or two or more monomers selected from (meth) acrylic acid and a derivative thereof, (meth)acrylonitrile, styrene and a derivative thereof, and further more preferably includes a homopolymer or a copolymer of a (meth)acrylate ester, styrene, (meth)acrylamide, (meth)acrylonitrile and (meth) acrylic acid.

The polar polymer segment [$S_2$] in the olefinic block polymer ($A2_1$) in the present invention has a number average molecular weight of preferably from 1,000 to 500,000 and more preferably from 3,000 to 300,000. If the molecular weight is larger than this range, the fluidity is decreased and the moldability is deteriorated. If the molecular weight is smaller than this range, the adhesion properties are decreased.

In the laminated structure of the present invention, the polar polymer segment [$S_2$] in the olefinic block polymer ($A2_1$) preferably is a polymer of a hetero element-containing polymerizable monomer having a solubility parameter in a range of 18 to 25 (J/m), preferably in a range of 18 to 24 (J/m), more preferably in a range of 18.2 to 22 (J/m) and further more preferably in a range of 18.4 to 20 (J/m), from the viewpoint of increasing the adhesion strength between layer (L1) and layer (L2) and improving the plasticizer-retention ability or because of improving the solubility and dispersibility to components other than the olefinic block polymer (A2) in the layer (L2).

The solubility parameter of the polar polymer segment [$S_2$] may be calculated from the composition of copolymer constituting the polar polymer segment [$S_2$]. In addition, the solubility parameter in the present invention was calculated by entering the composition of the polar polymer segment [$S_2$] into CHEOPS Ver.4.0 manufactured by Million Zillion software, Inc.

In the resin composition (C), the composition of the polar polymer segment [$S_2$] may be calculated by analyzing the chloroform-insoluble component at room temperature by $^1$H-NMR.

The polar polymer segment [$S_2$] in the olefinic block polymer (A2) preferably includes at least one kind of a radically polymerizable monomer selected from the group consisting of an isocyanate group, a carboxyl group, an amide group, a hydroxyl group, an acid anhydride group, an epoxy group, an oxazoline group, a maleimide group, an amine group, an imine group and an ether group, from the viewpoint of the adhesion strength.

The polar polymer segment [$S_2$] in the olefinic block polymer ($A2_1$) has a glass transition temperature (Tg) of preferably 25˚C or lower, more preferably -60 to 25˚C and further more preferably -50 to 20˚C, as measured by differential scanning calorimetry (DSC), from the viewpoint of the adhesion strength.

As the radically polymerizable monomer containing a carboxyl group, there may be mentioned acrylic acid, methacrylic acid, maleic acid, fumaric acid, tetrahydrophthalic acid, itaconic acid, citraconic acid, crotonic acid, isocrotonic acid, norbornene dicarboxylic acid, bicyclo[2.2.1]hept-2-ene-5,6-dicarboxylic acid and the like. As the derivative of the radically polymerizable monomer containing a carboxyl group, there may be mentioned an acid anhydride of the monomer and a derivative of acid halide, amide, imide, ester and the like, and there may be specifically mentioned maleyl chloride, maleimide, maleic anhydride, itaconic anhydride, citraconic anhydride, tetrahydrophthalic anhydride, bicyclo[2.2.1]hept-2-ene-5,6-dicarboxylic anhydride, dimethyl maleate, monomethyl maleate, diethyl maleate, diethyl fumarate, dimethyl itaconate, diethyl citraconate, dimethyl tetrahydrophthalate, dimethyl bicyclo[2.2.1]hept-2-ene-5,6-dicarboxylate, hydroxyethyl (meth)acrylate, hydroxypropyl (meth) acrylate, glycidyl (meth) acrylate, aminoethyl methacrylate, methyl (meth)acrylate, ethyl(meth)acrylate, aminopropyl methacrylate and the like.

As the radically polymerizable monomer containing a hydroxyl group, there may be mentioned a (meth) acrylic acid ester such as hydroxyethyl (meth)acrylate, 2-hydroxypropyl (meth)acrylate, 3-hydroxypropyl (meth)acrylate, 2-hydroxy-3-phenoxy-propyl (meth)acrylate, 3-chloro-2-hydroxypropyl (meth)acrylate, glycerol mono(meth)acrylate, pentaerythritol mono(meth)acrylate, trimethylolpropane mono(meth)acrylate, tetramethylolethane mono (meth) acrylate, butanediol mono (meth) acrylate, polyethylene glycol mono(meth)acrylate, 2-(6-hydroxyhexanoyloxy)ethyl acrylate and the like; and 10-undecen-1-ol, 1-octen-3-ol, 2-methanol norbornene, hydroxystyrene, hydroxyethyl vinyl ether, hydroxybutyl vinyl ether, N-methylolacrylamide, 2-(meth)acryloyloxyethyl acid phosphate, glycerol monoallyl ether, allyl alcohol, allyloxyethanol, 2-butene-1,4-diol, glycerol monoalcohol and the like.

As the radically polymerizable monomer containing at least one group selected from oxazoline group, maleimide group, amine group and imine group, there may be mentioned, for example, an amino group-containing ethylenically unsaturated compound having an ethylenic double bond and an amino group. As the amino group-containing ethylenically unsaturated compound, there may be specifically mentioned alkyl ester-based derivatives of acrylic acid or methacrylic acid such as aminoethyl (meth) acrylate, propylaminoethyl (meth)acrylate, dimethylaminoethyl methacrylate, aminopropyl (meth)acrylate, phenylaminoethyl methacrylate, cyclohexylaminoethyl methacrylate and the like; vinylamine-based derivatives such as N-vinyldiethylamine, N-acetylvinylamine and the like; an allylamine-based derivative such as allylamine, methacrylamine, N-methylacrylamine, N,N-dimethylacrylamide, N,N-dimethylaminopropylacrylamide and the like; a acrylamide-based derivative, such as acrylamide, N-methylacrylamide and the like; aminostyrenes such as p-aminostyrene and the like; 6-aminohexyl succinimide, 2-aminoethyl succinimide and the like.

The radically polymerizable monomer containing an epoxy group is a monomer having at least one or more polymerizable unsaturated bonds and epoxy groups in one molecule. As the radically polymerizable monomer containing an epoxy group, there may be specifically mentioned glycidyl acrylate; glycidyl methacrylate; a mono- and alkyl-glycidyl ester of dicarboxylic acid (number of carbon atoms of the alkyl group is 1 to 12 in the case of monoglycidyl ester) such as a mono- and di-glycidyl ester of maleic acid, a mono- and di-glycidyl ester of fumaric acid, a mono- and di-glycidyl ester of crotonic acid, a mono- and di-glycidyl ester of tetrahydrophthalic acid, a mono- and di-glycidyl ester of itaconic acid, a mono- and di-glycidyl ester of butenetricarboxylic acid, a mono- and di-glycidyl ester of citraconic acid, a mono- and di-glycidyl ester of endo-cis-bicyclo[2.2.1]hept-5-ene-2,3-dicarboxylic acid (nadic acid™), a mono- and di-glycidyl ester of endo-cis-bicyclo[2.2.1]hept-5-ene-2-methyl-2,3- dicarboxylic acid (methylnadic acid™), a mono- and di-glycidyl ester of allylsuccinic acid and the like; an alkyl diglycidyl ester of p-styrene carboxylic acid, allyl glycidyl ether, 2-methylallyl glycidyl ether, styrene-p-glycidyl ether, 3,4-epoxy-1-butene, 3,4-epoxy-3-methyl-1-butene, 3,4-epoxy-1-pentene, 3,4-epoxy-3-methyl-1-pentene, 5,6-epoxy-1-hexene, vinylcyclohexene monoxide and the like.

The olefinic block polymer ($A2_1$) may be produced by radically polymerizing one or more kinds of monomers selected from the above-mentioned radically polymerizable monomers by using the above-mentioned halogenated polyolefin [$S_1$'] as a macroinitiator. The radical polymerization method is not particularly limited, but, usually, the atom transfer radical polymerization is preferably used. In addition, the macroinitiator of the present invention is a polymer having the initiating ability of the atom transfer radical polymerization and represents a polymer having a position which is an initiating point of the atom transfer radical polymerization in the molecular chain.

The atom transfer radical polymerization in the present invention is one of living radical polymerizations and is a method for radically polymerizing a radically polymerizable monomer using an organic halide or a halogenated sulfonyl compound as an initiator and a metal complex containing a transition metal as a central metal as a catalyst. (For example, there are disclosed related information in Matyj aszewski et al. , Chem. Rev. , 101, 2921 (2001), WO 96/30421 pamphlet, WO 97/18247 pamphlet, WO 98/01480 pamphlet, WO 98/40415 pamphlet, WO 00/156795 pamphlet and the like.) The initiator used includes, for example, an organic halide and a halogenated sulfonyl compound, and especially preferred are a carbon-halogen bond present at an $\alpha$-position of a carbon-carbon double bond or a carbon-oxygen double bond, or a structure in which plural halogens are bonded to one carbon atom as an initiator structure. In the halogenated polyolefin [$S_1$'], there may be used a carbon-halogen bond present at an $\alpha$-position of a carbon-carbon double bond or a structure in which plural halogens are bonded to one carbon atom as an initiator structure.

As the method for producing the olefinic block polymer ($A2_1$) by using the halogenated polyolefin ($S_1$') as a macroinitiator, a radically polymerizable monomer is basically subjected to atom transfer radical polymerization using a metal complex containing a transition metal as a central metal as a polymerization catalyst in the presence of the above-mentioned modified polyolefin ($S_1$').

The transition metal complex used as a polymerization catalyst is not particularly limited, but preferred is a metal complex containing an element of Group 7, Group 8, Group 9, Group 10 or Group 11 of the periodic table as a central metal. As the more preferred ones, there may be mentioned a complex of zero valent copper, monovalent copper, divalent ruthenium, divalent iron or divalent nickel. Among them, a complex of copper is preferable. The monovalent copper compound is specifically exemplified by cuprous chloride, cuprous bromide, cuprous iodide, cuprous cyanide, cuprous oxide, cuprous perchlorate and the like. When the copper compound is used, there is added as a ligand 2,2'-bipyridyl or a derivative thereof, 1,10-phenanthroline or a derivative thereof, or a polyamine such as tetramethylethylenediamine, pentamethyldiethylenetriamine or hexamethyltris(2-aminoethyl)amine and the like, and others in order to enhance the catalyst activity. In addition, a tristriphenylphosphine complex of divalent ruthenium chloride ($RuCl_2(PPh_3)_3$) is also preferable as a catalyst. When the ruthenium compound is used as a catalyst, aluminum alkoxides are added as an activating agent. Further, preferred are a bistriphenylphosphine complex of divalent iron ($FeCl_2(PPh_3)_2$), a bistriphenylphosphine complex of divalent nickel ($NiCl_2(PPh_3)_2$), and a bistributylphosphine complex of divalent nickel ($NiBr_2(PBu_3)_2$) as a catalyst.

The atom transfer radical polymerization method is not particularly limited and there may be applied bulk polymerization, solution polymerization, suspension polymerization, emulsion polymerization, bulk/suspension polymerization and the like. As a solvent used in the radical polymerization, any solvent may be used as long as it does not

inhibit the reaction, and there may be mentioned, for example, an aromatic hydrocarbon-based solvent such as benzene, toluene, xylene and the like; an aliphatic hydrocarbon-based solvent such as pentane, hexane, heptane, octane, nonane, decane and the like; an alicyclic hydrocarbon-based solvent such as cyclohexane, methylcyclohexane and decahydronaphthalene; a chlorinated hydrocarbon-based solvent such as chlorobenzene, dichlorobenzene, trichlorobenzene, methylene chloride, chloroform, carbon tetrachloride, tetrachloroethylene and the like; an alcohol-based solvent such as methanol, ethanol, n-propanol, iso-propanol, n-butanol, sec-butanol, tert-butanol and the like; a ketone-based solvent such as acetone, methyl ethyl ketone, methyl isobutyl ketone and the like; an ester-based solvent such as ethyl acetate, dimethyl phthalate and the like; an ether-based solvent such as dimethyl ether, diethyl ether, di-n-amyl ether, tetrahydrofuran and dioxyanisole; and the like. In addition, the reaction may be performed by suspension polymerization or emulsion polymerization using water as a solvent. These solvents may be used alone or in a combination of two or more kinds. In addition, although it is preferable that the reaction liquid forms a uniform phase by using these solvents, there is no problem even if plural nonuniform phases are formed.

The reaction temperature is not limited as long as the radical polymerization reaction proceeds and may be varied depending on a polymerization degree of the polymer desired, and type and amount of the radical polymerization initiator and a solvent used. The reaction temperature is typically -100 to 250˚C, preferably -50 to 180˚C and more preferably 0 to 160˚C. The reaction may be performed under reduced pressure, atomosphric pressure or pressurized conditions depending on the case. The above-mentioned polymerization reaction is preferably performed under an inert gas atmosphere such as nitrogen or argon or the like.

The olefinic block polymer ($A2_1$) produced by the above methods is isolated by using a well-known method such as distillating off the solvent used for polymerization and unreacted monomers or reprecipitation by addition of a non-solvent or the like. Further, a by-produced homoradical polymer may be removed by treating the resulting polymer with a polar solvent such as acetone or THF or the like using a Soxhlet extractor.

Olefinic block polymer ($A2_2$)

In the olefinic block polymer ($A2_2$) represented by the schematic formula (ii), the constituents of the polyolefin segment [$S_1$] and the polar polymer segment [$S_2$] are the same as those of [$S_1$] and [$S_2$] in the olefinic block polymer ($A2_1$) described individually. The present applicant has filed the embodiment of Q in the schematic formula (ii) and the representative production method of the olefinic block polymer ($A2_2$) constituted from [$S_1$], [$S_2$] and Q, and the method which has been already disclosed in Japanese Patent Laid-Open Publication No. 2004-131620 may be used without any limitation. The olefinic block polymer ($A2_2$) typically contains at least one kind of constitutional unit selected from a constitutional unit represented by the following general formula [C-1], a constitutional unit represented by the following general formula [C-2] and a constitutional unit represented by the following general formula [C-3].

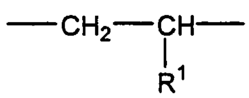

[C-1]

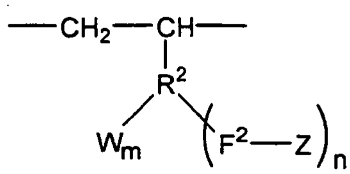

[C-2]

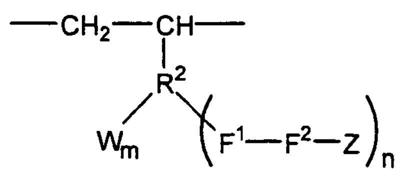

[C-3]

$R^1$ in the general formula [C-1] represents a hydrogen atom or a linear or branched aliphatic hydrocarbon group having 1 to 18 carbon atoms, $R^2$s in the general formulas [C-2] and [C-3] represent a linear or branched aliphatic or aromatic hydrocarbon group having 1 to 18 carbon atoms, $F^1$ in the general formula [C-3] represents a hetero atom or a group containing a hetero atom, $F^2$ in the general formulas [C-2] and [C-3] represents a group containing an unsaturated group, Z represents a polymer segment obtained by radical polymerization, W represents a group selected from an alcoholic hydroxyl group, a phenolic hydroxyl group, a carboxylic acid group, a carboxylic acid ester group, an acid anhydride group, an amino group, an epoxy group, a siloxy group and a mercapto group, n is an integer of 1 to 3, m is 0, 1 or 2, Z may be the same or different from each other when n is 2 or 3, W may be the same or different from each other when m is 2, W may be bonded to the same or different atom of $R^1$ in a cyclic structure.

In addition, in the virtual case where the olefinic block polymer ($A2_2$) is constituted only by the [C-2], the main chain portion ($-CH_2-CH-$) in the skeleton [C-2] corresponds to [$S_1$] in the schematic formula (ii) described above, Z in the skeleton [C-2] corresponds to [$S_2$] and the other remaining portion ($-R^2(W_m)-F^2-$) corresponds to Q of the schematic formula.

The polyolefin segment $[S_1]$ and the polar polymer segment $[S_2]$ in the olefinic block polymer $(A2_2)$ have a number average molecular weight in a range of 1,000 to 1,000,000 and 1,000 to 500,000, respectively, like the olefinic block polymer $(A2_1)$.

In addition, if the block (b) in the olefinic block polymer $(A2_2)$ has an average number of side chain of typically 0.5 to 5 per one molecular chain of the block (a), preferably 0.5 to 3 and more preferably 0. 7 to 2, a resin composition excellent in fluidity and adhesion performance is provided.

As mentioned above, the olefinic block polymers $(A2_1)$ and $(A2_2)$ were explained in detail.

In the case of using the above-mentioned olefinic block polymer (A2), preferably the olefinic block polymer $(A2_1)$ and/or the olefinic block polymer $(A2_2)$ for the layer (L2), the ratio of the polar polymer segment $[S_2]$ in the olefinic block polymer (A2), $[S_2]/([S_1]+[S_2])$ (% by weight) is preferably 1 to 60%, more preferably 2 to 30% and especially preferably 3 to 15%. If the ration of the polar polymer segment $[S_2]$ is within this range, the solubility to the olefinic block polymer (A2) in the layer (L2) is increased and the adhesion strength between the layer (L2) and the layer (L3) is increased because of the high solubility and reactivity to the layer (L3).

The layer (L2) constituting a laminated structure of the present invention is a layer composed of the above-mentioned olefinic block polymer (A2), preferably the olefinic block polymer $(A2_1)$ and/or the olefinic block polymer $(A2_2)$. The layer (L2) usually comprises the olefinic block polymer (A2) as an essential constituent and is constituted by one or more kinds selected from a polyolefin [R] that is homologous with the above-mentioned polyolefin segment $[S_1]$ and a polar polymer [Q] that is homologous with the above-mentioned polar polymer segment $[S_2]$. In addition, the term "homologous" is defined as a polyolefin or a polar polymer, which individually has a chemical structure in which a carbon atom bonded to the polar polymer segment $[S_2]$ in the polyolefin segment $[S_1]$ or a carbon atom bonded to the polyolefin segment $[S_1]$ in the polar polymer segment $[S_2]$, respectively, is replaced by a hydrogen atom. However, in the present invention, the above-mentioned polyolefin [R] includes not only a polyolefin having a chemical structure in which a carbon atom bonded to the polar polymer segment $[S_2]$ is replaced by a hydrogen atom but also a polyolefin in which the molecular weight is varied or the introduction ratio of an $\alpha$-olefin is different, and there may be used the olefinic polymers exemplified as the olefinic polymers constituting the above-mentioned layer (L1) without any restrictions. On the other hand, the polar polymer [Q] includes not only a polar polyolefin having a chemical structure in which a carbon atom bonded to the polyolefin segment $[S_1]$ is replaced by a hydrogen atom but also all polyolefins in which the molecular weight is varied or the introduction ratio of a polar monomer is different.

The weight ratio of the olefinic block polymer (A2) is typically 1 to 100% by weight, preferably 1 to 50% by weight and more preferably 1 to 30% by weight, based on the total amount of (A2), [Q] and [R] in the layer (L2).

In addition, if the layer (L2) contains the olefinic block polymer (A2) and the polar polymer [Q] and contains no polyolefin [R] described above, it exhibits a strong adhesion strength between the layer (L2) and the layer (L3) by satisfying the requirement that $[Q]/[S_2]$ (weight ratio), that is, a value obtained by dividing the weight of the component [Q] by the weight of the polar polymer segment $[S_2]$, is less than 0.5, preferably les than 0.4 and more preferably less than 0.3.

Further, the layer (L2) relating to the present invention does not exclude the coexistence of constituents other than (A2), [Q] and [R]. There may be added a resin or an additive other than (A2), [Q] and [R] so long as the objective of the present invention is not impaired. When resins are added as a constituent other than (A2), [Q] and [R] in the resin composition constituting the layer (L2), the resins are added such that the total amount of (A2), [Q] and [R] is 1 to 100% by weight of the layer (L2), preferably 50 to 100% by weight and more preferably 70 to 100% by weight. In addition, the additive component added to the layer (L2) includes an inorganic filler such as talc, silica, mica, clay, glass fiber and the like, dye and pigment, an antioxidant, a processing stabilizer, a weather resisting agent, a heat resistant agent, a light resisting agent, a nucleating agent, a lubricating agent, a mold releasing agent, a flame retardant, an antistatic agent, a coloring agent, an ultraviolet absorber and the like.

As the method for producing a resin composition constituting the layer (L2), a conventionally well-known method may be employed. For example, the resin composition may be obtained by a method of mixing individual component collectively or sequentially by a Henschel mixer, a V-type blender, a ribbon blender, a tumbler blender and the like, or a method of further melt-kneading a mixture obtained by these methods using a single-screw extruder, a double screw extruder, a kneader, a Banbury Mixer and the like followed by granulating or pulverizing the resulting resin aggregate.

Layer (L3)

The layer (L3) is a layer of at least one kind selected from a polar vinyl-based plastic, an aromatic vinyl-based polymer, polyester, polyamide, polycarbonate, an engineering plastic, a bio-based polymer, a thermoplastic elastomer, a natural or synthetic fiber and a metal. When the layer (L3) is constituted by a polar vinyl-based plastic or an aromatic vinyl-based polymer in the present invention, it exhibits excellent adhesion performance between the layers (L2) and (L3).

As the polar vinyl-based plastic used in the layer (L3), there may be specifically exemplified by an acrylic polymer, a vinyl chloride-based polymer, a vinylidene chloride-based polymer, a saponified ethylene-vinyl acetate copolymer and the like.

The aromatic vinyl-based polymer used in the layer (L3) is a polymer obtained by polymerizing a monomer containing an aromatic vinyl monomer as a component. The aromatic vinyl monomer includes styrene, α-methylstyrene and p-methylstyrene. The aromatic vinyl-based polymer may be exemplified by, in addition to an aromatic vinyl homopolymer, an aromatic vinyl polymer containing various rubber polymers such as a butadiene rubber, a styrene-butadiene copolymer, an ethylene-propylene copolymer, an ethylene-propylene-diene copolymer and the like, a styrene-maleic anhydride copolymer, a styrene-methyl methacrylate copolymer, a styrene-acrylonitrile copolymer, a styrene-acrylonitrile-butadiene copolymer, a styrene-acrylonitrile-acrylate ester copolymer and the like.

The polyester used in the layer (L3) is not particularly limited as long as it has an ester bond in the polymer main chain and may be heat melted. As the polyester which may be used in the present invention, there may be mentioned, for example, a polyester obtained by the reaction of a dicarboxylic acid component with a diol component, a polyester (polylactone) obtained by ring-opening polymerization of a lactone, a polyester obtained by condensation polymerization of a hydroxycarboxylic acid or its ester-forming derivative and the like, and one or two or more kinds of these esters may be used. Among them, in the present invention, preferably used is a polyester which is formed substantially from a dicarboxylic acid component and a diol component. As the above-mentioned dicarboxylic acid component which is a raw material of polyester, there may be specifically mentioned an aromatic dicarboxylic acid such as terephthalic acid, phthalic acid, isophthalic acid, naphthalenedicarboxylic acid, bis(p-carboxyphenyl)methane, anthracenedicarboxylic acid, 4,4'-diphenylether dicarboxylic acid, sodium 5-sulfoisophthalate and the like; an aliphatic dicarboxylic acid such as glutaric acid, adipic acid, pimelic acid, suberic acid, sebacic acid, azelaic acid, dodecanedioic acid and the like; an alicyclic dicarboxylic acid such as cyclohexanedicarboxylic acid and the like; an unsaturated aliphatic dicarboxylic acid such as maleic acid, fumaric acid, itaconic acid and the like; a halogen-containing dicarboxylic acid such as tetrabromophthalic acid and the like; an ester-forming derivative thereof; and the like.

In addition, as the above-mentioned diol component which is a raw material of polyester, there may be mentioned an aliphatic diol such as ethylene glycol, propylene glycol, 1,4-butanediol, 1,5-pentanediol, neopentyl glycol, 1,6-hexanediol, 1,7-heptanediol, 1,8-octanediol, 1,9-nonanediol, 1,10-decanediol, 3-methyl-1,5-pentanediol, 2-methyl-1,8-octanediol and the like; an alicyclic diol such as cyclohexanedimethanol, cyclohexanediol and the like; a diol derived from a polyalkylene glycol having a molecular weight of 6,000 or less such as diethylene glycol, polyethylene glycol, poly-1,3-propylene glycol, polytetramethylene glycol; and the like.

Further, the polyester may contain one or two or more kinds of constitutional units derived from a tri- or higher-functional compound, for example, such as glycerin, trimethylolpropane, pentaerythritol, trimellitic acid, pyromellitic acid and the like, where necessary as long as they are in a small amount.

The polycarbonate used in the layer (L3) includes a polycarbonate obtained by reaction of a substantially dihydroxy compound with phosgene, a diester carbonate or a halogen formate. In this case, as the dihydroxy compound which is a raw material, there may be mentioned, for example, an aromatic dihydroxy compound such as 2,2-bis(4-hydroxyphenyl)propane (hereinafter may be referred to as "bisphenol A"), tetramethyl bisphenol A, tetrabromo bisphenol A, bis(4-hydroxyphenyl)-p-diisopropylbenzene, hydroquinone, resorcinol, 4,4'-dihydroxyphenyl and the like. Among these, bisphenol A is preferred. In addition, the polycarbonate may contain one or two or more kinds of constitutional units derived from a tri- or higher-functional polyhydroxy compound, where necessary as long as they are in a small amount.

The polyamide used in the layer (L3) is not particularly limited as long as it has an amide bond in the polymer main chain and may be heat melted. As the polyamide which may be used in the present invention, there may be mentioned, for example, a polyamide (polylactam) obtained by ring-opening polymerization of lactam having three rings or more, a polyamide obtained by condensation polymerization of ω-amino acid, a polyamide obtained by condensation polymerization of a dibasic acid with a diamine and the like, and there may be used one or two or more kinds of these polyamides.

As the lactam which is a raw material of polyamide, there may be specifically mentioned ε-caprolactam, enantholactam, capryllactam, laurylactam, α-pyrrolidone and the like. In addition, as the above-mentioned ω-amino acid which is a raw material of the polyamide, there may be specifically mentioned 6-aminocaproic acid, 7-aminoheptanoic acid, 9-aminononanoic acid, 11-aminoundecanoic acid and the like. The above-mentioned dibasic acid specifically includes an aliphatic dicarboxylic acid such as malonic acid, dimethylmalonic acid, succinic acid, 3,3-diethylsuccinic acid, glutaric acid, 2,2-dimethylglutaric acid, adipic acid, sebacic acid, suberic acid and the like; an alicyclic dicarboxylic acid such as 1,3-cyclopentane dicarboxylic acid, 1,4-cyclohexane dicarboxylic acid and the like; an aromatic dicarboxylic acid such as terephthalic acid, isophthalic acid, 2,6-naphthalene dicarboxylic acid, 2,7-naphthalene dicarboxylic acid, 1,4-naphthalene dicarboxylic acid, 1,4-phenylene dioxydiacetic acid, 1,3-phenylene dioxydiacetic acid, diphenic acid, 4,4'-oxydibenzoic acid, diphenylmethane-4,4'-dicarboxylic acid, diphenylsulfone-4,4'-dicarboxylic acid, 4,4'-diphenyldicarboxylic acid and the like; and others. In addition, the diamine specifically includes an aliphatic diamine such as ethylenediamine, propylenediamine, 1,4-butanediamine, 1,6-hexanediamine, 1,8-octanediamine, 1,9-nonanediamine, 1,10-decanediamine, 1,12-dodecanediamine, 2-methyl-1,5-pentanediamine, 3-methyl-1,5-pentanediamine and the like,

an alicyclic diamine such as cyclohexanediamine, methylcyclohexanediamine, isohorone diamine and the like; an aromatic diamine such as p-phenylenediamine, m-phenylenediamine, xylylenediamine, xylenediamine, 4,4'-diaminodiphenylmethane, 4,4'-diaminodiphenylsulfone, 4,4'-diaminodiphenyl ether and the like.

The acrylic polymer used in the layer (L3) includes an acrylic polymer mainly composed of a constitutional unit derived from a (meth) acrylic acid ester. In this case, the ratio of the constitutional unit derived from a (meth)acrylic acid ester in an acrylic polymer is preferably 50% by weight or more and more preferably 80% by weight or more. As the (meth) acrylic acid ester constituting an acrylic polymer, there may be mentioned an alkyl ester of (meth)acrylic acid, for example, methyl (meth)acrylate, ethyl (meth)acrylate, propyl (meth)acrylate, butyl (meth) acrylate, 2-ethylhexyl (meth) acrylate and the like, and the acrylic polymer may contain a constitutional unit derived from one or two or more kinds of these (meth) acrylic acid esters. In addition, the acrylic polymer may contain one or two or more kinds of constitutional units derived from an unsaturated monomer other than a (meth)acrylic acid ester. For example, the methacrylic resin may preferably contain a constitutional unit derived from a cyanated vinyl monomer such as (meth) acrylonitrile and the like at a ratio of 50% by weight or less, and may preferably contain a constitutional unit derived from an aromatic vinyl compound such as styrene, o-methylstyrene, m-methylstyrene, p-methylstyrene, o-chlorostyrene, m-chlorostyrene, p-chlorostyrene and the like at a ratio of 10% by weight or less.

As the vinyl chloride-based polymer used in the layer (L3), there are preferably used a vinyl chloride homopolymer, a copolymer of vinyl chloride with other copolymerizable monomer having a constitutional unit derived from vinyl chloride at a ratio of 70% by weight or more, and one or two or more kinds of these chlorides. If the vinyl chloride-based polymer is a vinyl chloride copolymer, there are preferably used a copolymer of vinyl chloride with one or two or more kinds of copolymerizable monomer such as ethylene, propylene, vinyl acetate, vinyl bromide, vinylidene chloride, acrylonitrile, maleimide and the like. The degree of polymerization of a vinyl chloride-based polymer is not particularly limited, but in general, a polymer having a polymerization degree of 100 to 10,000 is preferably used and a polymer having a polymerization degree of 500 to 6,000 is more preferably used.

As the vinylidene chloride-based polymer used in the polymer layer (L3), a thermoplastic polymer having a constitutional unit derived from vinylidene chloride at a ratio of 50% by weight or more is preferably used and a thermoplastic polymer having a constitutional unit derived from vinylidene chloride at a ratio of 70% by weight or more is more preferably used. If the vinylidene chloride-based polymer is a copolymer of vinylidene chloride with other monomer, there are preferably used a copolymer of vinylidene chloride with one or two or more kinds of other unsaturated monomer such as vinyl chloride, acrylonitrile, acrylic acid ester, acrylic acid and the like. The degree of polymerization of a vinylidene chloride-based polymer is not particularly limited, but in general, a polymer having a polymerization degree of 100 to 10,000 is preferably used and a polymer having a polymerization degree of 500 to 5,000 is more preferably used.

As the saponified ethylene-vinyl acetate copolymer used in the layer (L3), a copolymer having an ethylene content of 20 to 60 mol %, preferably 25 to 60 mol % and having a saponification degree of 95% or higher is preferably used. In addition, with respect to moldability, the saponified ethylene-vinyl acetate copolymer has a melt index of preferably 0.1 to 25 g/10 min (measured at 190˚C, under a load of 2.16 kg) and more preferably 0. 3 to 20 g/10 min, as measured in accordance with ASTM D-1238-65T.

As the representative examples of the engineering plastic used in the layer (L3), there may be mentioned a super engineering plastic such as polyacetal (POM), polyphenylene ether (including modified polyphenylene ether), polysulfone (PSF), polyether sulfone (PES), polyphenylene sulfide, polyallylate (U polymer), polyamideimide, polyether ketone (PEK), polyether ether ketone (PEEK), polyimide (PI), liquid crystal polyester and the like.

The bio-based polymer used in the layer (L3) is a bio-based polymer produced from "biomass" which is a bio-based raw material such as plant and animal. The representative examples include poly-3-hydroxy butyric acid (PHB), polylactic acid, polyglycolic acid, polycaprolactone, polyhydroxybutyrate, or a copolymer thereof, starch, cellulose, chitin and chitosan which are a component of the carapace and the like of crab and shrimp, kenaf, natural rubber and the like.

The natural or synthetic fiber used in the layer (L3) includes glass fiber, carbon fiber, metal fiber, aromatic polyamide fiber, polyaramide fiber, aluminum fiber, silicon carbide fiber, boron fiber, basaltic fiber and the like.

The metal used in the layer (L3) representatively includes a metal material in which aluminum, iron, magnesium, titanium, an alloy thereof and the like are subjected to thermal adhesive surface treatment.

## Laminated structure

In a laminated structure of the present invention, the thickness of each layer is not particularly limited and may be adjusted depending on the type of a material, the whole number of layers in the laminated structure, the applications of the laminated structure and the like. In general, it is preferable that the polymer layer (L1) has a thickness of 10 μm to 5 mm, the polymer layer (L2) has a thickness of 1 μm to 1 mm and the polymer layer (L3) has a thickness of 10 μm to 5 mm, from the viewpoint of the easiness of production, the interlayer adhesion strength and the like of the laminated structure.

In addition, the whole number of layers in the laminated structure of the present invention is not particularly

limited and may be arbitrary, as long as the laminated structure contains a structure in which the layer (L1), the layer (L2) and the layer (L3) are laminated in this order at least in the part thereof. Further, a laminated structure of the present invention may be formed only by the layer (L1), the layer (L2) and the layer (L3), or the laminated structure may have one or two or more layers composed of materials other than the layers (L1) to (L3), together with these three layers.

As the examples of the laminated structure of the present invention, there may be mentioned a three-layer structure composed of the layer (L1)/layer (L2)/layer (L3); a four-layer structure composed of the layer (L3)/layer (L1)/layer(L2)/layer (L3); a five-layer structure composed of the layer (L1)/layer (L2)/layer (L3)/layer (L2)/layer (L1); a five-layer structure composed of the layer (L3)/layer (L2)/layer (L1)/layer (L2)/layer (L3); a seven-layer structure composed of the layer (L3)/layer (L1)/layer(L2)/layer (L3)/layer (L2)/layer (L1)/layer (L3); and the like.

As the method for producing the laminated structure of the present invention, there may be mentioned, for example,

(1) a method of producing a laminated structure by using at least a polymer for the layer (L1), a polymer for the layer (L2) and a polymer or a material for the layer (L3), molding them with melt-coextrusion to form a film, sheet or plate, and subsequently laminating a layer simultaneously with the extrusion molding of each layer;
(2) a method of producing a laminated structure by first producing in advance a molded article such as a film, sheet, plate and the like constituting the layer (L1) and/or a molded article such as a film, sheet, plate and the like constituting the layer (L3), and then, while molding the polymer layer (L2) with melt-extrusion and also molding the one of the layer (L1) and the layer (L3) with melt-extrusion when it has not been molded in advance, integrally laminating the molded article for the layer (L1) and/or the molded article for the layer (L3) produced in advance;
(3) a method of producing a laminated structure by producing a molded article such as a film, sheet, plate and the like constituting the layer (L1) and a molded article such as a film, sheet, plate and the like constituting the layer (L3) in advance and further molding a polymer for the layer (L2) in a form of film or sheet in advance and then sandwiching the film or sheet for the layer (L2) between the molded article for the layer (L1) and the molded article for the layer (L3), followed by melting the film or sheet for the layer (L2) under heating to bond and integrate the layer (L1) and the layer (L3) through the layer (L2);
(4) a method of producing a laminated structure by using at least a polymer for the layer (L1), a polymer for the layer (L2) and a polymer or a material for the layer (L3) and injecting the three kinds of the polymer or material into a die by staggering the timing of injection; and the like.

In any of the cases of the above methods of (1) to (4), since the layer (L1) and the layer (L3) are bonded through the melted layer (L2) and the adhesive layer contains no organic solvents, an intended laminated structure may be obtained without causing problems and troubles such as destruction of natural environment by emission of organic solvents, deterioration of working environments, recovery of solvents and the like. Among these, the above-mentioned coextrusion molding method (1) is preferred because a laminated structure without interlayer peeling may be obtained, since the number of processes is small, the productivity is high and the adhesion strength among the layer (L1), the layer (L2) and the layer (C) is high.

In the case where a laminated structure of the present invention is produced by a coextrusion molding method, it may be produced, for example, by connecting three or more extruders to a single die depending on the number of layers of the laminated structure and then integrally laminating plural polymers inside or outside the die. In this case, there may be used a T-die, a ring die and the like, and the shape and structure of an extruder and a die are not particularly limited.

The laminated structure of the present invention may be used for various applications depending on the nature of the layer (L1), the layer (L2) and the layer (L3), and the like. The laminated structure may be used for various applications such as, for example, packaging materials for food and medical drug; cloth packaging materials; packaging materials for other products; building materials such as wallpapers, decorative laminated sheets and the like; electric insulation films; materials for adhesive films and tapes; marking films; agricultural films; daily sundry goods such as table clothes, rain coats, umbrellas, curtains, covering materials and the like; laminates between metal plates and other materials; and the like.

## INDUTRIAL APPLICABILITY

Since a laminated structure of the present invention has extremely high interlayer adhesion strength and is unlikely to cause the interlayer peeling, it may be used for various applications such as packaging materials for food and medical drug, cloth packaging materials; packaging materials for other products, building materials such as wallpapers, decorative laminated sheets and the like, electric insulation films; materials for adhesive films and tapes, marking films, agricultural films, daily sundry goods such as table clothes, rain coats, umbrellas, curtains, covering materials and the like; laminates between metal plates and other materials, and the like.

## EXAMPLES

Hereinafter, the present invention will be more specifically explained based on Examples, but the present invention is not limited by these Examples.
In the following Examples, individual properties were measured and evaluated by the following methods. In Examples and Comparative Examples, the test methods used for the various evaluations are described below:

(1) MFR

MFR was measured in accordance with ASTM D1238 (230˚C, load: 2.16 kg). However, $MFR_{190}$ is a MFR measured under the conditions of a temperature of 190˚C and a load of 2.16 kg.

(2) Tensile test

The tensile test was carried out according to ASTM D638 by using dumbbell-shaped specimens punched out from a press sheet with a thickness of 1 mm at a span interval of 30 mm and a tensile rate of 30 mm/min at 23˚C. However, in Examples 17 to 27, the tensile test was carried out at a tensile rate of 5 mm/min.

(3) Flexural strength

The flexural strength was measured under the following conditions according to ASTM D790.

<Measurement conditions>

Test specimen: 12.7 mm (width)x3.2 mm (thickness)×127 mm (length)
Flexural rate: 5 mm/min
Flexural span: 100 mm
Thickness of specimen: 1/8 inch.

(4) Izod impact strength (IZ)

The Izod impact strength (IZ) was measured under the following conditions according to ASTM D256.

<Test conditions>

Temperature: 23˚C
Test specimen: 12.7 mm (width)x3.2 mm (thickness)×64 mm (length)
The notch was prepared by machining.

(5) Peeling

The layer peeing conditions of a molded article were evaluated by the Sellotape (trade mark) peeling test (three times) in the vicinity of the gate of ASTM-1 test specimens.
Judgment criteria:

○: No peeling
Δ: Partially peeling
×: Wholly peeling

In addition, the following resins were used as polyolefins, polycarbonate resins, acrylic resins, vinyl polymers, polyphenylene oxides and the like.

Polyolefin

Polyolefin (A1-1):

A crystalline polypropylene homopolymer, produced by Prime Polymer Co., Ltd., MFR=13 g/10 min, melting point=165˚C

Polyolefin (A1-2):

A crystalline polypropylene homopolymer, produced by Prime Polymer Co., Ltd. , MFR=3 g/10 min, melting point=163˚C, mmmm=98.0%

Polyolefin (A1-3):

TAFMER A4050 (Brand name), an ethylene-1-butene random copolymer, produced by Mitsui Chemicals, Inc., $MFR_{190}$=6 g/10 min

Polyolefin (A1-4):

TAFMER A0550 (Brand name), an ethylene-1-butene random copolymer, produced by Mitsui Chemicals, Inc., density: 860 kg/$m^3$, $MFR_{190}$=1.0 g/10 min

Polyolefin (A1-5):

Homopolypropylene J106G, produced by Prime Polymer Co., Ltd., MFR=15 g/10 min, tensile elastic modulus: 1500 MPa, nominal tensile strain at break: 100%

Polycarbonate Resin

Polycarbonate (B1-1):

Panlite L1225Y (Brand name), produced by Teijin Chemicals Ltd., MVR=11 $cm^3$/10 min (300˚C, load: 1.2 kg)

Polycarbonate (B1-2):

Panlite AD5503 (Brand name), produced by Teijin Chemicals Ltd., MVR=54 $cm^3$/10 min (300˚C, load: 1.2 kg)

Polycarbonate (B1-3):

Panlite L1225L (Brand name), produced by Teijin Chemicals Ltd., MVR=18 $cm^3$/10 min (300˚C, load: 1.2 kg)

Acrylic Resin

Acrylic Resin (B2-1):

SUMIPEX MHF (Brand name), produced by Sumitomo Chemical Co., Ltd.

Vinyl Polymer

Vinyl Polymer (B3-1):

An acrylonitrile-butadiene-styrene copolymer, (Brand name) SANTAC GA101, produced by Nippon A&L Inc., melt volume rate (ISO 1133, 220˚C, load: 10 kg)=26, flexural modulus (ISO 178, 23˚C)=2600 MPa

Vinyl Polymer (B3-2):

An acrylonitrile-butadiene-styrene copolymer, (Brand name) SANTAC SXD220, produced by Nippon A&L Inc. , melt volume rate (ISO 1133, 220˚C, load: 10 kg)=90, flexural modulus (ISO 178, 23˚C)=2650 MPa

Vinyl Polymer (B3-3):

A general purpose polystyrene, (Brand name) G430, produced by Japan Polystyrene Inc.

Vinyl Polymer (B3-4):

An acrylonitrile-styrene Copolymer, (Brand name) LITAC 100PCF, produced by Nippon A&L Inc., melt volume rate (ISO 1133, 220˚C, load: 10 kg)=18, flexural modulus (ISO 178, 23˚C)=3600 MPa

Polyphenylene oxide

Polyphenylene oxide (B4-1) :

NORYL 115 (Brand name), produced by GE Plastics Japan Ltd. Polyphenylene oxide (B4-2):
NORYL 646 (Brand name), produced by GE Plastics Japan Ltd.

Other Resins

A3400:

MODIPER A3400 (Brand name), a polypropylene-poly(styrene-acrylonitrile copolymer) block polymer, produced by NOF Corporation

A3100:

MODIPER A3100 (Brand name), a polypropylene-polystyrene block polymer, produced by NOF Corporation

H1041:

Tuftec H1041 (brand name), a polystyrene-poly(ethylene-butene)-polystyrene block copolymer, produced by Asahi Kasei Chemicals Corporation

H1043:

Tuftec H1043 (brand name), a polystyrene-poly(ethylene-butene)-polystyrene block copolymer, produced by Asahi Kasei Chemicals Corporation

[Production Example 1]

Synthesis of Halogenated Polypropylene

Into a degassed and nitrogen-purged 2 L-glass reactor was charged 170 g of a propylene/10-undecen-1-ol copolymer (Mw=106, 000, Mn=56,000, comonomer content: 0.12 mol%) which had been synthesized in accordance with the method described in the Example of Japanese Patent Laid-Open Publication No. 2002-145944, to which 1700 mL of hexane and 9.2 mL of 2-bromoisobutyric acid bromide were added. The resultant mixture was heated with stirring at 60˚C for 2 hours. After the reaction, the resulting slurry was filtered and the residue was dried under reduced pressure to obtain 169.5 g of a white solid polymer. $^1$H-NMR analysis showed that the polymer was a polypropylene in which 94% of the OH groups were modified with a 2-bromoisobutyric acid group.
The number of the 2-bromoisobutyric acid group per one molecular chain of polypropylene was 1.5 units, which was calculated from the number average molecular weight of the polypropylene, the comonomer content and the modification ratio of the 2-bromoisobutyric acid group.

[Production Example 2]

Synthesis of Block Polymer

Into a sufficiently nitrogen-purged glass reactor having an internal volume of 2 L were charged 100 g of the halogenated polypropylene obtained in Production Example 1, 786ml of styrene (St) and 194 mL of acrylonitrile (AN),

and the resultant mixture was stirred at 25˚C. The polymerization was performed at 90˚C for 2 hours by adding 246 mg of copper (I) bromide and 0.72 mL of PMDETA to the resultant slurry. The reaction solution was filtered and the resulting solid on the filter was washed with methanol and then dried under reduced pressure to obtain 161.3 g of a solid polymer. After taking out 5.16 g of the resulting polymer, Soxhlet extraction was performed using 150 mL of acetone under reflux for 9 hours. The extraction residue was dried under reduced pressure to obtain 5.07 g of a polymer (hereinafter referred to as the "block polymer (A2-1)"). $^1$H-NMR analysis of the sample after extraction showed that the composition ratio of PP/St/AN was 63/26/11 (% by weight).

The St/AN copolymer constituting the block (b) of the block polymer (A2-1) had a solubility parameter of 21.9, which was calculated from the composition ratio. The block (b) had a molecular weight of 21,800, which was calculated from the composition ratio, the number average molecular weight and the number of the 2-bromoisobutyric acid group per one molecular chain of polypropylene.

[Production Example 3]

Synthesis of Block Polymer

Into a sufficiently nitrogen-purged glass reactor having an internal volume of 2 L were charged 100 g of the halogenated polypropylene obtained in Production Example 1, 800 mL of methylmethacrylate (MMA) and 200 mL of toluene, and the resultant mixture was stirred at 25˚C. The polymerization was performed at 80˚C for 30 minutes by adding 98 mg of copper (I) bromide and 0.29 mL of PMDETA to the resultant slurry. The reaction solution was filtered and the resulting solid on the filter was washed with methanol and then dried under reduced pressure to obtain 158.7 g of a solid polymer. After taking out 4.98 g of the resulting polymer, Soxhlet extraction was performed using 150 mL of acetone under reflux for 9 hours. The extraction residue was dried under reduced pressure to obtain 4.95 g of a polymer (hereinafter referred to as the "block polymer (A2-2)"). $^1$H-NMR analysis of the sample after extraction showed that the composition ratio of PP/PMMA was 64/36 (% by weight).

The PMMA constituting the block (b) of the block polymer (A2-2) had a solubility parameter of 19.1, which was calculated from the composition ratio. The block (b) had a molecular weight of 21,000, which was calculated from the composition ratio, the number average molecular weight and the number of the 2-bromoisobutyric acid group per one molecular chain of polypropylene.

[Production Example 4]

Synthesis of Block Polymer

Into a sufficiently nitrogen-purged glass reactor having an internal volume of 2 L were charged 100 g of the halogenated polypropylene obtained in Production Example 1, 873 mL of styrene (St), 80 mL of 2-hydroxyethyl methacrylate (HEMA) and 200 mL of toluene, and the mixture was stirred at 25˚C. The polymerization was performed at 90˚C for 2 hours by adding 246 mg of copper (I) bromide and 0.72 mL of PMDETA to the resultant slurry. The reaction solution was filtered and the resulting solid on the filter was washed with methanol and then dried under reduced pressure to obtain 173 g of a solid polymer. After taking out 5.10 g of the resulting polymer, Soxhlet extraction was performed using 150 mL of acetone under reflux for 9 hours. The extraction residue was dried under reduced pressure to obtain 4.98 g of a polymer (hereinafter referred to as the "block polymer (A2-3)"). $^1$H-NMR analysis of the sample after extraction showed that the composition ratio of PP/St/HEMA was 59/37/4 (% by weight).

The St/AN copolymer constituting the block (b) of the block polymer (A2-3) had a solubility parameter of 23.1, which was calculated from the composition ratio. The block (b) had a molecular weight of 26,000, which was calculated from the composition ratio, the number average molecular weight and the number of the 2-bromoisobutyric acid group per one molecular chain of polypropylene.

[Production Example 5]

Synthesis of Block Polymer

Into a sufficiently nitrogen-purged glass reactor having an internal volume of 2 L were charged 100 g of the halogenated polypropylene obtained in Production Example 1, 720 mL of styrene (St), 280 mL of acrylonitrile (AN), 60 mL of glycidyl methacrylate (GMA) and 200 mL of toluene, and the resultant mixture was stirred at 25˚C. The polymerization was performed at 90˚C for 2 hours by adding 246 mg of copper (I) bromide and 0.72 mL of PMDETA to the resultant slurry. The reaction solution was filtered and the resulting solid on the filter was washed with methanol and then dried under reduced pressure to obtain 232. 6 g of a solid polymer. After taking out 5.03 g of the resulting polymer,

Soxhlet extraction was performed using 150 mL of acetone under reflux for 9 hours. The extraction residue was dried under reduced pressure to obtain 4.88 g of a polymer (hereinafter referred to as the "block polymer (A2-4)"). $^1$H-NMR analysis of the sample after extraction showed that the composition ratio of PP/St/AN/GMA was 45/31/21/3 (% by weight).

The AS/GMA copolymer constituting the block (b) of the block polymer (A2-4) had a solubility parameter of 22.2, which was calculated from the composition ratio. The block (b) had a molecular weight of 45,000, which was calculated from the composition ratio, the number average molecular weight and the number of the 2-bromoisobutyric acid group per one molecular chain of polypropylene.

[Production Example 6]

Synthesis of Halogenated Polypropylene

Into a sufficiently nitrogen-purged glass reactor having an internal volume of 2L were charged 150 g of polypropylene (J139P, produced by Prime Polymer Co., Ltd.) and 1500 mL of chlorobenzene and the resultant mixture was heated with stirring at 110˚C for 2 hours. Thereafter, the reaction was performed by adding 5 g of N-bromosuccinimide in a slurry state at 110˚C for 2 hours. The reaction solution was poured into 3 L of acetone and a precipitated polymer was dried under reduced pressure to obtain 147 g of a while powdery modified polypropylene. The ion chromatography analysis showed that the bromine atom content in the resulting polymer was 0.34% by weight. In addition, the measurement results of the molecular weight (in terms of PP) by GPC showed that the polymer had Mw of 98,300 and Mn of 25,600.

The grafting number of the bromine atoms per one molecular chain of polypropylene was 1.09 units, which was calculated from the molecular weight of the polypropylene and the bromine atom content.

[Production Example 7]

Synthesis of Block Polymer

Into a sufficiently nitrogen-purged glass reactor having an internal volume of 2 L were charged 100 g of the halogenated polypropylene obtained in the Production Example 6, 778 mL of St and 192 mL of AN, and the resulting mixture was stirred at 25˚C. The polymerization was performed at 85˚C for 4 hours by adding 1033 mg of copper (I) bromide and 3. 01 mL of PMDETA to the resultant slurry. The reaction solution was filtered and the resulting solid on the filter was washed with methanol and then dried under reduced pressure to obtain 143.1 g of a solid polymer (hereinafter referred to as the "block polymer (A2-5)"). $^1$H-NMR analysis of the sample showed that the composition ratio of PP/St/AN was 70/21/9 (w% by weight).

The St/AN copolymer constituting the block (b) of the block polymer (A2-5) had a solubility parameter of 21.8, which was calculated from the composition ratio. The block (b) had a molecular weight of 10,200, which was calculated from the composition ratio, the number average molecular weight and the grafting number of the bromine atoms per one molecular chain of polypropylene.

Table 1 summarizes the polymer composition, the solubility parameter of the radical polymerization segments, the segment molecular weight and the like.

[Table 1]

| Block Polymer | | Production Example 2 A2-1 | Production Example 3 A2-2 | Production Example 4 A2-3 | Production Example 5 A2-4 | Production Example 7 A2-5 | A3100 | A3400 | H1041 |
|---|---|---|---|---|---|---|---|---|---|
| Halogenated PP Production Example | | 1 | | | | 6 | | | |
| Graft Polymerization Example | | 2 | 3 | 4 | 5 | 7 | | | |
| Halogenated PP-Mw | $\times 10^4$ g/mol | 10.6 | 10.6 | 10.6 | 10.6 | 9.8 | | | |
| Halogenated PP-Mn | $\times 10^4$ g/mol | 5.6 | 5.6 | 5.6 | 5.6 | 2.6 | | | |
| Branched Number | Unit/ chain | 1.5 | 1.5 | 1.5 | 1.5 | 1.08 | | | |
| Monomer charge | | | | | | | | | |
| St | mL | 786 | | 873 | 720 | 786 | | | |
| AN | mL | 194 | | | 280 | 194 | | | |
| PMMA | mL | | 800 | | | | | | |
| HEMA | mL | | | 80 | | | | | |
| GMA | mL | | | | 60 | | | | |
| Polymer Composition | | | | | | | | | |
| Polyolefin | % by wt | 63 | 64 | 59 | 45 | 70 | 70 | 70 | 70 |
| St | % by wt | 26 | | 37 | 31 | 21 | 21 | 30 | 30 |
| AN | % by wt | 11 | | | 21 | 9 | 9 | | |
| PMMA | % by wt | | 36 | | | | | | |
| HEMA | % by wt | | | 4 | | | | | |

(continued)

| Polymer Composition | | | | | | | | | |
|---|---|---|---|---|---|---|---|---|---|
| GMA | % by wt | | | | 3 | | | | |
| Block (b) | | | | | | | | | |
| Solubility Parameter | $(J/cm^3)^{1/2}$ | 21.9 | 19.1 | 23.1 | 22.2 | 21.9 | 21.9 | 18.7 | 18.7 |
| Molecular Weight (Mn) | $\times 10^4$ g/mol | 2.2 | 2.1 | 2.6 | 4.5 | 1.0 | | | |

[Production Example 8]

Synthesis of Halogenated Polypropylene

Into a glass reactor was charged a propylene/10-undecen-1-ol copolymer which had been produced in accordance with the method described in the Example of Japanese Patent Laid-Open Publication No. 2002-145944 and then hexane was added to prepare slurry by adjsuting the polymer concentration at 100 g/L. To the slurry was added 2-bromoisobutyric acid bromide in an amount of 5-fold equivalent relative to the amount of the hydroxyl group present in the polymer and the resulting solution was heated with stirring at 60˚C for 3 hours. The reaction solution was cooled to 20˚C at a cooling rate of 20˚C/h to filter off the polymer. The polymer was subjected to solid-liquid washing by adding the polymer in acetone, stirring for 10 minutes and filtering off the polymer again. The resulting white polymer was dried at 50˚C under a reduced pressure of 10 Torr for 10 hours. The results of the high temperature GPC analysis showed that the polymer had a weight average molecular weight (Mw) of 106, 000 and a number average molecular weight (Mn) of 56,400 in terms of polypropylene. The measurement results of DSC showed that the polymer had a melting point of 154˚C and $^1$H-NMR analysis showed that the number of the terminal in which bromine derived from 2-bromoisobutyric acid bromide is introduced was 1.9 units per chain as the average introduction number. $^1$H-NMR analysis showed that the polymer was a halogenated polypropylene in which 94% of the hydroxyl groups were modified with a 2-bromoisobutyric acid group.

Synthesis of Block Polymer

The halogenated polypropylene was charged into a glass polymerization reactor, then a toluene solution prepared to contain styrene (St) and acrylonitrile (AN) at the concentration of 4. 9 M and 2.1 M, respectively, was added to the reactor to make the polymer concentration at 93 g/L and subsequently the mixture was deoxygenated by nitrogen bubbling. Thereafter, a toluene solution containing copper (I) bromide and N,N,N',N'',N''-pentamethyldiethylenetriamine (hereinafter, abbreviated as "PMDETA") in a ratio of 1:2 (molar ratio) was added to the mixture solution in an amount corresponding to 2 equivalent copper (I) bromide relative to the halogen content of the haloganated polypropylene, and the resultant mixture was heated with stirring. After the polymerization at 105˚C for 2.5 hours, the polymer mixed solution was cooled in an ice bath and filtered, and the polymer on the filter paper was washed with methanol. The resulting polymer was dried under reduced pressure at 80˚C to obtain a white polymer (hereinafter, referred to as a "block polymer (A2-6)").

[Production Example 9]

Synthesis of Halogenated Polypropylene

Into a glass reactor was charged a propylene/10-undecen-1-ol copolymer which had been produced in accordance with the method described in the Example of Japanese Patent Laid-Open Publication No. 2002-145944, to which hexane was added to prepare slurry by adjsuting the polymer concentration at 100g/L. To the slurry was added 2-bromoisobutyric acid bromide in an amount of 5-fold equivalent relative to the amount of the hydroxyl group present in the polymer and the resulting solution was heated with stirring at 60˚C for 3 hours. The reaction solution was cooled to 20˚C at a cooling rate of 20˚C/h to filter off the polymer. The polymer was subjected to solid-liquid washing by adding the polymer in acetone, stirring for 10 minutes and filtering off the polymer again. The resulting white polymer was dried under a reduced pressure of 10 Torr for 10 hours at 50˚C. The results of the high temperature GPC analysis showed that the polymer had a weight average molecular weight (Mw) of 82,800 and a number average molecular weight (Mn) of 41,300 in terms of polypropylene. The measurement results of DSC showed that the polymer had a melting point of 154˚C and $^1$H-NMR analysis showed that number of the terminal in which bromine derived from 2-bromoisobutyric acid bromide is introduced was 1.3 units per chain as the average introduction number. $^1$H-NMR analysis showed that the polymer was a halogenated polypropylene in which 97% of the hydroxyl groups were modified with a 2-bromoisobutyric acid group.

Synthesis of Block Polymer

The resulting halogenated polypropylene was charged into a glass polymerization reactor, a styrene monomer was added to the reactor to make the polymer concentration at 189 g/L and subsequently the mixture was deoxygenated by nitrogen bubbling. Thereafter, a toluene solution containing copper (I) bromide and PMDETA in a ratio of 1:2 (molar ratio) was added to the mixture solution in an amount corresponding to 1.5 equivalent of copper (I) bromide relative to the halogen content in the haloganated polypropylene, and the resulting mixture was heated with stirring. After the

polymerization at 100˚C for 5 hours, the reaction mixture was cooled in an ice bath to precipitate a polymer, which was then filtered off and washed with methanol. The resulting polymer was dried under reduced pressure (10 Torr) at 80˚C to obtain a white polymer (hereinafter, referred to as a "block polymer (A2-7)").

[Production Example 10]

Synthesis of Block Polymer

The halogenated polypropylene synthesized by the method described in Production Example 8 was charged into a glass polymerization reactor, then a toluene solution prepared to contain n-butyl acrylate (nBA) and methyl methacrylate (MMA) at 1.1 M and 0.1 M, respectively, was added to the reactor to make the polymer concentration at 30 g/L, and subsequently the mixture was deoxygenated by nitrogen bubbling. Thereafter, a toluene solution containing copper (I) bromide and PMDETA in a ratio of 1:2 (molar ratio) was added to the mixture solution in an amount corresponding to 3.5 equivalent copper (I) bromide relative to the halogen content in the haloganated polypropylene, and the resultant mixture was heated with stirring. After the polymerization at 105˚C for 9 hours, the mixture was cooled in an ice bath and the polymer mixed solution was filtered, and the polymer on the filter paper was washed with methanol. The resulting polymer was dried under reduced pressure at 80˚C to obtain a white block polymer (hereinafter, referred to as a "block polymer (A2-8)").

[Production Example 11]

Synthesis of Block Polymer

The halogenated polypropylene synthesized by the method described in Production Example 8 was charged into a glass polymerization reactor, then a toluene solution prepared to contain styrene (St), acrylonitrile (AN) and glycidyl methacrylate (GMA) at 4.6 M, 2.0 M and 0.7 M, respectively, was added to the reactor to make the polymer concentration at 86 g/L, and subsequently the mixture was deoxygenated by nitrogen bubbling. Thereafter, a toluene solution containing copper (I) bromide and PMDETA in a ratio of 1:2 (molar ratio) was added to the mixture solution in an amount corresponding to 1. 5 equivalent copper (I) bromide relative to the halogen content in the haloganated polypropylene, and the resultant mixture was heated with stirring. After the polymerization at 80˚C for 1.5 hours, the mixture was cooled in an ice bath and the polymer mixed solution was filtered, and the polymer on the filter paper was washed with methanol. The resulting polymer was dried under reduced pressure at 80˚C to obtain a white polymer (hereinafter, referred to as a "block polymer (A2-9)").

[Production Example 12]

Synthesis of Block Polymer

The halogenated polypropylene synthesized by the method described in Production Example 8 was charged into a glass polymerization reactor, then a toluene solution prepared to contain n-butyl acrylate (nBA) and glycidyl methacrylate (GMA) at 3.0 M and 0.30 M, respectively, was added to the reactor to make the polymer concentration at 93 g/L and subsequently the mixture was deoxygenated by nitrogen bubbling. Thereafter, a toluene solution containing copper (I) bromide and PMDETA in a ratio of 1:2 (molar ratio) was added to the mixture solution in an amount corresponding to 2 equivalent copper (I) bromide relative to the halogen content in the haloganated polypropylene, and the resultant mixture was heated with stirring. After the polymerization at 75˚C for one hour, the mixture was cooled in an ice bath and the polymer mixed solution was filtered, and the polymer on the filter paper was washed with methanol. The resulting polymer was dried under reduced pressure at 80˚C to obtain a white polymer (hereinafter, referred to as a "block polymer (A2-10)").

[Production Example 13]

Synthesis of Block Polymer

The halogenated polypropylene synthesized by the method described in Production Example 8 was charged into a glass polymerization reactor, then a toluene solution prepared to contain styrene (St) and methyl methacrylate (MMA) at 5.9 M and 0.6 M, respectively, was added to the reactor to make the polymer concentration at 87 g/L and subsequently the mixture was deoxygenated by nitrogen bubbling. Thereafter, a toluene solution containing copper (I) bromide and PMDETA in a ratio of 1:2 (molar ratio) was added to the mixture solution in an amount corresponding to

2.0 equivalent copper (I) bromide relative to the halogen content in the haloganated polypropylene, and the resultant mixture was heated with stirring. After the polymerization at 80˚C for 6.0 hours, the mixture was cooled in an ice bath and the polymer mixed solution was filtered, and the polymer on the filter paper was washed with methanol. The resulting polymer was dried under reduced pressure at 80˚C to obtain a white polymer (hereinafter, referred to as a "block polymer (A2-11)").

[Production Example 14]

Synthesis of Block Polymer

The halogenated polypropylene synthesized by the method described in Production Example 8 was charged into a glass polymerization reactor, then a toluene solution prepared to contain styrene (St) and methyl methacrylate (MMA) at 5.9 M and 1.2 M, respectively, was added to the reactor to make the polymer concentration at 87 g/L and subsequently the mixture was deoxygenated by nitrogen bubbling. Thereafter, a toluene solution containing copper (I) bromide and PMDETA in a ratio of 1:2 (molar ratio) was added to the mixture solution in an amount corresponding to 2.0 equivalent copper (I) bromide relative to the halogen content in the haloganated polypropylene, and the resultant mixture was heated with stirring. After the polymerization at 80˚C for 4.5 hours, the mixture was cooled in an ice bath and the polymer mixed solution was filtered, and the polymer on the filter paper was washed with methanol. The resulting polymer was dried under reduced pressure at 80˚C to obtain a white polymer (hereinafter, referred to as a "block polymer (A2-12)").

[Production Example 15]

Synthesis of Block Polymer

The halogenated polypropylene synthesized by the method described in Production Example 8 was charged into a glass polymerization reactor, then a toluene solution prepared to contain styrene (St) and methyl methacrylate (MMA) at 5.9 M and 1.8 M, respectively, was added to the reactor to make the polymer concentration at 87 g/L and subsequently the mixture was deoxygenated by nitrogen bubbling. Thereafter, a toluene solution containing copper (I) bromide and PMDETA in a ratio of 1:2 (molar ratio) was added to the mixture solution in an amount corresponding to 2.0 equivalent copper (I) bromide relative to the halogen content in the haloganated polypropylene, and the resultant mixture was heated with stirring. After the polymerization at 80˚C for 3.0 hours, the mixture was cooled in an ice bath and the polymer mixed solution was filtered, and the polymer on the filter paper was washed with methanol. The resulting polymer was dried under reduced pressure at 80˚C to obtain a white polymer (hereinafter, referred to as a "block polymer (A2-13)"). Table 2 summarizes the composition of various monomers, the solubility parameter of the radical polymerization segments and the segment molecular weight.

Table 2 summarizes the polymer compositions, the solubility parameter of the radical polymerization segments, the segment molecular weight and the like in the above Production Examples 8 to 15.

[Table 2]

| | | | Production Example 8 | Production Example 9 | Production Example 10 | Production Example 11 | Production Example 12 | Production Example 13 | Production Example 14 | Production Example 15 | | | |
|---|---|---|---|---|---|---|---|---|---|---|---|---|---|
| Reference symbol of polymer | | | A2-6 | A2-7 | A2-8 | A2-9 | A2-10 | A2-11 | A2-12 | A2-13 | H1043 | A3400 | A3100 |
| Raw Material: Halogenated PP | Weight Average Molecular Weight (Mw) | $\times 10^4$ g/mol | 106,000 | 82,800 | 106,000 | 106,000 | 106,000 | 106,000 | 106,000 | 106,000 | | | |
| | Number Average Molecular Weight (Mn) | $\times 10^4$ g/mol | 56,400 | 41,300 | 56,400 | 56,400 | 56,400 | 56,400 | 56,400 | 56,400 | | | |
| | Average Halogen Introduction Number | Unit/chain | 1.9 | 1.3 | 1.9 | 1.9 | 1.9 | 1.9 | 1.9 | 1.9 | 70 | 70 | 70 |
| Block (a) PP segment | | wt % | 59.4 | 45.4 | 62.8 | 57.4 | 56.7 | 89.7 | 71.3 | 68.8 | | | |
| | St | Wt % | 28.8 | 54.6 | | 25.6 | | 8.8 | 23.0 | 23.4 | 21 | 30 | 30 |
| | MMA | Wt % | | | 5.6 | | | 1.5 | 5.7 | 7.8 | | | |
| | nBA | Wt % | | | 31.6 | | 35.1 | | | | | | |
| | AN | Wt % | 11.8 | | | 7.7 | | | | | 9 | | |
| | GMA | Wt % | | | | 9.4 | 8.2 | | | | | | |
| [Block (b)] Solubility Parameter | | $(J/cm^3)^{1/2}$ | 20.4 | 18.7 | 18.5 | 19.8 | 18.4 | 18.7 | 18.7 | 18.8 | 21.9 | 18.7 | 18.7 |
| [Block (b)] Molecular Weight | | $\times 10^4$ g/mol | 20,300 | 37,100 | 17,600 | 22,100 | 22,700 | 3,400 | 11,900 | 13,500 | | | |

[Production Example 16]

Synthesis of Block Polymer

Into a sufficiently nitrogen-purged glass reactor having an internal volume of 2 L were charged 100 g of the halogenated polypropylene obtained in the Production Example 1 and 547 mL of styrene (St) and the mixture was stirred at 25˚C. The polymerization was performed at 105˚C for 5 hours by adding 246 mg of copper (I) bromide and 0.72 mL of PMDETA to the resultant slurry. The reaction solution was filtered and the resulting solid on the filter was washed with methanol and then dried under reduced pressure to obtain 132.7 g of a solid polymer. After taking out 5.16 g of the resulting polymer, Soxhlet extraction was performed using 150 mL of acetone under reflux for 9 hours. The extraction residue was dried under reduced pressure to obtain 5.07 g of a polymer. $^{1}$H-NMR analysis of the sample after extraction showed that the composition ratio of PP/St was 76/24 (wt. ratio).

The St polymer constituting the block (b) of the block polymer (A2-14) had a solubility parameter of 18.7, which was calculated from the composition ratio. The block (b) had a molecular weight of 11,700, which was calculated from the composition ratio, the number average molecular weight and the number of the 2-bromoisobutyric acid group per one molecular chain of polypropylene.

[Example 1]

A polyolefin resin composition in a pellet form was prepared by melt-kneading 66. 7 parts by weight of the polypropylene (A1-1), 4.8 parts by weight of the block polymer (A2-1) produced in Production Example 2 and 28.5 parts by weight of the polycarbonate (B1-1) by a twin-screw extruder. The amount of chloroform-insoluble component at room temperature was measured for the resulting polyolefin resin composition. In addition, ASTM test specimens were molded using an injection molding machine (IS55, manufactured by Toshiba Machine Co., Ltd.). The melt-kneading conditions and the injection molding conditions are described below. Table 3 shows the amount of the components derived from the block (b) contained in the chloroform-insoluble components at room temperature (hereinafter, referred to as the amount of block (b)) and physical properties of the molded articles.

<Melt-kneading conditions>

Co-rotating twin-screw kneader: Product Number KZW15-30HG, manufactured by Technovel Corporation
Kneading temperature: 240˚C
Number of screw rotation: 200 rpm

<Injection molding conditions>

Injection molding machine: Product number IS55, manufactured by Toshiba Machine Co., Ltd.
Cylinder temperature: 240˚C
Mold temperature: 60˚C

[Examples 2 to 14]

The ASTM test specimens were molded in the same manner as in Example 1 except that the type and amount of the polyolefin, the polyolefinic block copolymer and the polycarbonate resin, the kneading temperature at the time of melt-kneading and the cylinder temperature at the time of injection molding were changed, as shown in Table 3 or Table 4. Tables 3 and 4 show the amount of chloroform-insoluble component and physical properties of the molded articles.

[Comparative Examples 1 to 4]

The ASTM test specimens were molded in the same manner as in Example 1 except that the type and amount of the polyolefin and the polycarbonate resin, the kneading temperature at the time of melt-kneading and the cylinder temperature at the time of injection molding were changed as shown in Table 4 and the olefinic block polymer was not used. Table 4 shows the amount of block (b) and physical properties of the molded articles.

[Comparative Examples 5 to 7]

The ASTM test specimens were molded in the same manner as in Example 1 except that the type and amount of the polyolefin and the polycarbonate resin, the kneading temperature at the time of melt-kneading and the cylinder temperature at the time of injection molding were changed as shown in Table 4 and the olefinic block copolymer described in Table 4 was used in the amount described in table 4 in place of the olefinic block copolymer produced in the above Production Examples. Table 4 shows the amount of block (b) and physical properties of the molded articles.

[Example 15]

A polyolefin resin composition in a pellet form was prepared by melt-kneading 28.5 parts by weight of the polypropylene (A1-1), 4.8 parts by weight of the block polymer (A2-1) produced in Production Example 2 and 66.7 parts by weight of the polycarbonate (B1-1) by a twin-screw extruder. The ASTM test specimens were molded by using the resulting polyolefin resin composition using an injection molding machine (IS55, manufactured by Toshiba Machine Co., Ltd.). The Izod test specimens with machining notches were immersed in acetone or xylene at room temperature for 48 hours and the Izod impact strength was measured before and after the immersion. The kneading temperature, molding temperature and the measurement results are shown in table 5. The ratio of the Izod impact strength after the immersion to that before the immersion was determined and used as the retention ratio. When the retention ratio is close to 100%, it is close to the physical properties before the immersion, indicating that it is excellent in solvent resistance.

[Comparative Examples 8 and 9]

The ASTM test specimens were molded in the same manner as in Example 15 except that the amount of the polyolefin and the polycarbonate resin, the kneading temperature at the time of melt-kneading and the cylinder temperature at the time of injection molding were changed as shown in Table 5 and the olefinic block copolymer (A2-1) produced in the above Production Example 2 was not used. The Izod impact strength before and after the immersion was measured in the same manner as in Example 15. The measurement results are shown in Table 5.

[Table 3]

| | | Examples | | | | | | | | | | |
|---|---|---|---|---|---|---|---|---|---|---|---|---|
| | | 1 | 2 | 3 | 4 | 5 | 6 | 7 | 8 | 9 | 10 | 11 |
| Polyolefin (A1-1) | Wt % | 66.7 | 47.6 | 28.5 | 58.3 | 58.3 | 58.3 | 58.3 | 58.3 | 58.3 | | |
| Polyolefin (A1-2) | Wt % | | | | | | | | | | 59.7 | 58.3 |
| Polyolefin (A1-3) | Wt % | | | | 12.5 | 12.5 | 12.5 | 12.5 | 12.5 | 12.5 | 12.7 | 12.5 |
| Block Polymer (A2-1) | Wt % | 4.8 | 4.8 | 4.8 | 4.2 | 4.2 | 4.2 | | | | 2.2 | 4.2 |
| Block Polymer (A2-2) | Wt % | | | | | | | 4.2 | | | | |
| Block Polymer (A2-3) | Wt % | | | | | | | | 4.2 | | | |
| Block Polymer (A2-4) | Wt % | | | | | | | | | 4.2 | | |
| Block Polymer (A2-5) | Wt % | | | | | | | | | | | |
| Polycarbonate (B1-1) | Wt % | 28.5 | 47.6 | 66.7 | 25 | | | 25 | 25 | 25 | 25.4 | 25 |
| Polycarbonate (B1-2) | Wt % | | | | | 25 | | | | | | |
| Polycarbonate (B1-3) | Wt % | | | | | | 25 | | | | | |
| A3400 | Wt % | | | | | | | | | | | |
| A3100 | Wt % | | | | | | | | | | | |
| H1041 | Wt % | | | | | | | | | | | |
| Kneading Setting Temperature | ˚C | 240 | 240 | 260 | 240 | 240 | 240 | 240 | 240 | 240 | 240 | 240 |
| Molding Cylinder Temperature | ˚C | 240 | 240 | 260 | 240 | 240 | 240 | 240 | 240 | 240 | 240 | 240 |
| MFR (230˚C, 2.16 kgf) | g | 10.5 | 8.8 | 5.8 | 8.1 | 9.7 | 9.2 | 7.6 | 6.6 | 5.7 | 3.4 | 3.9 |
| IZ Impact Strength | J/m | 52 | 85 | 195 | 122 | 93 | 121 | 115 | 101 | 108 | 160 | 171 |
| Flexural Modulus | MPa | 2,166 | 2,189 | 2,194 | 1,746 | 1,741 | 1,722 | 1,746 | 1,648 | 1,680 | 1,584 | 1,645 |
| Flexural Strength | MPa | 67 | 72 | 76 | 51 | 53 | 52 | 50 | 50 | 50 | 49 | 50 |
| Tensile Breaking Strength | MPa | 43 | 43 | 45 | 35 | 31 | 34 | 35 | 35 | 35 | 40 | 41 |
| Tensile Elongation | % | 19 | 9 | 5 | 195 | 145 | 190 | 214 | 191 | 155 | 185 | 198 |
| Peeling | | ○ | ○ | ○ | ○ | ○ | ○ | ○ | ○ | ○ | ○ | ○ |
| Amount of Block (b) | Wt % | 2.6 | 3.7 | 6.5 | 2.2 | 2.3 | 2.2 | 2.5 | 2.0 | 2.6 | 1.1 | 2.3 |

[Table 4]

| | | Examples | | | Comparative Examples | | | | | | |
|---|---|---|---|---|---|---|---|---|---|---|---|
| | | 12 | 13 | 14 | 1 | 2 | 3 | 4 | 5 | 6 | 7 |
| Polyolefin (A1-1) | Wt% | | | | 70 | 50 | 30 | 60.9 | 58.3 | 58.3 | 58.3 |
| Polyolefin (A1-2) | Wt% | 56.1 | 52.0 | 58.3 | | | | | | | |
| Polyolefin (A1-3) | Wt% | 12.0 | 11.1 | 12.5 | | | | 13 | 12.5 | 12.5 | 12.5 |
| Block Polymer (A2-1) | Wt% | 8.0 | 14.8 | | | | | | | | |
| Block Polymer (A2-2) | Wt% | | | | | | | | | | |
| Block Polymer (A2-3) | Wt% | | | | | | | | | | |
| Block Polymer (A2-4) | Wt% | | | | | | | | | | |
| Block Polymer (A2-5) | Wt% | | | 4.2 | | | | | | | |
| Polycarbonate (B1-1) | Wt% | 23.9 | 22.1 | 25 | 30 | 50 | 70 | 26.1 | 25 | 25 | 25 |
| Polycarbonate (B1-2) | Wt% | | | | | | | | | | |
| Polycarbonate (B1-3) | Wt% | | | | | | | | | | |
| A3400 | Wt% | | | | | | | | 4.2 | | |
| A3100 | Wt% | | | | | | | | | 4.2 | |
| H1041 | Wt% | | | | | | | | | | 4.2 |
| Kneading Setting Temperature | ˚C | 240 | 240 | 240 | 240 | 240 | 260 | 240 | 240 | 240 | 240 |
| Molding Cylinder Temperature | ˚C | 240 | 240 | 240 | 240 | 240 | 260 | 240 | 240 | 240 | 240 |
| MFR (230˚C, 2.16 kgf) | g | 4.0 | 4.6 | 3.5 | 12.2 | 9.9 | 5.8 | 10.4 | 11.5 | 9.8 | 8.6 |
| IZ Impact Strength | J/m | 161 | 147 | 231 | 36 | 36 | 100 | 56 | 47 | 40 | 147 |
| Flexural Modulus | MPa | 1,716 | 1,756 | 1,537 | 2,082 | 2,028 | 2,057 | 1,689 | 1,671 | 1,662 | 1,413 |
| Flexural Strength | MPa | 53 | 54 | 50 | 65 | 66 | 68 | 51 | 52 | 51 | 42 |
| Tensile Breaking Strength | MPa | 42 | 40 | 42 | 40 | 40 | 39 | 31 | 32 | 32 | 30 |
| Tensile Elongation | % | 199 | 195 | 193 | 8 | 5 | 3 | 59 | 7 | 9 | 179 |
| Peeling | | ○ | ○ | ○ | × | × | × | × | Δ | Δ | Δ |
| Amount of Block (b) | Wt% | 5.5 | 9.5 | 1.9 | 0.0 | 0.0 | 0.0 | 0.0 | 0.5 | 0.7 | 0.0 |

[Table 5]

| | | Example 15 | Comparative Example 8 | Comparative Example 9 |
|---|---|---|---|---|
| Polyolefin (A1-1) | Wt % | 28.5 | 30 | |
| Block Polymer (A2-1) | Wt % | 4.8 | | |
| Polycarbonate (B1-1) | Wt % | 66.7 | 70 | 100 |
| Kneading Setting Temperature | ˚C | 260 | 260 | 270 |
| Molding Cylinder Temperature | ˚C | 260 | 260 | 270 |
| IZ Impact Strength | | | | |
| Before solvent immersion | J/m | 195 | 100 | 980.57 |
| After immersion in acetone for 48 hours | J/m | 192 | 145 | 39 |
| Retention | | 98% | 145% | 4% |
| After immersion in xylene for 48 hours | J/m | 185 | 165 | 181 |
| Retention | | 95% | 165% | 18% |

[Example 16]

A polyolefin resin composition in a pellet form was prepared by melt-kneading 210 parts by weight of the polypropylene (A1-1), 45 parts by weight of the polypropylene (A1-3), 15 parts by weight of the block polymer (A2-2) produced in Production Example 3 and 90 parts by weight of the acrylic resin (B2-1) by a twin-screw extruder. The amount of chloroform-insoluble component at room temperature was measured for the resulting polyolefin resin composition. In addition, the ASTM test specimens were molded using an injection molding machine (IS55, manufactured by Toshiba Machine Co., Ltd.). The melt-kneading conditions and the injection molding conditions are the same as those in Example 1. Table 6 shows the amount of the components derived from the block (b) contained in the chloroform-insoluble components at room temperature (hereinafter, referred to as the amount of block (b)) and physical properties of the molded articles.

[Comparative Example 10]

The ASTM test specimens were molded in the same manner as in Example 16 except that the block polymer (A2-2) was not used. The amount of block (b) and physical properties of the molded articles are shown in Table 6.
[Table 6]

| | | Example 16 | Comparative Example 10 |
|---|---|---|---|
| Polyolefin (A1-1) | Parts by weight | 210 | 210 |
| Polyolefin (A1-3) | Parts by weight | 90 | 90 |
| Block Polymer (A2-2) | Parts by weight | 15 | |
| Acrylic Resin (B2-1) | Parts by weight | 45 | 45 |
| MFR (230˚C, 2.16 kgf) | g/10 min. | 5.87 | 7.52 |
| Amount of Block (b) | Wt % | 1.2 | - |
| Tensile Elastic Modulus | MPa | 1,425 | 1,587 |
| Tensile Breaking Strength | MPa | 30.1 | 33 |
| Tensile Elongation | % | 38.5 | 9.5 |

(continued)

| | | Example 16 | Comparative Example 10 |
|---|---|---|---|
| Flexural Modulus | MPa | 1,729.3 | 1,855.8 |
| Flexural Strength | MPa | 47.5 | 51.3 |
| IZ Impact Strength | J/m | 68.81 | 47.95 |

[Example 17]

A polyolefin resin composition in a pellet form was prepared by melt-kneading 66. 7 parts by weight of the polypropylene (A1-1), 4.8 parts by weight of the block polymer (A2-6) produced in Production Example 8 and 28.5 parts by weight of the vinyl polymer (B3-1) by a twin-screw extruder. The amount of chloroform-insoluble component at room temperature was measured for the resulting polyolefin resin composition. In addition, the resulting polyolefin resin composition was dried under reduced pressure at 80˚C overnight and then the ASTM test specimens were molded using an injection molding machine. The kneading conditions and the injection molding conditions are described below and the physical properties of the molded articles are shown in Table 7.

<Melt-kneading conditions>

Co-rotating twin-screw kneader: Product Number KZW15-30HG, manufactured by Technovel Corporation
Kneading temperature: 200˚C
Number of screw rotation: 200 rpm

<Injection molding conditions>

Injection molding machine: Product number IS55, manufactured by Toshiba Machine Co., Ltd.

Cylinder temperature: 200˚C
Mold temperature: 30˚C

[Examples 18 to 27]

The ASTM test specimens were molded in the same manner as in Example 17 except that the type and amount of the polyolefin, the block polymer and the vinyl polymer were changed. The physical properties of the molded articles are shown in Tables 7 and 8.

[Comparative Examples 11 to 19]

The ASTM test specimens were molded in the same manner as in Example 17 except that the type and amount of the polyolefin and the vinyl polymer were changed, copolymers H1043, A3400 and A3100 were used and block polymer was not used. The physical properties of the molded articles are shown in Tables 7 and 8.

As is clear from Table 7, it is understood that the impact strength and tensile elongation are increased without decreasing the rigidity of a resin composition by adding a block polymer. If the copolymer H1043 is added, the impact strength and tensile elongation are increased, but the rigidity is decreased. Further, as is clear from Table 8, it is understood that the tensile elongation is increased without decreasing the rigidity of a resin composition by adding a block polymer.

[Table 7]

| | | | Example 17 | Example 18 | Example 19 | Comparative Example 11 | Comparative Example 12 | Example 20 | Example 21 | Example 22 | Comparative Example 13 | Comparative Example 14 | Comparative Example 15 | Comparative Example 16 |
|---|---|---|---|---|---|---|---|---|---|---|---|---|---|---|
| Polyolefin | A1-1 | Wt % | 66.7 | 66.7 | 57 | 70 | 61 | 57 | 57 | 57 | 61 | 57 | 57 | 57 |
| | A1-4 | Wt % | | | 13 | | 13 | 13 | 13 | 13 | 13 | 13 | 13 | 13 |
| Polymer | B3-1 | Wt % | 28.5 | 28.5 | 26 | 30 | 26 | | | | | | | |
| | B3-2 | Wt % | | | | | | 26 | 26 | 26 | 26 | 26 | 26 | 26 |
| | B3-3 | Wt % | | | | | | | | | | | | |
| | B3-4 | Wt % | | | | | | | | | | | | |
| Block Polymer | | | A2-6 | A2-7 | A2-6 | | | A2-8 | A2-9 | A2-10 | | | | |
| Copolymer (On the market) | | | | | | | | | | | | H1043 | A3400 | A3100 |
| Addition Amount | | Wt % | 4.8 | 4.8 | 4 | | | 4 | 4 | 4 | | 4 | 4 | 4 |
| MFR | 230°C, 2.16 kgf | g/10 min | 8.5 | 14.8 | 7.7 | 15.4 | 10.8 | 8.2 | 4.7 | 4.4 | 10.7 | 8.4 | 9.9 | 10.4 |
| Tensile Test | Breaking Strength | MPa | 44 | 43 | 35 | 39 | 33 | 35 | 34 | 33 | 34 | 33 | 33 | 33 |
| | Breaking Elongation | | 18 | 10 | 221 | 4 | 11 | 192 | 54 | 42 | 32 | 254 | 34 | 41 |
| Flexural Test | Flexural Strength | MPa | 69 | 67 | 52 | 61 | 50 | 51 | 51 | 48 | 49 | 48 | 50 | 50 |
| | Flexural Modulus | MPa | 2,268 | 2,168 | 1,805 | 2,169 | 1,753 | 1,742 | 1,760 | 1,663 | 1,744 | 1,525 | 1,717 | 1,724 |
| IZ Impact Strength | 23°C | J/m | 30 | 28 | 59 | 37 | 35 | 65 | 55 | 53 | 38 | 50 | 38 | 36 |

[Table 8]

| | | | Example 23 | Example 24 | Example 25 | Comparative Example 17 | Example 26 | Example 27 | Comparative Example 18 | Comparative Example 19 |
|---|---|---|---|---|---|---|---|---|---|---|
| Polyolefin | A1-1 | Wt % | 58.3 | 58.3 | 58.3 | 60.9 | 66.7 | 58.3 | 70 | 60.9 |
| | A1-4 | Wt % | 12.5 | 12.5 | 12.5 | 13 | | 12.5 | | 13 |
| Polymer | B3-1 | Wt % | | | | | | | | |
| | B3-2 | Wt % | | | | | | | | |
| | B3-3 | Wt % | 25 | 25 | 25 | 26.1 | | | | |
| | B3-4 | Wt % | | | | | 28.5 | 25 | 30 | 26.1 |
| Block Polymer | | | A2-11 | A2-12 | A2-13 | | A2-6 | A2-6 | | |
| Copolymer (On the market) | | | | | | | | | | |
| Addition Amount | | Wt % | 4.2 | 4.2 | 4.2 | | 4.8 | 4.2 | | |
| MFR | 230˚C, 2.16 kgf | g/10 min | 18.2 | 13.2 | 13.7 | 13.3 | 8.1 | 6.4 | 17.0 | 11.7 |
| Tensile Test | Breaking Strength | MPa | 35 | 34 | 34 | 34 | 48 | 39 | 37 | 36 |
| | Breaking Elongation | | 229 | 55 | 80 | 17 | 24 | 27 | 23 | 4 |
| Flexural Test | Flexural Strength | MPa | 53 | 53 | 52 | 52 | 77 | 59 | 68 | 57 |
| | Flexural Modulus | MPa | 1,755 | 1,767 | 1,744 | 1,751 | 2,535 | 1,990 | 2,497 | 1,954 |

[Example 28]

A polyolefin resin composition in a pellet form was prepared by melt-kneading 70 parts by weight of the polypropylene (A1-1), 5 parts by weight of the block polymer (A2-14) produced in Production Example 16 and 30 parts by weight of the polyphenylene oxide (B4-1) by a twin-screw extruder. The amount of chloroform-insoluble component at room temperature was measured for the resulting polyolefin resin composition. In addition, the ASTM test specimens were molded using an injection molding machine (IS55, manufactured by Toshiba Machine Co., Ltd.). The melt-kneading conditions and the injection molding conditions are the same as those in Example 1. Table 9 shows the amount of the components derived from the block (b) contained in the chloroform-insoluble components at room temperature, the $C_{insol}/C_{sol}$ ratio and the physical properties of the molded articles.

[Examples 29 to 36]

The ASTM test specimens were molded in the same manner as in Example 28 except that the type and amount of the polyolefin, the olefinic block copolymer and the polyphenylene oxide, the kneading temperature at the time of melt-kneading and the cylinder temperature at the time of injection molding were changed as shown in Table 9. Table 9 shows the amount of block (b), the $C_{insol}/C_{sol}$ ratio and the physical properties of the molded articles.

[Comparative Examples 20 to 26]

The ASTM test specimens were molded in the same manner as in Example 28 except that the type and amount of the polyolefin and the polyphenylene oxide, the kneading temperature at the time of melt-kneading and the cylinder temperature at the time of injection molding were changed as shown in Table 9 and the olefinic block copolymer was not used. Table 9 shows the amount of block (b), the $C_{insol}/C_{sol}$ ratio and the physical properties of the molded articles.

[Table 9]

| | Polyolefin | | Polyphenylene Oxide | | Olefinic Block Polymer | | Amount of Block (b) | $C_{insol}$/ $C_{sol}$ | Tensile Breaking Elongation | Tensile Breaking Strength | Flexural Strength | IZ Impact Strength | Peeling |
|---|---|---|---|---|---|---|---|---|---|---|---|---|---|
| | Type | Parts by Wt | Type | Parts by Wt | Type | Parts by Wt | | | % | MPa | MPa | J/m | |
| Comparative Example 20 | (A1-1) | 70 | (B4-1) | 30 | | | | | 3 | 36 | 62 | 25 | × |
| Comparative Example 21 | (A1-1) | 50 | (B4-1) | 50 | | | | | 3 | 35 | 61 | 31 | × |
| Comparative Example 22 | (A1-1) | 30 | (B4-1) | 70 | | | | | 2 | 31 | 58 | 30 | × |
| Example 28 | (A1-1) | 70 | (B4-1) | 30 | (A2-14) | 5 | 1.3 | 58 | 6 | 40 | 63 | 50 | ○ |
| Example 29 | (A1-1) | 50 | (B4-1) | 50 | (A2-14) | 5 | 1.4 | 51 | 9 | 42 | 63 | 63 | ○ |
| Example 30 | (A1-1) | 30 | (B4-1) | 70 | (A2-14) | 5 | 1.5 | 48 | 8 | 45 | 64 | 99 | ○ |
| Comparative Example 23 | (A1-1) | 70 | (B4-2) | 30 | | | | | 4 | 25 | 46 | 20 | × |
| Comparative Example 24 | (A1-1) | 50 | (B4-2) | 50 | | | | | 2 | 33 | 63 | 24 | × |
| Comparative Example 25 | (A1-1) | 30 | (B4-2) | 70 | | | | | 3 | 42 | 76 | 80 | × |
| Example 31 | (A1-1) | 70 | (B4-2) | 30 | (A2-14) | 5 | 1.4 | 66 | 15 | 33 61 | | 35 | ○ |
| Example 32 | (A1-1) | 50 | (B4-2) | 50 | (A2-14) | 5 | 1.5 | 50 | 17 | 35 | 65 | 40 | ○ |
| Example 33 | (A1-1) | 30 | (B4-2) | 70 | (A2-14) | 5 | 1.5 | 59 | 12 | 44 | 76 | 123 | ○ |
| Example 34 | (A1-1) | 70 | (B4-2) | 30 | (A2-2) | 5 | 1.1 | 78 | 8 | 26 | 47 | 41 | ○ |
| Comparative Example 26 | (A1-1) (A1-3) | 70 15 | (B4-2) | 30 | | | | | 39 | 22 | 37 | 21 | × |
| Example 35 | (A1-1) (A1-3) | 70 15 | (B4-2) | 30 | (A2-2) | 5 | 1.0 | 82 | 65 | 23 | 37 | 65 | ○ |

(continued)

| | Polyolefin | | Polyphenylene Oxide | | Olefinic Block Polymer | | Amount of Block (b) | $C_{insol}/C_{sol}$ | Tensile Breaking Elongation | Tensile Breaking Strength | Flexural Strength | IZ Impact Strength | Peeling |
|---|---|---|---|---|---|---|---|---|---|---|---|---|---|
| | Type | Parts by Wt | Type | Parts by Wt | Type | Parts by Wt | | | % | MPa | MPa | J/m | |
| Example 36 | (A1-1)<br>(A1-3) | 70<br>15 | (B4-2) | 30 | (A2-14) | 5 | 1.3 | 61 | 80 | 30 | 47 | 145 | ○ |

[Production Example 17]

Synthesis of Block Polymer

The halogenated polypropylene produced in Production Example 9 (the weight average molecular weight in terms of polypropylene, Mw=82, 800, the number average molecular weight in terms of polypropylene, Mn=41,300, 1. 3 units/chain as the average bromine introduction number) was charged into a glass polymerization reactor, then a monomer mixed solution of styrene/methyl methacrylate (7: 3 by molar ratio) was added to the reactor to make the polymer concentration at 189 g/L and subsequently the mixture was deoxygenated by nitrogen bubbling. Thereafter, a toluene solution containing copper (I) bromide and PMDETA in a ratio of 1:2 (molar ratio) was added to the mixture solution in an amount corresponding to 3.0 equivalent copper (I) bromide relative to the halogen content in the halogenated polypropylene, and the resultant mixture was heated with stirring. After the polymerization at 100˚C for 5 hours, the mixture was cooled in an ice bath to precipitate a polymer and the polymer mixed solution was filtered, and the polymer was washed with methanol. The resulting polymer was dried under reduced pressure (10 Torr) at 80˚C to obtain a white polymer (hereinafter, referred to as a "block polymer (A2-15)"). Table 10 summarizes the results of composition analysis of the polymer determined by $^1$H-NMR.

[Production Example 18]

Synthesis of Block Polymer

The halogenated polypropylene produced in Production Example 12 (the weight average molecular weight in terms of polypropylene, Mw=106,000, the number average molecular weight in terms of polypropylene, Mn=56,400, 1.9 units/chain as the average bromine introduction number) was charged into a glass polymerization reactor, then a toluene solution prepared to contain 2-ethylhexyl acrylate (2-EHA) and glycidyl methacrylate (GMA) at 3.0 M and 0.30 M, respectively, was added to the reactor to make the polymer concentration at 93 g/L and subsequently the mixture was deoxygenated by nitrogen bubbling. Thereafter, a toluene solution containing copper (I) bromide and PMDETA in a ratio of 1:2 (molar ratio) was added to the mixture solution in an amount corresponding to 2 equivalent copper (I) bromide relative to the halogen content in the halogenated polypropylene, and the resultant mixture was heated with stirring. After the polymerization at 75˚C for one hour, the mixture was cooled in an ice bath and the polymer mixed solution was filtered, and the polymer was washed with methanol. The resulting polymer was dried under reduced pressure (10 Torr) at 80˚C to obtain a white polymer (hereinafter, referred to as a "block polymer (A2-16)"). Table 10 summarizes the results of composition analysis of the polymer determined by $^1$H-NMR.

[Production Example 19]

Synthesis of Block Polymer

The halogenated polypropylene produced in Production Example 12 (the weight average molecular weight in terms of polypropylene, Mw=106,000, the number average molecular weight in terms of polypropylene, Mn=56,400, 1.9 units/chain as the average bromine introduction number) was charged into a glass polymerization reactor, a toluene solution prepared to contain n-butyl acrylate (nBuA), acrylonitrile (AN) and glycidyl methacrylate (GMA) at 2.1 M, 0. 90 M and 0.30 M, respectively, was added to the reactor to make the polymer concentration at 93 g/L and subsequently the mixture was deoxygenated by nitrogen bubbling. Thereafter, a toluene solution containing copper (I) bromide and PMDETA in a ratio of 1:2 (molar ratio) was added to the mixture solution in an amount corresponding to 2 equivalent copper (I) bromide relative to the halogen content in the halogenated polypropylene, and the resultant mixture was heated with stirring. After the polymerization at 75˚C for six hours, the mixture was cooled in an ice bath and the polymer mixed solution was filtered, and the polymer was washed with methanol. The resulting polymer was dried under reduced pressure (10 Torr) at 80˚C to obtain a white polymer (hereinafter, referred to as a "block polymer (A2-17)"). Table 10 summarizes the results of composition analysis of the polymer determined by $^1$H-NMR.

[Production Example 20]

Synthesis of Block Polymer

The halogenated polypropylene produced in Production Example 12 (the weight average molecular weight in terms of polypropylene, Mw=106,000, the number average molecular weight in terms of polypropylene, Mn=56,400, 1.9 units/chain as the average bromine introduction number) was charged into a glass polymerization reactor, a toluene

solution prepared to contain glycidyl methacrylate (GMA) at 3.0 M was added to the reactor to make the polymer concentration at 93 g/L and subsequently the mixture was deoxygenated by nitrogen bubbling. Thereafter, a toluene solution containing copper (I) bromide and PMDETA in a ratio of 1:2 (molar ratio) was added to the mixture solution in an amount corresponding to 2 equivalent copper (I) bromide relative to the halogen content in the halogenated polypropylene, and the resultant mixture was heated with stirring. After the polymerization at 75˚C for 20 minutes, the mixture was cooled in an ice bath and the polymer mixed solution was filtered, and the polymer was washed with methanol. The resulting polymer was dried under reduced pressure (10 Torr) at 80˚C to obtain a white polymer (hereinafter, referred to as a "block polymer (A2-18)"). Table 10 summarizes the results of composition analysis of the polymer determined by $^1$H-NMR.

[Production Example 21]

Synthesis of Block Polymer

A polypropylene (S119, produced by Prime Polymer Co., Ltd.) was charged into a glass reactor, then chlorobenzene was added to the reactor to make the polymer concentration at 100 g/L, and the resultant mixture was heated with stirring at 120˚C for 2 hours. Thereafter, N-bromosuccinimide was added to the mixture in an amount of 2.5 parts by weight based on 100 parts by weight of the polypropylene, and the resultant mixture was reacted in a solution state at 100˚C for 2 hours. The reaction solution was poured into 4 L of acetone and a precipitated polymer was filtered. The polymer was subjected to solid-liquid washing by adding the polymer in acetone, stirring for 10 minutes and filtering off the polymer again. The resulting polymer was dried under a reduced pressure of 10 Torr at 80˚C for 10 hours. The ion chromatography analysis showed that the bromine atom content in the resulting polymer was 0.55% by weight. In addition, the measurement result of the molecular weight by GPC (in terms of PP) showed that the polymer had Mw of 101,000, Mn of 43,000 and Mw/Mn of 2.35, and the measurement result by DSC showed that the polymer had a melting point of 153˚C. The halogenated polypropylene was charged into a glass polymerization reactor, then a toluene solution prepared to contain n-butyl acrylate (nBA) and glycidyl methacrylate (GMA) at 3.0 M and 0.30 M, respectively, was added to the reactor to make the polymer concentration at 93 g/L and subsequently the mixture was deoxygenated by nitrogen bubbling. Thereafter, a toluene solution containing copper (I) bromide and PMDETA in a ratio of 1:2 (molar ratio) was added to the mixture solution in an amount corresponding to 2 equivalent copper (I) bromide relative to the halogen content in the halogenated polypropylene, and the resultant mixture was heated with stirring. After the polymerization at 75˚C for one hour, the mixture was cooled in an ice bath and the polymer mixed solution was filtered, and the polymer was washed with methanol. The resulting polymer was dried under reduced pressure (10 Torr) at 80˚C to obtain a white polymer (hereinafter, referred to as a "block polymer (A2-19)"). Table 10 summarizes the results of composition analysis of the polymer determined by $^1$H-NMR.

[Comparative Production Example 1]

Synthesis of Block Polymer

A solution prepared by dissolving 1 part by weight of maleic anhydride (hereinafter, may be referred to as "MAH", produced by Wako Pure Chemicals Industries Ltd.) and 0.5 parts by weight of t-butylperoxy benzoate (Trade name: Perbutyl Z, produced by NOF Corporation) in acetone was dry blended with 100 parts by weight of homopolypropylene F102W produced by Prime Polymer Co., Ltd. (MFR=2 g/10 min, tensile elastic modulus: 1,600 MPa, nominal tensile strain at break: 130%). Thereafter, the mixture was extruded at a resin temperature of 230˚C, screw rotation of 200 rpm with a discharge rate of 100 g/min using a twin-screw extruder (TEX-30, manufactured by The Japan Steel Works Ltd.) to obtain a maleic acid-modified polypropylene (hereinafter referred to as a "modified polymer (P-1)"). The resulting MAH-PP was dissolved in xylene and purified by reprecipitation in acetone. The resulting polymer had the amount of grafted maleic anhydride of 0.75% by weight and an MFR of 400 g/10 min.

[Production Example 22]

Synthesis of Block Polymer

Into a sufficiently nitrogen-purged glass reactor having an internal volume of 500 mL were charged 15 g of the halogenated polypropylene obtained in the Production Example 8, 25.2 mL of n-butyl acrylate (nBuA), 10.3 mL of glycidyl methacrylate (GMA) and 217 mL of toluene, and the air in the solution was replaced by nitrogen at 25˚C (30 L/hr, 0.5 hrs). The polymerization was performed at 80˚C for 4 hours by adding 73 mg of copper (I) bromide and 0.21 mL of PMDETA to the resultant slurry. The reaction solution was filtered and the resulting solid on the filter was washed with

methanol and then dried under reduced pressure to obtain 19.9 g of a solid polymer (hereinafter, referred to as a "block polymer (A2-20)"). After taking out 3.00 g of the resulting polymer, Soxhlet extraction was performed using 150 mL of acetone under reflux for 9 hours. The extraction residue was dried under reduced pressure to obtain 2. 98 g of a polymer. Table 10 summarizes results of the composition analysis of the polymer determined by $^1$H-NMR.

[Production Example 23]

Synthesis of Block Polymer

The polymerization was carried out in the same manner as in Production Example 22 except that the charged amounts of n-butyl acrylate (nBuA), glycidyl methacrylate (GMA) and toluene were changed to 5.2 mL, 11.6 mL and 236 mL, respectively, and 16.9 g of a polymer (hereinafter, referred to as a "block polymer (A2-21)") was obtained. $^1$H-NMR analysis showed that the composition ratio (weight ratio) of PP/P(nBuA-co-GMA) was 88/12 (% by weight).

[Production Example 24]

Synthesis of Block Polymer

The polymerization was carried out in the same manner as in Production Example 22 except that 9.1 mL of methyl methacrylate (MMA) and 5.0 mL of glycidyl methacrylate (GMA) were used as charged monomers, the charged amount of toluene was changed to 239 mL and the polymerization time was changed to 3.5 hours, and 17.3 g of a polymer (hereinafter, referred to as a "block polymer (A2-22)") was obtained. Table 10 summarizes the results of composition analysis of the polymer determined by $^1$H-NMR.

[Production Example 25]

Synthesis of Block Polymer

The polymerization was carried out in the same manner as in Production Example 22 except that 20.3 mL of styrene (St) and 10.3 mL of glycidyl methacrylate (GMA) were used as charged monomers, the charged amount of toluene was changed to 222 mL and the polymerization time was changed to 3.5 hours, and 16.1 g of a polymer (hereinafter, referred to as a "block polymer (A2-23)") was obtained. Table 10 summarizes the results of composition analysis of the polymer determined by $^1$H-NMR.

[Production Example 26]

Synthesis of Halogenated Polypropylene

Into a glass reactor was charged a propylene/10-undecen-1-ol copolymer (the weight average molecular weight in terms of polypropylene, Mw=149,000, the number average molecular weight in terms of polypropylene, Mn=66,180, melting point: 153.8˚C, hydroxyl group content: 0.117 mmol/g) which had been produced in accordance with the method described in the Example of Japanese Patent Laid-Open Publication No. 2002-145944, and hexane was added to the reactor to prepare slurry by adjusting the polymer concentration at 100 g/L. To the slurry was added 2-bromoisobutyric acid bromide in an amount of 5-fold equivalent relative to the amount of the hydroxyl group present in the polymer and the resulting solution was heated with stirring at 60˚C for 3 hours. The reaction solution was cooled to 20˚C at a cooling rate of 20˚C/h and the polymer was filtered. The polymer was subjected to solid-liquid washing by adding the polymer in acetone, stirring for 10 minutes and filtering off the polymer again. The resulting white polymer was dried under a reduced pressure of 10 Torr at 50˚C for 10 hours. The measurement results of DSC showed that the polymer had a melting point of 153.1˚C and $^1$H-NMR analysis showed that the number of the terminal in which bromine derived from 2-bromoisobutyric acid bromide is introduced was 7.5 units per chain as the average introduction number. Table 10 summarizes the results of composition analysis of the polymer determined by $^1$H-NMR.

[Production Example 27]

Synthesis of Block Polymer

Into a sufficiently nitrogen-purged glass reactor having an internal volume of 500 mL were charged 15 g of the halogenated polypropylene obtained in the Production Example 26, 12.1 mL of n-butyl acrylate (nBuA), 5.0 mL of glycidyl

methacrylate (GMA) and 236 mL of toluene, and the air in the solution was replaced by nitrogen at 25˚C (30 L/hr, 0.5 hrs). The polymerization was performed at 80˚C for 4 hours by adding 73 mg of copper (I) bromide and 0.21 mL of PMDETA to the resultant slurry. The reaction solution was filtered and the resulting solid on the filter was washed with methanol and then dried under reduced pressure to obtain 19.0 g of a solid polymer (hereinafter, referred to as a "block polymer (A2-24)"). After taking out 3.00 g of the resulting polymer, Soxhlet extraction was performed using 150 mL of acetone under reflux for 9 hours. The extraction residue was dried under reduced pressure to obtain 2. 94 g of a polymer. Table 10 summarizes the results of composition analysis of the polymer determined by $^1$H-NMR.

[Production Example 28]

Synthesis of Block Polymer

Into a sufficiently nitrogen-purged glass reactor having an internal volume of 500 mL were charged 30 g of the halogenated polypropylene obtained in the Production Example 8, 1.4 mL of styrene (St), 1.2 g of maleic anhydride (MAH) and 265 mL of toluene and the air in the solution was replaced by nitrogen at 25˚C (30 L/hr, 0.5 hrs). The polymerization was performed at 80˚C for 4 hours by adding 143 mg of cyclopentadienylcarbonyl iron (II) dimer to the resultant slurry. The reaction solution was filtered and the resulting solid on the filter was washed with methanol and then dried under reduced pressure to obtain 31.9 g of a solid polymer (hereinafter, referred to as a "block polymer (A2-26) ") . After taking out 3.00 g of the resulting polymer, Soxhlet extraction was performed using 150 mL of acetone under reflux for 9 hours. The extraction residue was dried under reduced pressure to obtain 2.97 g of a polymer. Table 10 summarizes the results of composition analysis of the polymer determined by $^1$H-NMR.

[Production Example 29]

Synthesis of Block Polymer

The epoxy styrene (m, p mixture) used in the following Examples was synthesized by the method described in Polymer 40 (9), 2411 (1999).

The halogenated polypropylene obtained in the Production Example 8, n-butyl acrylate, epoxy styrene (m, p mixture) and acetone at a concentration of 60.0 g/L, 495 mL/L, 210 mL/L and 295ml/L, respectively, were charged into a four-necked flask equipped with a condenser and the mixture was subj ected to nitrogen bubbling for 30 minutes. Thereafter, a separately prepared toluene solution of 0.8 mol/L of PMDETA and copper (I) bromide was added to the resulting mixture to make the concentration at 25 mL/L, and the reaction was performed at 55˚C for 8 hours. A solid obtained by filtering the reaction solution was washed with acetone several times and dried under reduced pressure at 60˚C to obtained a desired epoxy group-containing block polymer (hereinafter, referred to as a "block polymer (A2-25)"). Table 10 summarizes the results of composition analysis of the resulting block polymer determined by $^1$H-NMR.

[Table 10]

| | | | Production Example 9 | Production Example 17 | Production Example 12 | Production Example 18 | Production Example 19 | Production Example 20 | Production Example 21 |
|---|---|---|---|---|---|---|---|---|---|
| Identification Symbol of Block Polymer | | | A2-7 | A2-15 | A2-10 | A2-16 | A2-17 | A2-18 | A2-19 |
| Raw Material: Halogenated PP | Weight Average Molecular Weight (Mw) | - | 82,800 | 82,800 | 106,000 | 106,000 | 106,000 | 106,000 | 101,000 |
| | Number Average Molecular Weight (Mn) | - | 41,300 | 41,300 | 56,400 | 56,400 | 56,400 | 56,400 | 41,000 |
| | Av. Halogen Introduction Number | Unit/ Chain | 1.3 | 1.3 | 1.9 | 1.9 | 1.9 | 1.9 | 2.9 |
| $[S_1]$ Composition | Polyolefin Segment | Wt % | 45.4 | 50.6 | 56.7 | 58.2 | 89.7 | 44.7 | 61.0 |
| $[S_2]$ Composition | St | Wt % | 54.6 | 30.6 | 0 | 0 | 0 | 0 | 0 |
| | MMA | Wt % | 0 | 18.8 | 0 | 0 | 0 | 0 | 0 |
| | nBuA | Wt % | 0 | 0 | 35.1 | 0 | 6.5 | 0 | 32.0 |
| | 2-EHA | Wt % | 0 | 0 | 0 | 34.9 | 0 | 0 | 0 |
| | AN | Wt % | 0 | 0 | 0 | 0 | 1.2 | 0 | 0 |
| | GMA | Wt % | 0 | 0 | 8.2 | 6.9 | 2.6 | 55.3 | 7.0 |
| | MAH | Wt % | 0 | 0 | 0 | 0 | 0 | 0 | 0 |
| | ESt | Wt % | 0 | 0 | 0 | 0 | 0 | 0 | 0 |
| $[S_2]$ Tg<br>$[S_2]$ Solubility Parameter | | °C<br>$(J/cm^3)^{1/2}$ | 98<br>18.7 | n.d.<br>18.9 | -32<br>18.4 | -38<br>18.4 | -18<br>19.2 | n.d.<br>18.6 | -33<br>18.4 |
| $[S_2]$ Molecular Weight (Mn) | | - | 37,100 | 30,100 | 22,700 | 21,300 | 3,400 | 36,700 | 9,000 |

| | | | Production Example 22 | Production Example 23 | Production Example 24 | Production Example 25 | Production Example 27 | Production Example 28 | Production Example 29 |
|---|---|---|---|---|---|---|---|---|---|
| Identification Symbol of Block Polymer | | | A2-20 | A2-21 | A2-22 | A2-23 | A2-24 | A2-26 | A2-25 |
| Raw Material: Halogenated PP | Weight Average Molecular Weight (Mw) | - | 106,000 | 106,000 | 106,000 | 106,000 | 151,000 | 106,000 | 106,000 |
| | Number Average Molecular Weight (Mn) | - | 56,400 | 56,400 | 56,400 | 56,400 | 67,000 | 56,400 | 56,400 |
| | Av. Halogen Introduction Number | Unit/ Chain | 1.9 | 1.9 | 1.9 | 1.9 | 7.5 | 1.9 | 1.9 |
| [$S_1$] Composition | Polyolefin Segment | Wt % | 75.2 | 88.2 | 86.4 | 93.1 | 78.8 | 87.3 | 94.0 |
| [$S_2$] Composition | St | Wt % | 0 | 0 | 0 | 4.8 | 0 | 0 | 3.1 |
| | MMA | Wt % | 0 | 0 | 9.6 | 0 | 0 | 0 | 0 |
| | nBuA | Wt % | 17.4 | 8.1 | 0 | 0 | 14.8 | 7.1 | 0 |
| | 2-EHA | Wt % | 0 | 0 | 0 | 0 | 0 | 0 | 0 |
| | AN | Wt % | 0 | 0 | 0 | 0 | 0 | 0 | 0 |
| | GMA | Wt % | 7.4 | 3.7 | 4.0 | 2.1 | 6.4 | 0 | 0 |
| | MAH | Wt % | 0 | 0 | 0 | 0 | 0 | 0 | 2.9 |
| | ESt | Wt % | 0 | 0 | 0 | 0 | 0 | 5.6 | 0 |
| [$S_2$] Tg<br>[$S_2$] Solubility Parameter | °C<br>$(J/cm^3)^{1/2}$ | | -20<br>18.6 | -21<br>18.6 | n.d.<br>19.1 | n.d.<br>18.8 | -22<br>18.6 | n.d.<br>18.6 | n.d.<br>20.2 |
| [$S_2$] Molecular Weight (Mn) | - | | 9,800 | 3,700 | 4,600 | 2,200 | 2,830 | 1,700 | 1,900 |

[Example 37]

[1] A mixture was prepared by premixing 50 parts by weight of the polyolefin (A1-5), 30 parts by weight of the polyolefin (A1-4) and 20 parts by weight of the block polymer (A2-7) obtained in Production Example 9 and subsequently melt-kneading the mixture at 200˚C using a twin-screw extruder, KZW-15G having a die diameter of 15 mm and a L/D ratio of 30, manufactured by Technovel Corporation. The melt-kneaded mixture was extruded in a strand form and then was cut into pellets. The pellets were dried under reduced pressure at 80˚C overnight to obtain a polymer composition of the polyolefin (A1-4) and the polyolefin (A1-5).

[2] A laminated structure composed of three layers in which the (L1) layer is a random polypropylene layer, the layer (L2) is a layer containing a block polymer and the layer (L3) is a polyethylene terephthalate was produced in the following way. Using an extrusion molding device in which three extruders are connected to one die, a random polypropylene (grade F227D; MFR=7 g/10 min, tensile elastic modulus: 950 MPa, nominal tensile strain at break: 200% or more) produced by Prime Polymer Co., Ltd., the polymer composition obtained in the above [1] and a polyethylene terephthalate (grade J135) by Mitsui Chemicals, Inc. were supplied to each extruder. Then, coextrusion-molding was performed to form a three-layer structure in which the random polypropylene (40 μm), the polymer composition (40 μm) and the polyethylene terephthalate (160 μm) were laminated in this order by the extrusion from the T die (a die diameter of 40 mm) of the extrusion molding device by setting the maximum temperature at the time of extrusion of 220˚C for the random polypropylene, 230˚C for the polymer composition and 280˚C for the polyethylene terephthalate.

For the laminated structure obtained in the above [2], the interlayer adhesion strength between the layer (L2) and the layer (L3) was measured under the conditions of a temperature of peeling atmosphere at 23˚C, a peeling rate of 500 mm/min and a peeling width of 10 mm by the T-type peeling test. The results are shown in Table 11. In addition, patterns in peeling are shown in Table 11.

"Resin shortage" means that the layer (L3) is destroyed and peeled off, "cohesive peeling" means that the layer (L2) is destroyed and peeled off, "rough peeling face" means that the layer (L2) remains on the layer (L3) in peeling and is peeled off, "no cohesion" means that no layer (L2) remains on the layer (L3) in peeling and is peeled off without developing adhesion strength and "invalid adhesion" means that peeling has occurred at the preparation stage of a sample before performing the peeling test.

[Examples 38 to 51]

In example 37, the T-type peeling test was carried out in the same manner as in Example 37 except that the testing conditions were changed to the conditions shown in Table 11. The results are shown in Table 11.

[Example 52]

[1] A mixture was prepared by premixing 68 parts by weight of the polyolefin (A1-5), 23 parts by weight of the polyolefin (A1-4) and 9 parts by weight of the block polymer (A2-25) obtained in Production Example 28 and subsequently melt-kneading the mixture at 200˚C using a twin-screw extruder, KZW-15G having a die diameter of 15 mm and a L/D ratio of 30, manufactured by Technovel Corporation. The melt-kneaded mixture was extruded in a strand form and then was cut into pellets. The pellets were dried under reduced pressure at 80˚C overnight to obtain a polymer composition of the polyolefin (A1-4) and the polyolefin (A1-5).

[2] A laminated structure composed of three layers in which the layer (L1) layer is a random polypropylene layer, the layer (L2) is a layer containing a block polymer and the layer (L3) is an ethylene-vinyl alcohol copolymer was produced in the following way. Using an extrusion molding device in which three extruders are connected to one die, a random polypropylene (grade F227D; MFR=7 g/10 min, tensile elastic modulus: 950 MPa, nominal tensile strain at break: 200% or more) produced by Prime Polymer Co., Ltd., the polymer composition obtained in the above

[1] and an ethylene-vinyl alcohol copolymer (trade name: Eval, grade: L101A) produced by KURARAY Co., Ltd. were supplied to each extruder. Then, coextrusion-molding was performed to form a three-layer structure in which the random polypropylene (40 μm), the polymer composition (40 μm) and the ethylene-vinyl alcohol copolymer (160 μm) were laminated in this order by the extrusion from the T die (a die diameter of 40 mm) of the extrusion molding device by setting the maximum temperature at the time of extrusion of 220˚C for the random polypropylene and 230˚C for the polymer composition and 220˚C for the ethylene-vinyl alcohol copolymer.

For the laminated structure obtained in the above [2], the interlayer adhesion strength between the layer (L2) and the layer (L3) was measured under the conditions of a temperature of peeling atmosphere at 23˚C, a peeling rate of 500 mm/min and a peeling width of 10 mm by the T-type peeling test. The results are shown: in Table 11. In addition, patterns in peeling are shown in Table 11.

[Example 53]

[1] A mixture was prepared by premixing 68 parts by weight of the polyolefin (A1-5), 23 parts by weight of the polyolefin (A1-4) and 9 parts by weight of the block polymer (A2-21) obtained in Production Example 9 and subsequently melt-kneading the mixture at 200˚C using a twin-screw extruder, KZW-15G having a die diameter of 15 mm and a L/D ratio of 30, manufactured by Technovel Corporation. The melt-kneaded mixture was extruded in a strand form and then was cut into pellets. The pellets were dried under reduced pressure at 80˚C overnight to obtain a polymer composition of the polyolefin (A1-4) and the polyolefin (A1-5).

[2] A press sheet having a thickness of 100 μm, a length of 80 mm and a width of 10 mm was obtained by press molding a random polypropylene (Grade: F227D; MFR=7 g/10 min, tensile elastic modulus: 950 MPa, nominal tensile strain at break: 200% or more) produced by Prime Polymer Co., Ltd. and the polymer composition obtained in the above [1] at a temperature of 200˚C and a pressure of 100 kg-cm$^2$, and subsequently rapidly cooling the molded article by a press molding machine set at 20˚C, respectively. A laminated structure composed of three layers was produced by heat sealing the resulting press sheet for 10 seconds using a heat-sealing tester set at 220˚C, as a laminated structure in which the layer (L1) is a random polypropylene layer, the layer (L2) is a layer containing a block polymer and the layer (L3) is an aluminum sheet having a thickness of 100 μm.

For the laminated structure obtained in the above [2], the interlayer adhesion strength between the layer (L2) and the layer (L3) was measured under the conditions of a temperature of peeling atmosphere at 23˚C, a peeling rate of 500 mm/min and a peeling width of 10 mm by the T-type peeling test. The results are shown in Table 11. In addition, patterns in peeling are shown in Table 11.

[Example 54]

A laminated structure composed of three layers and containing an aluminum sheet as the layer (L3), was produced in the same manner as in Example 52 except for using the block polymer (A2-23) obtained in Production Example 25 as the block polymer (A2). For the resulting laminated structure, the interlayer adhesion strength between the layer (L2) and the layer (L3) was measured under the conditions of a temperature of peeling atmosphere at 23˚C, a peeling rate of 500 mm/min and a peeling width of 10 mm by the T-type peeling test. The results are shown in Table 11. In addition, patterns in peeling are shown in Table 11.

[Comparative Examples 27 and 28]

In example 37, the T-type peeling test was carried out in the same manner as in Example 37 except that the test conditions were changed to the conditions shown in Table 11. The results are shown in Table 11.
[Table 11]

| | Composition of Layer (L2) | | | | | | Peeling Strength | Peeling pattern |
|---|---|---|---|---|---|---|---|---|
| | Polyolefin (Wt%) | | | | Block Polymer (Wt%) | | (N) | |
| Example 37 | A1-5 | 50 | A1-4 | 30 | A2-7 | 20 | 2 | Cohesive Peeling |
| Example 38 | A1-5 | 50 | A1-4 | 30 | A2-15 | 20 | 2 | Cohesive Peeling |
| Example 39 | A1-5 | 50 | A1-4 | 30 | A2-10 | 20 | 8 | Cohesive Peeling |
| Example 40 | A1-5 | 50 | A1-4 | 30 | A2-16 | 20 | 12 | Cohesive Peeling |
| Example 41 | A1-5 | 50 | A1-4 | 30 | A2-17 | 20 | 6 | Cohesive Peeing |
| Example 42 | - | 0 | - | 0 | A2-10 | 100 | 13 | Cohesive Peeling |
| Example 43 | - | 0 | - | 0 | A2-16 | 100 | 13 | Cohesive Peeling |
| Example 44 | - | 0 | - | 0 | A2-19 | 100 | 12 | Cohesive Peeling |
| Example 45 | A1-5 | 68 | A1-4 | 23 | A2-18 | 9 | 8 | Cohesive Peeling |
| Example 46 | A1-5 | 68 | A1-4 | 23 | A2-20 | 9 | 6 | Cohesive Peeling |
| Example 47 | A1-5 | 68 | A1-4 | 23 | A2-21 | 9 | 11 | Cohesive Peeling |
| Example 48 | A1-5 | 68 | A1-4 | 23 | A2-22 | 9 | 5 | Cohesive Peeling |
| Example 49 | A1-5 | 68 | A1-4 | 23 | A2-23 | 9 | 35 | Resin Shortage |
| Example 50 | A1-5 | 68 | A1-4 | 23 | A2-24 | 9 | 35 | Resin Shortage |
| Example 51 | A1-5 | 68 | A1-4 | 23 | A2-25 | 9 | 35 | Resin Shortage |
| Example 52 | A1-5 | 68 | A1-4 | 23 | A2-26 | 9 | 2 | Rough peeling face |
| Example 53 | A1-5 | 68 | A1-4 | 23 | A2-21 | 9 | 14 | Cohesive Peeling |
| Example 54 | A1-5 | 68 | A1-4 | 23 | A2-23 | 9 | 18 | Cohesive Peeling |
| Comparative Example 27 | A1-5 | 50 | A1-4 | 30 | - | 0 | - | Invalid adhesion |
| Comparative Example 28 | A1-5 | 50 | A1-4 | 30 | P-1 | 20 | 0 | No cohesion |
| Polyolefin A1-5: A homopolypropylene, grade J106G (MFR=15, tensile elastic modulus: 1,500 MPa, nominal tensile strain at break: 100%), produced by Prime Polymer Co., Ltd.<br>Polyolefin A1-4: An ethylene-butene random polymer, grade Tafmer A0550 (MFR=1.0, density: 860 kg/$m^3$), produced by Mitsui Chemicals, Inc. | | | | | | | | |

**Claims**

**1.** A resin composition (C) comprising:

a polyolefin (A1); and
an olefinic block polymer (A2), the olefinic block polymer (A2) comprising a block (a) that is a polyolefin component and a block (b) that is a polymer unit composed of a vinyl monomer having a solubility parameter of 18 to 25 J/m as a constitutional unit, and the block (a) and the block (b) being bonded each other by a covalent bond.

**2.** The resin composition (C) according to claim 1 comprising 1 to 98.9% by weight of the polyolefin (A1),
0.1 to 50% by weight of the olefinic block polymer (A2), and
1 to 98.9 % by weight of one or more kinds of resins (B) selected from a polycarbonate resin (b1), an acrylic resin (b2), a vinyl polymer (b3) and a polyphenylene oxide (b4) (provided that the total amount of (A1), (A2) and (B) is 100% by weight).

3. The resin composition (C) according to claim 1 or 2, wherein
the content of the block (b) constituting the olefinic block polymer (A2) is 0.1 to 70% by weight in the (A2).

4. The resin composition (C) according to any one of claims 1 to 3, wherein
the block (b) constituting the olefinic block polymer (A2) comprises a chain comprising one or more kinds of constitutional units derived from a vinyl monomer selected from (meth)acrylic acid and a derivative thereof, (meth)acrylonitrile, styrene and a derivative thereof, (meth)acrylamide and a derivative thereof, maleic acid and a derivative thereof, maleimide and a derivative thereof and vinyl esters.

5. The resin composition (C) according to any one of claims 1 to 3, wherein
the block (b) constituting the olefinic block polymer (A2) is a unit of a polymer obtained by radical (co) polymerization of one or more kinds of vinyl monomers selected from styrene, acrylonitrile, 2-hydroxyethyl methacrylate, glycidyl methacrylate and methyl methacrylate.

6. The resin composition (C) according to any one of claims 1 to 5, wherein the block (b) constituting the olefinic block polymer (A2) has a number average molecular weight in a range of 2,000 to 200,000.

7. The resin composition (C) according to any one of claims 1 to 5, wherein the block (a) constituting the olefinic block polymer (A2) is a crystalline polyolefin unit having a melting point of 70˚C or higher.

8. The resin composition (C) according to any one of claims 1 to 7, wherein
the content of a component derived from the block (b) in a chloroform-insoluble component at room temperature of the resin composition is 0.1 to 70% by weight.

9. The resin composition (C) according to any one of claims 1 to 8, wherein
0. 5 to 5 units of the blocks (b) are bonded per one molecular chain of the block (a) in the olefinic block polymer (A2).

10. An adhesive comprising the resin composition (C) according to any one of claims 1 to 9.

11. A film or sheet comprising the resin composition (C) according to any one of claims 1 to 9.

12. A material for building and civil engineering comprising the resin composition (C) according to any one of claims 1 to 9.

13. An interior and exterior material in automobiles or a gasoline tank comprising the resin composition (C) according to any one of claims 1 to 9.

14. An electric and electronic component comprising the resin composition (C) according to any one of claims 1 to 9.

15. An aqueous emulsion containing the resin composition (C) according to any one of claims 1 to 9.

16. A solvent dispersant containing the resin composition (C) according to any one of claims 1 to 9.

17. A medical and hygienic material comprising the resin composition (C) according to any one of claims 1 to 9.

18. Daily sundry goods comprising the resin composition (C) according to any one of claims 1 to 9.

19. A laminated structure comprising at least one layer comprising the resin composition (C) according to any one of claims 1 to 9.

20. The laminated structure according to claim 19, wherein at least in part thereof a structure is formed, in which
a layer (L1) comprising an olefinic polymer as a main constituent,
a layer (L2) comprising the resin composition (C) according to any one of claims 1 to 9 and
a layer (L3) composed of at least one kind selected from a polar vinyl-based plastic, an aromatic vinyl-based polymer, polyester, polyamide, polycarbonate, an engineering plastic, a bio-based polymer, a thermoplastic elastomer, a natural or synthetic fiber and a metal are laminated in the order of the layer (L1)/layer (L2)/layer (L3).

21. The laminated structure according to claim 20, wherein the resin composition (C) comprises the polyolefin (A1) and the olefinic block polymer (A2).

**22.** The laminated structure according to claim 21, wherein the block (b) constituting the olefinic block polymer (A2) constituting the resin composition (C) has a glass transition temperature (Tg) of 25˚C or lower, as measured by differential scanning calorimetry (DSC).

**23.** The laminated structure according to claim 21 or 22, wherein the block (a) constituting the olefinic block polymer (A2) constituting the resin composition (C) is a crystalline polyolefin unit having an endothermic peak due to the melting point (Tm) measured by DSC of 50˚C or higher.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 9802472 A
- JP H0445532 B
- JP S6365116 B
- JP H10202799 B
- JP 2002131620 A
- WO 01053369 A
- WO 9630421 A
- WO 9718247 A
- WO 9801480 A
- WO 9840415 A
- WO 00156795 A
- JP HEI841117 B
- JP H09208616 B
- JP 2000264914 A
- JP 2001316410 A
- JP 2002080523 A
- JP 2004307872 A
- JP 2004131620 A
- JP 2002145944 A

### Non-patent literature cited in the description

- **A. ZAMBELLI.** *Macromolecules,* 1973, vol. 6, 925
- *Macromolecules,* 1975, vol. 8, 687
- **MATYJASZEWSKI et al.** *Chem. Rev.,* 2001, vol. 101, 2921
- **SAWAMOTO et al.** *Chem. Rev.,* 2001, vol. 101, 3689
- **MATYJ ASZEWSKI et al.** *Chem. Rev.,* 2001, vol. 101, 2921